(19) Europäisches Patentamt
European Patent Office
Office européen des brevets

(11) EP 4 455 250 A1

# (12) EUROPEAN PATENT APPLICATION

(43) Date of publication:
**30.10.2024 Bulletin 2024/44**

(21) Application number: **24170917.9**

(22) Date of filing: **18.04.2024**

(51) International Patent Classification (IPC):
***C09K 19/18*** *(2006.01)* ***B29C 64/124*** *(2017.01)*
***C09K 19/34*** *(2006.01)* ***C09K 19/04*** *(2006.01)*
***C09K 19/12*** *(2006.01)* ***C09K 19/16*** *(2006.01)*
***C09K 19/30*** *(2006.01)*

(52) Cooperative Patent Classification (CPC):
**C09K 19/18; B29C 64/124;** C09K 19/3491; C09K 2019/0448; C09K 2019/122; C09K 2019/123; C09K 2019/124; C09K 2019/161; C09K 2019/181; C09K 2019/183; C09K 2019/3016; C09K 2019/3025; C09K 2019/3063; C09K 2219/11

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.04.2023 EP 23168852**

(71) Applicant: **Merck Patent GmbH**
**64293 Darmstadt (DE)**

(72) Inventors:
- **Fritzsch, Carsten**
  **64293 Darmstadt (DE)**
- **Wittek, Michael**
  **64293 Darmstadt (DE)**
- **Maune, Holger**
  **64293 Darmstadt (DE)**
- **Jost, Matthias**
  **64293 Darmstadt (DE)**
- **Jakoby, Rolf**
  **64293 Darmstadt (DE)**

(74) Representative: **Merck Patent Association**
**Merck Patent GmbH**
**64271 Darmstadt (DE)**

## (54) METHOD FOR PRODUCING A HIGH-FREQUENCY DEVICE, USE OF A POLYMERIZABLE LIQUID CRYSTAL MEDIUM FOR PRODUCING A HIGHFREQUENCY DEVICE, AND HIGH-FREQUENCY DEVICE

(57) A method for producing a high-frequency device is disclosed. According to one embodiment, the method comprises at least the steps of
a) providing a polymerizable liquid crystal medium,
b) exposing a region of the polymerizable liquid crystal medium to electromagnetic radiation to form a polymerized region,
c) repeating step b) to produce a three-dimensional body, wherein the polymerizable liquid crystal medium comprises at least one mesogenic component.

Further, a use of a polymerizable liquid crystal medium for producing a high-frequency device and a high-frequency device are disclosed.

FIG 1

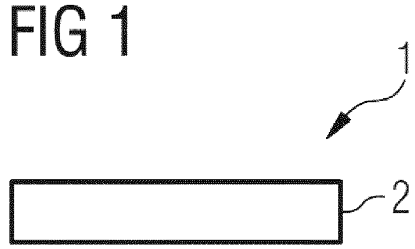


EP 4 455 250 A1

## Description

A method for producing a high-frequency device, a use of a polymerizable liquid crystal medium for producing a high-frequency device, and a high-frequency device are disclosed.

High Frequency (HF) signals can propagate either in free space or in waveguide devices. These waveguide devices are used to channel the HF signals or to manipulate them in the spatial or frequency domain. Conventional waveguide components are individually machined metal parts made from for example brass, copper, silver, or aluminum and which are fabricated by bending, welding, brazing, and soldering stock waveguide tubes onto flanges or by milling in a splitblock topology. They have relatively high raw material costs, are relatively heavy, and have a relatively long fabrication time resulting in high energy consumption. Therefore, waveguide components that are fabricated from metallized, molded thermoplastic have been proposed, for example in EP 0 569 015 A2. Therein, a microwave assembly is described having thermoplastic components that are first molded, and the molded parts are assembled into an enclosure, and then the assembled enclosure is electroless copper plated to provide a finished assembly.

The dimensions of a waveguide are determined by the frequency of the HF signal. In microwave technology, waveguides often are rectangular tubes with the width a and the height b. In order for free waves to propagate in the waveguide, the width should be half of the wavelength of the HF radiation, which is about 17 mm at 9 GHz. The height should be at least half of the width. Because of such large dimensions there is a need in the art for miniaturisation of components without deterioration of their properties. In DE 10 2019 122 612 A1 the problem is solved by use of a dielectrically filled waveguide antenna. The selected dielectric has the dielectric constant $\varepsilon r$. The minimum side dimensions of a waveguide for the propagation of a wave are proportional to $\lambda_0 / \sqrt{(\varepsilon r)}$, i.e., a high $\varepsilon r$ is desired. Polytetrafluoroethylene (PTFE, or Teflon®) is often used in microwave technology because of its low losses and its frequency-independent dielectric constant with $\varepsilon r = 2.1$. According to WO2019/221885, examples of materials that may be used as the dielectric waveguide material are liquid crystal polymer (LCP), low-temperature co-fired ceramic (LTCC), glass, polytetrafluoroethylene (PTFE), expanded PTFE (ePTFE), low-density PTFE (LD-PTFE), ethylene tetrafluoroethylene (ETFE), fluorinated ethylene propylene (FEP), polyethylene (PE), high-density (HD) PE, polyether ether ketone (PEEK), or perfluoroalkoxy alkanes (PFA). The waveguide may also comprise a dielectric wall forming a cavity filled with a different dielectric. If the cavities are filled with a dielectric fill material, such a material may also include any of the dielectric materials listed for the dielectric waveguide material (e.g., any of the solid plastic materials listed above, such as e.g., different variations of PTFE, PE, or PEEK), as long as the dielectric constant of a material selected for the dielectric fill of the cavities is higher than the dielectric constant of a material selected for the dielectric waveguide material. A fluid dielectric fill material for filling the cavities may be used e.g., when the cavities are formed as holes completely encompassed by the dielectric waveguide material.

According to DE 10 2019 122 612 A1, a preferred material for the fabrication of devices is LCP (liquid crystal polymer), because relatively large dielectric constants can be achieved.

A preferred method for the manufacture of such components is three-dimensional (3D) printing. A 3D printing method using liquid crystalline reactive mesogens (RM), i.e., monomeric polymerisable precursors for LC polymers, is described in US 6,117,385. The method described therein has the advantage that ordered parts are obtainable by stereolithography from non-ordered liquid crystal monomers. Liquid crystal monomers contain stiff, rod-like mesogenic segments which can be aligned by an external force such as shear, electric field or magnetic field, causing an anisotropy in properties. When cured in the aligned stated by photopolymerizing the aligned monomers the anisotropic structure is "locked in" resulting in materials with anisotropic physical and mechanical properties. The article "Three-dimensional printing of hierarchical liquid crystal-polymer structures" By: Gantenbein, Silvan; Masania, Kunal; Woigk, Wilhelm; Sesseg, Jens P. W.; Tervoort, Theo A.; Studart, Andre R. Nature (London, United Kingdom) (2018), 561(7722), 226-230, demonstrates the fabrication of complex geometries with superior properties by 3D printing of LCP.

In WO 2019/243575 A1, additive manufacturing is used for the fabrication of three-dimensional objects from thermotropic liquid crystal polymer.

3D printing of polymeric devices is useful for rapid prototyping to reduce cost. For example, US2017/0062895 is concerned with the development of devices for use in the millimeter wavelength range of the electromagnetic spectrum. It is desirable to fabricate waveguides in much smaller sizes and into more complicated, integrated structures. The downscaling of the waveguides challenges current fabrications techniques. Currently, high precision waveguides are being produced with micro-fabrication techniques, such as dip-brazing, electronic discharge machining, computerized numerically controlled machining, and stereo-lithography. All these techniques are complicated and require expensive equipment and even clean room, which results in high costs and long fabrication time. Computer aided design may be used for allowing the modeling of various types of microwave components, such as waveguide sections, directional couplers, horn antennas, and even more complicated waveguide elements such as waveguide filters. 3D modeling can enable the design of waveguides catering to specific applications and requirements that can be considerably difficult to build otherwise. In addition, three-dimensional printing of polymer precursors is a technique that cures material only where needed. Consequently, there is significantly less wasted material than in traditional manufacturing techniques.

There is no need to sand or cut pieces in order to build a design shape as in traditional manufacturing techniques.

While 3D printing methods enable the fabrication of low-cost passive HF components made from polymers, there is considerable and increasing interest in tunable microwave components especially for the use in smart antennas, i.e., antennas that can point their antenna beam in different directions without any mechanical moving parts. Such antennas are described in EP2575211 A1, or EP3513457 A1. For example, liquid crystal-based phase shifters are a key component for low-cost phased-array antennas, as described in for example EP 2 768 072 A1, in which a liquid crystal layer is used as a variable dieletric that can be reconfigured by an electric field.

In WO 2021/255161 A1, photo-curable compositions and processes are described to produce a 3D high-frequency dielectric material for use as an insulator in a circuit such as, for example, a high-performance RF component such as, for example, an antenna for electromagnetic transmission, a filter, a transmission line, or a high frequency interconnect, that achieve high frequency circuit structures having a very low dielectric loss at operating frequencies of 1-60 GHz.

In WO93/20993 a method for producing a three-dimensional object stereolithographically from a polymer precursor fluid, wherein the polymeric precursor fluid includes a liquid crystal is proposed. However, the method is silent about the fabrication of a tunable component suitable for high-frequency technology.

An object is to provide an efficient method for producing a high-frequency device. A further object is to provide a use of a polymerizable liquid crystal medium for efficiently producing a high-frequency device. A further object is to provide a high-frequency device with improved properties.

In particular, it is an object to provide a method for producing tunable high frequency components made from polymer comprising a liquid crystalline variable dielectric.

The problem is solved by the method according to claim 1.

Preferred embodiments are subject-matter of the dependent claims and can also be taken from the description.

The method according to the present invention is useful for the fabrication of tunable HF components having relatively small dimensions for rapid prototyping or low-cost mass production and has the advantage that a device can be obtained without the need of an additional filling step of liquid crystal.

As used herein, the term "polymer" will be understood to mean a molecule that encompasses a backbone of one or more distinct types of repeating units (the smallest constitutional unit of the molecule) and is inclusive of the commonly known terms "oligomer", "copolymer", "homopolymer" and the like. Further, it will be understood that the term polymer is inclusive of, in addition to the polymer itself, residues from initiators, catalysts, and other elements attendant to the synthesis of such a polymer, where such residues are understood as not being covalently incorporated thereto. Further, such residues and other elements, while normally removed during post polymerisation purification processes, are typically mixed or co-mingled with the polymer such that they generally remain with the polymer when it is transferred between vessels or between solvents or dispersion media.

The term "(meth)acrylic polymer" as used in the present invention includes a polymer obtained from acrylic monomers, a polymer obtainable from methacrylic monomers, and a corresponding co-polymer obtainable from mixtures of such monomers.

The term "polymerisation" means the chemical process to form a polymer by bonding together multiple polymerisable groups or polymer precursors (polymerisable compounds) containing such polymerisable groups.

The terms "film" and "layer" include rigid or flexible, self-supporting or freestanding films with mechanical stability, as well as coatings or layers on a supporting substrate or between two substrates.

The term "liquid crystal or mesogenic compound" means a compound comprising one or more calamitic (rod- or board/lath-shaped) or discotic (disk-shaped) mesogenic groups. The term "mesogenic group" means a group with the ability to induce liquid crystal (LC) phase behaviour. The compounds comprising mesogenic groups do not necessarily have to exhibit an LC phase themselves. It is also possible that they show LC phase behaviour only in mixtures with other compounds, or when the mesogenic compounds or materials, or the mixtures thereof, are polymerised. For the sake of simplicity, the term "liquid crystal" is used hereinafter for both mesogenic and LC materials. For an overview of definitions see C. Tschierske, G. Pelzl and S. Diele, Angew. Chem. 2004, 116, 6340-6368.

A calamitic mesogenic group is usually comprising a mesogenic core consisting of one or more aromatic or non-aromatic cyclic groups connected to each other directly or via linkage groups, optionally comprising terminal groups attached to the ends of the mesogenic core, and optionally comprising one or more lateral groups attached to the long side of the mesogenic core, wherein these terminal and lateral groups are usually selected e.g. from carbyl or hydrocarbyl groups, polar groups like halogen, nitro, hydroxy, etc., or polymerisable groups.

The term "reactive mesogen" (RM) means a polymerisable mesogenic or liquid crystal compound.

Polymerisable compounds with one polymerisable group are also referred to as "monoreactive" compounds, compounds with two polymerisable groups as "direactive" compounds, and compounds with more than two polymerisable groups as "multireactive" compounds. Compounds without a polymerisable group are also referred to as "nonreactive" compounds.

The term "non-mesogenic compound or material" means a compound or material that does not contain a

mesogenic group as defined above.

Visible light is electromagnetic radiation that has a wavelength in a range from about 400 nm to about 740 nm. Ultraviolet (UV) light is electromagnetic radiation with a wavelength in a range from about 200 nm to about 450 nm.

According to the present application, the term "linearly polarised light" means light, which is at least partially linearly polarized. Preferably, the aligning light is linearly polarized with a degree of polarization of more than 5:1. Wavelengths, intensity and energy of the linearly polarised light are chosen depending on the photosensitivity of the photoalignable material. Typically, the wavelengths are in the UV-A, UV-B and/or UV-C range or in the visible range. Preferably, the linearly polarised light comprises light of wavelengths less than 450 nm, more preferably less than 420 nm at the same time the linearly polarised light preferably comprises light of wavelengths longer than 280nm, preferably more than 320nm, more preferably over 350nm.

The Irradiance ($E_e$) or radiation power is defined as the power of electromagnetic radiation ($d\theta$) per unit area (dA) incident on a surface:

$$E_e = d\theta/dA.$$

The radiant exposure or radiation dose ($H_e$), is as the irradiance or radiation power ($E_e$) per time (t):

$$H_e = E_e \cdot t.$$

All temperatures, such as, for example, the melting point T(C,N) or T(C,S), the transition from the smectic (S) to the nematic (N) phase T(S,N) and the clearing point T(N,I) of the liquid crystals, are quoted in degrees Celsius. All temperature differences are quoted in differential degrees.

The term "clearing point" means the temperature at which the transition between the mesophase with the highest temperature range and the isotropic phase occurs.

On the molecular level, the birefringence of a liquid crystal depends on the anisotropy of the polarizability ($\Delta\alpha=\alpha_{\shortparallel}-\alpha\perp$). "Polarizability" means the ease with which the electron distribution in the atom or molecule can be distorted. The polarizability increases with greater number of electrons and a more diffuse electron cloud. The polarizability can be calculated using a method described in e.g. Jap. J. Appl. Phys. 42, (2003) p. 3463.

The "optical retardation" at a given wavelength $R(\lambda)$ (in nm) of a layer of liquid crystalline or birefringent material is defined as the product of birefringence at that wavelength $\Delta n(\lambda)$ and layer thickness d (in nm) according to the equation

$$R(\lambda) = \Delta n(\lambda) \cdot d$$

The optical retardation R represents the difference in the optical path lengths in nanometres travelled by S-polarised and P-polarised light whilst passing through the birefringent material. "On-axis" retardation means the retardation at normal incidence to the sample surface.

The birefringence $\Delta n$ is defined as follows

$$\Delta n = n_e - n_o$$

wherein $n_e$ is the extraordinary refractive index and $n_o$ is the ordinary refractive index, and the effective average refractive index $n_{av.}$ is given by the following equation:

$$n_{av.} = ((2n_o^2 + n_e^2)/3)^{1/2}$$

The average refractive index $n_{av.}$ and the ordinary refractive index $n_o$ can be measured using an Abbe refractometer. $\Delta n$ can then be calculated from the above equations.

A photoreactive group (also referred to as photoisomerisable group) according to the present invention is a functional group of a molecule that causes a change of the geometry of the molecule, i.e. isomerisation, either by bond rotation, skeletal rearrangement or atom- or group- transfer, or by dimerization, upon irradiation with light of a suitable wavelength that can be absorbed by the molecule (photoisomerisation).

A photoreactive compound (also referred to as photoisomerisable compound) according to the present invention

is a compound comprising one or more photoreactive groups (or photoisomerisable groups).

Examples of photoreactive groups are -C=C- double bonds and azo groups (-N=N-). Examples of molecular structures and sub-structures comprising such photoreactive groups are stilbene, (1,2-difluoro-2-phenyl-vinyl)-benzene, cinnamate, 4-phenylbut-3-en-2-one, chalcone, coumarin, chromone, pentalenone and azobenzene.

The term "director" is known in prior art and means the preferred orientation direction of the long molecular axes (in case of calamitic compounds) or short molecular axes (in case of discotic compounds) of the liquid-crystalline or RM molecules. In case of uniaxial ordering of such anisotropic molecules, the director is the axis of anisotropy.

All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise. The optical anisotropy ($\Delta n$) is determined at a wavelength of 589.3 nm.

In case of doubt the definitions as given in C. Tschierske, G. Pelzl and S. Diele, Angew. Chem. 2004, 116, 6340-6368 shall apply.

Unless explicitly stated otherwise in the given generic formulae, the following terms have the following meanings:

"Carbyl group" denotes a mono- or polyvalent organic group containing at least one carbon atom which either contains no further atoms (such as, for example, -C≡C-) or optionally contains one or more further atoms, such as, for example, N, O, S, P, Si, Se, As, Te or Ge (for example carbonyl, etc.).

"Hydrocarbyl group" denotes a carbyl group, which additionally contains one or more H atoms and optionally one or more heteroatoms, such as, for example, N, O, S, P, Si, Se, As, Te or Ge.

A carbyl or hydrocarbyl group can be a saturated or unsaturated group. Unsaturated groups are, for example, aryl, alkenyl, or alkynyl groups. A carbyl or hydrocarbyl group having more than 3 C atoms can be straight chain, branched and/or cyclic and may contain spiro links or condensed rings.

Preferred carbyl and hydrocarbyl groups are optionally substituted alkyl, alkenyl, alkinyl, alkoxy, alkylcarbonyl, alkoxycarbonyl, alkylcarbonyloxy and alkoxycarbonyloxy having 1 to 40, preferably 1 to 25, particularly preferably 1 to 18 C atoms, optionally substituted aryl or aryloxy having 6 to 40, preferably 6 to 25 C atoms, or optionally substituted alkylaryl, arylalkyl, alkylaryloxy, arylalkyloxy, arylcarbonyl, aryloxycarbonyl, arylcarbonyloxy and aryloxycarbonyloxy having 6 to 40, preferably 6 to 25 C atoms.

Further preferred carbyl and hydrocarbyl groups are $C_1$-$C_{40}$ alkyl, $C_2$-$C_{40}$ alkenyl, $C_2$-$C_{40}$ alkinyl, $C_3$-$C_{40}$ allyl, $C_4$-$C_{40}$ alkyldienyl, $C_4$-$C_{40}$ polyenyl, $C_6$-$C_{40}$ aryl, $C_6$-$C_{40}$ alkylaryl, $C_6$-$C_{40}$ arylalkyl, $C_6$-$C_{40}$ alkylaryloxy, $C_6$-$C_{40}$ arylalkyloxy, $C_2$-$C_{40}$ heteroaryl, $C_4$-$C_{40}$ cycloalkyl, $C_4$-$C_{40}$ cycloalkenyl, etc. Preference is given to $C_1$-$C_{22}$ alkyl, $C_2$-$C_{22}$ alkenyl, $C_2$-$C_{22}$ alkinyl, $C_3$-$C_{22}$ allyl, $C_4$-$C_{22}$ alkyldienyl, $C_6$-$C_{12}$ aryl, $C_6$-$C_{20}$ arylalkyl, and $C_2$-$C_{20}$ heteroaryl.

Further preferred carbyl and hydrocarbyl groups are straight-chain, branched or cyclic alkyl radicals having 1 to 40, preferably 1 to 25 C atoms, more preferably 1 to 12 C atoms, which are unsubstituted or mono- or polysubstituted by F, C!, Br, I or CN and in which one or more non-adjacent $CH_2$ groups may each be replaced, independently of one another, by -C($R^x$)=C($R^x$)-, -C≡C-, -N($R^x$)-, -O-, -S-, -CO-, -CO-O-, -O-CO-, -O-CO-O- in such a way that O and/or S atoms are not linked directly to one another.

Above, $R^x$ preferably denotes H, halogen, a straight-chain, branched or cyclic alkyl chain having 1 to 25 C atoms, in which, in addition, one or more non-adjacent C atoms may be replaced by -O-, -S-, -CO-, -CO-O-, -O-CO-, -O-CO-O-, and in which one or more H atoms may be replaced by fluorine, an optionally substituted aryl or aryloxy group having 6 to 40 C atoms or an optionally substituted heteroaryl or heteroaryloxy group having 2 to 40 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, n-hexyl, 2-ethylhexyl, n-heptyl, n-octyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl, etc.

Preferred alkinyl groups are, for example, ethynyl, propynyl, butynyl, pentynyl, hexynyl, octynyl, etc.

Preferred alkoxy groups are, for example, methoxy, ethoxy, 2-methoxyethoxy, n-propoxy, i-propoxy, n-butoxy, i-butoxy, s-butoxy, t-butoxy, 2-methylbutoxy, n-pentoxy, n-hexoxy, n-heptyloxy, n-octyloxy, n-nonyloxy, n-decyloxy, n-undecyloxy, n-dodecyloxy, etc.

Preferred amino groups are, for example, dimethylamino, methylamino, methylphenylamino, phenylamino, etc.

Aryl and heteroaryl groups can be monocyclic or polycyclic, i.e. they can have one ring (such as, for example, phenyl) or two or more rings, which may also be fused (such as, for example, naphthyl) or covalently linked (such as, for example, biphenyl), or contain a combination of fused and linked rings. Heteroaryl groups contain one or more heteroatoms, preferably selected from O, N, S and Se.

Preference is given to mono-, bi-, or tricyclic aryl groups having 6 to 25 C atoms and mono-, bi- or tricyclic heteroaryl groups having 2 to 25 C atoms, which optionally contain fused rings, and which are optionally substituted. Preference is furthermore given to 5-, 6- or 7-membered aryl and heteroaryl groups, in which, in addition, one or more

CH groups may be replaced by N, S or O in such a way that O atoms and/or S atoms are not linked directly to one another.

Preferred aryl groups are, for example, phenyl, biphenyl, terphenyl, [1,1':3',1"]terphenyl-2'-yl, naphthyl, anthracene, binaphthyl, phenanthrene, pyrene, dihydropyrene, chrysene, perylene, tetracene, pentacene, benzopyrene, fluorene, indene, indenofluorene, spirobifluorene, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]-thiophene, dithienothiophene, isobenzothiophene, dibenzothiophene, benzothia-diazothiophene, or combinations of these groups. The heteroaryl groups may also be substituted by alkyl, alkoxy, thioalkyl, fluorine, fluoroalkyl or further aryl or heteroaryl groups.

The (non-aromatic) alicyclic and heterocyclic groups encompass both saturated rings, i.e. those that contain exclusively single bonds, and partially unsaturated rings, i.e. those that may also contain multiple bonds. Heterocyclic rings contain one or more heteroatoms, preferably selected from Si, O, N, S and Se.

The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Preference is given to saturated groups. Preference is furthermore given to mono-, bi-, or tricyclic groups having 3 to 25 C atoms, which optionally contain fused rings and which are optionally substituted. Preference is furthermore given to 5-, 6-, 7- or 8-membered carbocyclic groups in which, in addition, one or more C atoms may be replaced by Si and/or one or more CH groups may be replaced by N and/or one or more non-adjacent $CH_2$ groups may be replaced by - O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]pentane-1,3-diyl, bicyclo[2.2.2]octane-1,4-diyl, spiro[3.3]heptane-2,6-diyl, octahydro-4,7-methanoindane-2,5-diyl.

The aryl, heteroaryl, (non-aromatic) alicyclic and heterocyclic groups optionally have one or more substituents, which are preferably selected from the group comprising silyl, sulfo, sulfonyl, formyl, amine, imine, nitrile, mercapto, nitro, halogen, $C_1$-$C_{12}$ alkyl, $C_6$-$C_{12}$ aryl, $C_1$-$C_{12}$ alkoxy, hydroxyl, or combinations of these groups.

Preferred substituents are, for example, solubility-promoting groups, such as alkyl or alkoxy, electron-withdrawing groups, such as fluorine, nitro or nitrile, or substituents for increasing the glass transition temperature (Tg) in the polymer, in particular bulky groups, such as, for example, t-butyl or optionally substituted aryl groups.

Preferred substituents, also referred to as "L" below, are, for example, F, Cl, Br, I, -OH, -CN, $-NO_2$, -NCO, -NCS, -OCN, -SCN, $-C(=O)N(R^x)_2$, $-C(=O)Y^x$, $-C(=O)R^x$, $-C(=O)OR^x$, $-N(R^x)_2$, in which $R^x$ has the above-mentioned meaning, and above $Y^x$ denotes halogen, optionally substituted silyl, optionally substituted aryl or heteroaryl having 4 to 40, preferably 4 to 20 ring atoms, and straight-chain or branched alkyl, alkenyl, alkinyl, alkoxy, alkylcarbonyl, alkoxycarbonyl, alkylcarbonyloxy or alkoxycarbonyloxy having 1 to 25 C atoms, in which one or more H atoms may optionally be replaced by F or Cl.

"Substituted silyl or aryl" preferably means substituted by halogen, -CN, $R^y$, $-OR^y$, $-COR^y$, $-CO-O-R^y$, $-O-CO-R^y$ or $-O-CO-O-R^y$, in which $R^y$ denotes H, a straight-chain, branched or cyclic alkyl chain having 1 to 12 C atoms.

In the formula shown above and below, a substituted phenylene ring

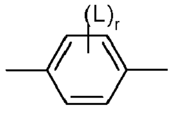

is preferably

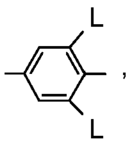, 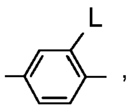, 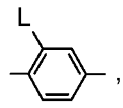,

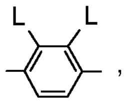, 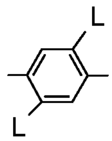

or

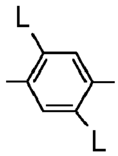,

in which L has, on each occurrence identically or differently, one of the meanings given above and below, and is preferably F, Cl, CN, $NO_2$, $CH_3$, $C_2H_5$, $C(CH_3)_3$, $CH(CH_3)_2$, $CH_2CH(CH_3)C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$ or P-Sp-, very preferably F, Cl, CN, $CH_3$, $C_2H_5$, $OCH_3$, $COCH_3$, $OCF_3$ or P-Sp-, most preferably F, Cl, $CH_3$, $OCH_3$, $COCH_3$ or $OCF_3$.

"Halogen" denotes F, Cl, Br or I, preferably F or Cl, more preferably F.

"Polymerisable groups" (P) are preferably selected from groups containing a C=C double bond or C≡C triple bond, and groups which are suitable for polymerisation with ring opening, such as, for example, oxetane or epoxide groups.

Preferably, polymerisable groups (P) are selected from the group consisting of $CH_2=CW^1-COO-$, $CH_2=CW^1-CO-$,

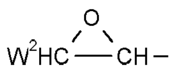, 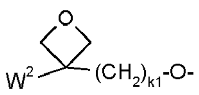, 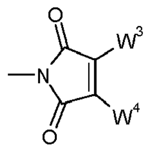,

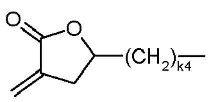,

$CH_2=CW^2-(O)_{k3}-$, $CW^1=CH-CO-(O)_{k3}-$, $CW^1=CH-CO-NH-$, $CH_2=CW^1-CO-NH-$, $CH_3-CH=CH-O-$, $(CH_2=CH)_2CH-OCO-$, $(CH_2=CH-CH_2)_2CH-OCO-$, $(CH_2=CH)_2CH-O-$, $(CH_2=CH-CH_2)_2N-$, $(CH_2=CH-CH_2)_2N-CO-$, $CH_2=CW^1-CO-NH-$, $CH_2=CH-(COO)_{k1}-Phe-(O)_{k2}-$, $CH_2=CH-(CO)_{k1}-Phe-(O)_{k2}-$, Phe-CH=CH-, in which

$W^1$ denotes H, F, Cl, CN, $CF_3$, phenyl or alkyl having 1 to 5 C atoms, in particular H, F, Cl or $CH_3$,

$W^2$ denotes H or alkyl having 1 to 5 C atoms, in particular H, methyl, ethyl, or n-propyl,

$W^3$ and $W^4$ each, independently of one another, denote H, Cl or alkyl having 1 to 5 C atoms, Phe denotes 1,4-phenylene, which is optionally substituted by one or more radicals L as being defined above but being different from P-Sp, preferably preferred substituents L are F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, furthermore phenyl, and

$k_1$, $k_2$ and $k_3$ each, independently of one another, denote 0 or 1, $k_3$ preferably denotes 1, and $k_4$ is an integer from 1 to 10.

Particularly preferred polymerisable groups P are $CH_2$=CH-COO-, $CH_2$=C($CH_3$)-COO-, $CH_2$=CF-COO-, $CH_2$=CH-, $CH_2$=CH-O-, ($CH_2$=CH)$_2$CH-OCO-, ($CH_2$=CH)$_2$CH-O-,

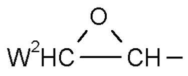 and 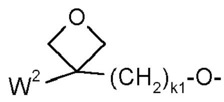 ,

in which $W^2$ denotes H or alkyl having 1 to 5 C atoms, in particular H, methyl, ethyl or n-propyl,

Further preferred polymerisable groups (P) are vinyloxy, acrylate, methacrylate, fluoroacrylate, chloroacrylate, oxetane and epoxide, most preferably acrylate or methacrylate, in particular acrylate.

Preferably, all multireactive polymerisable compounds and sub-formulae thereof contain instead of one or more radicals P-Sp-, one or more branched radicals containing two or more polymerisable groups P (multireactive polymerisable radicals).

Suitable radicals of this type, and polymerisable compounds containing them, are described, for example, in US 7,060,200 B1 or US 2006/0172090 A1.

Preference is given to multireactive polymerisable radicals selected from the following formulae:

$-X\text{-alkyl-}CHP^x\text{-}CH_2\text{-}CH_2P^y$ I*a

$-X\text{-alkyl-}C(CH_2P^x)(CH_2P^y)\text{-}CH_2P^z$ I*b

$-X\text{-alkyl-}CHP^xCHP^y\text{-}CH_2P^z$ I*c

$-X\text{-alkyl-}C(CH_2P^x)(CH_2P^y)\text{-}C_{aa}H_{2aa+1}$ I*d

$-X\text{-alkyl-}CHP^x\text{-}CH_2P^y$ I*e

$-X\text{-alkyl-}CHP^xP^y$ I*f

$-X\text{-alkyl-}CP^xP^y\text{-}C_{aa}H_{2aa+1}$ I*g

$-X\text{-alkyl-}C(CH_2P^v)(CH_2P^w)\text{-}CH_2OCH_2\text{-}C(CH_2P^x)(CH_2Py)CH_2P^z$ I*h

$-X\text{-alkyl-}CH((CH_2)_{aa}P^x)((CH_2)_{bb}P^y)$ I*i

$-X\text{-alkyl-}CHP^xCHP^y\text{-}C_{aa}H_{2aa+1}$ I*k

in which

alkyl denotes a single bond or straight-chain or branched alkylene having 1 to 12 C atoms, in which one or more non-adjacent $CH_2$ groups may each be replaced, independently of one another, by -C($R^x$)=C($R^x$)-, -C≡C-, -N($R^x$)-, -O-, -S-, -CO-, -CO-O-, -O-CO-, -O-CO-O- in such a way that O and/or S atoms are not linked directly to one another, and in which, in addition, one or more H atoms may be replaced by F, Cl or CN, where $R^x$ has one the above-mentioned meaning,

aa and bb each, independently of one another, denote 0, 1, 2, 3, 4, 5 or 6,

X has one of the meanings indicated for X', and

$P^v$ to $P^z$ each, independently of one another, have one of the meanings indicated above for P.

Preferred spacer groups Sp are selected from the formula Sp'-X', so that the radical "P-Sp-" conforms to the formula "P-Sp'-X'-", where

Sp' denotes alkylene having 1 to 20, preferably 1 to 12 C atoms, which is optionally mono- or polysubstituted by F, C!, Br, I or CN and in which, in addition, one or more non-adjacent $CH_2$ groups may each be replaced, independently of one another, by -O-, -S-, - NH-, -$NR^{xx}$-, -$SiR^{xx}R^{yy}$-, -CO-, -COO-, -OCO-, -OCO-O-, -S-CO-, -CO-S-, -$NR^{xx}$-CO-O-, - O-CO-$NR^{xx}$-, -$NR^{xx}$-CO-$NR^{yy}$-, -CH=CH- or -C≡C- in such a way that O and/or S atoms are not linked directly to one another,

X' denotes -O-, -S-, -CO-, -COO-, -OCO-, -O-COO-, -CO-$NR^{xx}$-, -$NR^{xx}$-CO-, -$NR^{xx}$-CO-$NR^{yy}$-, -$OCH_2$-, -$CH_2O$-, -$SCH_2$-, -$CH_2S$-, -$CF_2O$-, -$OCF_2$-, -$CF_2S$-, -$SCF_2$-, -$CF_2CH_2$-, -$CH_2CF_2$-, -$CF_2CF_2$-, -CH=N-, -N=CH-, -N=N-, -CH=$CR^{xx}$-, -$CY^{xx}$=$CY^{xx}$-, -C≡C-, -CH=CH-COO-, -OCO-CH=CH- or a single bond,

$R^{xx}$ and $R^{yy}$ each, independently of one another, denote H or alkyl having 1 to 12 C atoms, and

$Y^{xx}$ and $Y^{yy}$ each, independently of one another, denote H, F, Cl or CN.

X' is preferably -O-, -S-, -CO-, -COO-, -OCO-, -O-COO-, -CO-$NR^{xx}$-, -$NR^{xx}$-CO-, -$NR^{xx}$-CO-$NR^{yy}$- or a single bond.

Typical spacer groups Sp' are, for example, -$(CH_2)_{p1}$-, -$(CH_2CH_2O)_{q1}$-$CH_2CH_2$-, -$CH_2CH_2$-S-$CH_2CH_2$-, -$CH_2CH_2$-NH-$CH_2CH_2$- or-$(SiR^{xx}R^{yy}$-$O)_{p1}$-, in which p1 is an integer from 1 to 12, q1 is an integer from 1 to 3, and $R^{xx}$ and $R^{yy}$ have the above-mentioned meanings.

Particularly preferred groups -X'-Sp'- are -$(CH_2)_{p1}$-, -O-$(CH_2)_{p1}$-, -OCO-$(CH_2)_{p1}$-, or -OCOO-$(CH_2)_{p1}$-, in which p1 is an integer from 1 to 12.

Particularly preferred groups Sp' are, for example, in each case straight-chain, methylene, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

For the present invention,

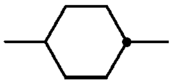 , 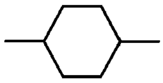 , 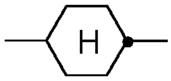 and 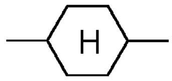

denote trans-1,4-cyclohexylene, and

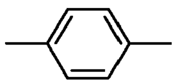 and 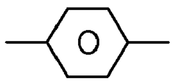

denote 1,4-phenylene.

For the present invention the groups -COO- -C(=O)O- or -$CO_2$- denote an ester group of the formula

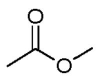 ,

and the groups -OCO-, -OC(=O)-, -$O_2C$- or -OOC- denote an ester group of formula

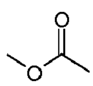 .

All concentrations are quoted in percent by weight (w/w) and relate to the respective mixture as a whole, all temperatures are quoted in degrees Celsius, and all temperature differences are quoted in differential degrees.

Unless the context clearly indicates otherwise, as used herein plural forms of the terms herein are to be construed as including the singular form and vice versa.

Throughout the description and claims of this specification, the words "comprise" and "contain" and variations of the words, for example "comprising" and "comprises", mean "including but not limited to", and are not intended to (and do not) exclude other components. On the other hand, the word "comprise" also encompasses the term "consisting of" but is not limited to it.

Throughout the description and claims of this specification, the words "obtainable" and "obtained" and variations

of the words, mean "including but not limited to", and are not intended to (and do not) exclude other components. On the other hand, the word "obtainable" also encompasses the term "obtained" but is not limited to it.

A method for producing a high-frequency device is specified. A high-frequency device is configured or designed for high-frequency applications. In particular, a high-frequency device can interact with, for example, absorb, transmit, emit, or guide electromagnetic waves with a high frequency. Here and in the following, high frequency is a term for a range of radiofrequency electromagnetic waves, in particular radio waves, having a frequency between and including 3 megahertz (MHz) and 300 gigahertz (GHz), for example between and including 1 GHz and 100 GHz.

According to at least one embodiment, the method comprises a step a) providing a polymerizable liquid crystal (LC) medium. The polymerizable LC medium can be a liquid or a solid such as a powder. It should be noted that the term "polymerizable LC medium" is not necessarily to be understood in such a way that a liquid crystal component present in the medium needs to be polymerizable. In other words, the polymerizable LC medium is a liquid crystal medium that is polymerizable and thus comprises a polymerizable component comprising monomers and/or oligomers.

According to at least one embodiment, the method comprises a step b) exposing a region of the polymerizable LC medium to electromagnetic radiation to form a polymerized region. By exposing a region of the polymerizable LC medium to electromagnetic radiation, a polymerization reaction is initiated in which the polymerizable component in the polymerizable LC medium is polymerized. In other words, the polymerizable component of the polymerizable LC medium is cross-linked together to form polymers in a photochemical process. In particular, the polymerization reaction is locally confined to the exposed region such that the polymerizable LC medium is only polymerized in the regions that are exposed to the electromagnetic radiation. In other words, the polymerizable LC medium is not polymerized in unexposed regions. The electromagnetic radiation can be provided via a laser having a laser beam. The dimensions of the exposed region can then be defined by the dimensions of the laser beam incident on the polymerizable LC medium both in a lateral extent and in a penetration depth. The length and width of the polymerized region can correspond to the lateral extent and the thickness of the polymerized region can correspond to the penetration depth. For example, the laser beam can be scanned over a surface of the polymerizable LC medium and in this instance expose a region greater than the lateral extent of the laser beam to electromagnetic radiation due to the movement of the laser beam over the surface of the polymerizable LC medium. For instance, a thin polymer layer having, for example, a thickness of at least 1 $\mu$m, is produced in the exposed region.

According to at least one embodiment, the method comprises a step c) repeating step b) to produce a three-dimensional body. A three-dimensional body can extend in three different dimensions such as height, length, and width. For example, the three-dimensional body is a three-dimensional solid object. In particular, the three-dimensional body is produced by an additive manufacturing process in which the three-dimensional body is formed in a layer-by-layer fashion. In this context, a layer is defined by a specific height that corresponds to the thickness of the polymerized regions produced in step b). For example, regions of a layer of the polymerizable LC medium are exposed to electromagnetic radiation to form polymerized regions and, subsequently, a new layer of the polymerizable LC medium is applied. This process is then repeated for each layer until the three-dimensional body is complete. In particular, the three-dimensional body is formed by the polymerized regions. In other words, the material of the three-dimensional body is a polymer formed from the polymerizable component of the polymerizable LC medium by polymerization.

According to at least one embodiment, the polymerizable LC medium comprises at least one mesogenic component. The at least one mesogenic component can be the polymerizable component or a non-polymerizable component of the polymerizable LC medium. If the at least one mesogenic component is the polymerizable component, the polymerizable LC medium can be free of further mesogenic components. If the at least one mesogenic component is a non-polymerizable component, the polymerizable LC medium further comprises a polymerizable component which can be a mesogenic component or a non-mesogenic component. In particular, the polymerizable LC medium can comprise at least two mesogenic components, for example a plurality of mesogenic components. The mesogenic components can all be polymerizable, or all be non-polymerizable, or at least one of the mesogenic components is polymerizable and at least one of the mesogenic components is non-polymerizable. For example, one mesogenic component is a polymerizable mesogenic component and the other mesogenic component is a non-polymerizable mesogenic component.

According to at least one embodiment, the method for producing a high-frequency device comprises at least the steps of

a) providing a polymerizable liquid crystal medium,
b) exposing a region of the polymerizable liquid crystal medium to electromagnetic radiation to form a polymerized region,
c) repeating step b) to produce a three-dimensional body,

wherein the polymerizable liquid crystal medium comprises at least one mesogenic component.

The central idea of the method is to simply and time-efficiently produce a high-frequency device. For example, the method is used for rapid prototyping of high-frequency devices. Further, the component size of devices used for

high-frequency applications is, due to the high frequencies, required to be smaller than for low-frequency applications. With the method described here, in particular when using a laser beam for exposing the polymerizable LC medium to electromagnetic radiation, high-frequency devices having the required component size can be produced precisely.

According to at least one embodiment, the polymerizable component of the polymerizable LC medium comprises at least one of a monoreactive component, a direactive component, and a multireactive component. In particular, the polymerizable component can contain a mixture of components having a different number of polymerizable groups. A higher number of polymerizable groups leads to a higher degree of cross-linking in the resulting polymer, whereas a lower number of polymerizable groups leads to a higher reaction rate. Thus, by selecting the reactivity of the components in the polymerizable component, the stability and/or the production rate of the three-dimensional body can be influenced.

According to at least one embodiment, the at least one mesogenic component comprises a polymerizable mesogenic component. In other words, the polymerizable LC medium comprises a polymerizable mesogenic component. The polymerizable mesogenic component can be a monoreactive mesogen, a direactive mesogen, a multireactive mesogen, or a mixture thereof. The polymerizable LC medium can comprise further polymerizable components. Alternatively, the polymerizable mesogenic component is the only polymerizable component of the polymerizable LC medium. In this instance, the mesogenic component forms the polymeric material of the three-dimensional body. A polymeric material formed from a polymerizable mesogenic component is advantageously a suitable dielectric material for high-frequency devices having a low dielectric loss. In particular, a polymeric material formed from the polymerizable mesogenic component is a suitable dielectric for filling spaces containing electric fields. Thus, a three-dimensional body produced from a polymerizable mesogenic component can advantageously be suited as a dielectric waveguide without metallic layers such as a rod antenna.

According to at least one embodiment, the polymerizable mesogenic component comprises at least one compound having the general formula $P^1$-$Sp^1$-MG-$Sp^2$-$P^2$ and/or at least one compound having the general formula $P^1$-$Sp^1$-MG-R, wherein $P^1$ and $P^2$ are polymerizable groups, $Sp^1$ and $Sp^2$ are spacer groups or a single bond, R is an organic radical, and MG is a mesogenic group. A compound having the general formula $P^1$-$Sp^1$-MG-$Sp^2$-$P^2$ is a direactive or multireactive mesogen. A compound having the general formula $P^1$-$Sp^1$-MG-R is a monoreactive mesogen. For example, the compound having the general formula $P^1$-$Sp^1$-MG-$Sp^2$-$P^2$ is

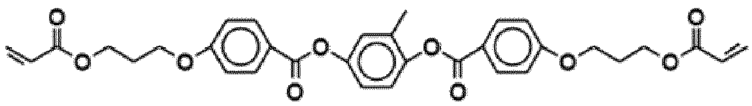

.

According to at least one embodiment, the polymerizable LC medium comprises a polymerizable non-mesogenic component. The polymerizable LC medium can comprise further polymerizable components. The further polymerizable components can be polymerizable non-mesogenic components or polymerizable mesogenic components. In particular, the polymerizable LC medium comprises only polymerizable non-mesogenic components. The polymerizable non-mesogenic component can comprise small organic molecules with polymerizable groups that are soluble in the polymerizable LC medium. In particular, the polymerizable non-mesogenic component is mobile in the polymerizable LC medium such that it can rapidly diffuse to the exposed regions where the polymerization reaction occurs. A polymerizable non-mesogenic component can thus simply and efficiently form polymer walls in the exposed regions.

According to at least one embodiment, the at least one mesogenic component comprises a non-polymerizable mesogenic component. In particular, the polymerizable LC medium comprises a plurality of non-polymerizable mesogenic components. Non-polymerizable mesogenic components are not polymerized by exposing the polymerizable LC medium to electromagnetic radiation. In other words, a non-polymerizable mesogenic component is not incorporated in the polymer formed from the polymerizable components during polymerization. In this context, "not incorporated in the polymer" means that the non-polymerizable mesogenic component does not form covalent bonds with the polymerizable components during polymerization. In other words, the non-polymerizable mesogenic component is not incorporated in the polymer by covalent bonding.

According to at least one embodiment, the non-polymerizable mesogenic component has a nematic phase at room temperature and a positive dielectric anisotropy. A mesogenic component in the nematic phase has liquid crystal properties.

According to at least one embodiment, producing the three-dimensional body by repeatedly exposing a region of the polymerizable LC medium to electromagnetic radiation comprises forming at least one cavity. Here and in the following, "cavity" means an unfilled space within a mass. In other words, a cavity is a space within a surrounding material that is at least partially surrounded by the surrounding material and free from the surrounding material. A cavity can be a recess in the surrounding material and/or an inclusion in the surrounding material. In particular, a cavity formed as an inclusion can be filled with a material at least partially, preferably completely, different from the surrounding material. In

other words, the at least one cavity is free of the material of the polymerized regions surrounding the at least one cavity, but the at least one cavity can contain a different material.

According to at least one embodiment the cavity is completely surrounded by the polymerized regions, and the at least one cavity contains the non-polymerizable mesogenic component. In particular, the at least one cavity is completely surrounded by the polymerized regions from all sides. In other words, the at least one cavity is formed as an inclusion in the three-dimensional body. For example, the at least one cavity is hermetically enclosed or sealed by the polymer of the three-dimensional body. In particular, the polymer of the three-dimensional body surrounding the at least one cavity is formed as a single piece. In other words, the three-dimensional body surrounding the cavity is a continuous polymer around the entirety of the cavity. For example, the polymeric material around the cavity is not composed of two or more parts. For example, the polymeric material around the cavity is free of openings, fractures, breaks, ruptures, discontinuities and/or interruptions, and, in particular, free of adhesive materials bridging or holding together openings, fractures, breaks, ruptures, discontinuities and/or interruptions.

For instance, the at least one cavity is formed in the three-dimensional body and filled with the non-polymerizable mesogenic component in situ. In this context, "in situ" means that during producing the three-dimensional body, the cavity is formed, filled, and enclosed without interrupting the production process. For this purpose, the polymerizable LC medium is polymerized in layers, wherein any excess material such as material that is not polymerized is not removed and is enclosed in the cavity. For example, the polymerizable LC medium can comprise a polymerizable component and the non-polymerizable mesogenic component. During polymerization, the polymerizable component is pulled out of the liquid phase and polymerizes in the regions exposed to electromagnetic radiation whereas the non-polymerizable mesogenic component remains in the liquid phase. Thus, the liquid non-polymerizable mesogenic component fills the cavity formed by the solid polymer of the three-dimensional body.

By producing a cavity in the three-dimensional body and filling the cavity with a mesogenic component, a tunable high-frequency device comprising cavities filled with tunable liquid crystal molecules can be produced. Here and in the following, "tunable" means that a property of the high-frequency device can be adjusted. For example, the orientation of the liquid crystal molecules in the cavity can be adjusted or tuned such that the liquid crystal molecules align in a distinct orientation. By switching between different distinct orientations of the liquid crystal molecules, the interaction of the tunable high-frequency device with high-frequency electromagnetic radiation can be adjusted. For example, one distinct orientation of the liquid crystal molecules shifts a phase of high-frequency radiation passing through the high-frequency device with respect to another distinct orientation of the liquid crystal molecules which is the initial reference in terms of phase of the high-frequency radiation.

The advantage of cavities realized with this method is that the cavities can be produced much smaller and more filigree than by subtractive manufacturing methods. Further, the liquid crystal molecules can be immediately sealed in the surrounding polymer and are ready for use without any separate filling processes and/or subsequent sealing processes.

According to at least one embodiment, the non-polymerizable mesogenic component fills the at least one cavity at least partially, for example, completely. In particular, a cavity required for a tunable high-frequency device is filled completely with the non-polymerizable mesogenic component. However, the polymeric material of the three-dimensional body can have a different coefficient of expansion than the liquid non-polymerizable mesogenic component. In particular, the liquid non-polymerizable mesogenic component can expand more under heat than the solid polymer. Thus, depending on the application, a compensation volume may be necessary, for example, extending sideways from the cavity. The compensation volume can be surrounded by the polymer of the three-dimensional body and formed as a single piece with the rest of the three-dimensional body. Alternatively or additionally, temperature expansion can be ensured by membranes.

According to at least one embodiment, producing the three-dimensional body by repeatedly exposing a region of the polymerizable LC medium to electromagnetic radiation comprises forming a plurality of cavities. A plurality of cavities comprises two cavities, three cavities, four cavities, five cavities or more cavities. At least one of the plurality of cavities, in particular each of the plurality of cavities, is surrounded by the polymerized regions. At least one of the plurality of cavities, in particular each of the plurality of cavities, is formed as an inclusion in the three-dimensional body and contains the non-polymerizable mesogenic component. By forming a three-dimensional body with a plurality of cavities containing a non-polymerizable mesogenic component, a tunable high-frequency device such as a phase shifter or an antenna array can be produced simply and time-efficiently.

According to at least one embodiment, the polymerizable LC medium comprises a polymerizable non-mesogenic component and a non-polymerizable mesogenic component. In particular, the polymerizable non-mesogenic component forms the polymer of the three-dimensional body and the non-polymerizable mesogenic component is confined in the at least one cavity in the three-dimensional body. Using a polymerizable non-mesogenic component and a non-polymerizable mesogenic component in the polymerizable LC medium has the advantage that the polymerizable non-mesogenic component can be particularly mobile in the polymerizable LC medium such that it can rapidly diffuse to the exposed regions where the polymerization reaction occurs. Thus, the three-dimensional body can be produced simply

and efficiently.

According to at least one embodiment, the polymerizable LC medium comprises a polymerizable mesogenic component and a non-polymerizable mesogenic component. In particular, the polymerizable mesogenic component forms the polymer of the three-dimensional body and the non-polymerizable mesogenic component is confined in the at least one cavity in the three-dimensional body.

Using a polymerizable mesogenic component and a non-polymerizable mesogenic component in the polymerizable LC medium leads to an improved solubility of the polymerizable component and the polymerizable LC medium advantageously remains in the liquid crystal phase.

According to at least one embodiment, the electromagnetic radiation comprises UV radiation for photopolymerizing the polymerizable LC medium. In particular, UV radiation causes the polymerizable component of the polymerizable LC medium to cross-link together to form a polymer. For example, UV radiation having a wavelength of a wavelength of 355 nm or 405 nm is used. For instance, a UV laser is used for generating UV radiation such as a carbon dioxide laser. The laser can be a pulsed laser.

According to at least one embodiment, the polymerizable LC medium is aligned before polymerization by use of a magnetic field or an electric field.

According to at least one embodiment, the three-dimensional body is formed via additive manufacturing. In particular, the three-dimensional body is formed via stereolithography or selective laser sintering. In both additive manufacturing techniques, the polymerizable LC medium is polymerized in thin layers by means of a laser. Stereolithography is an additive manufacturing technique that uses a photochemical process to cross-link a polymerizable component that is present in form of a liquid to form a polymer that forms a solid three-dimensional body. Selective laser sintering is an additive manufacturing technique that uses a laser as the power and heat source to sinter powdered material, thereby cross-linking the material together to form a polymer that forms a solid three-dimensional body.

With additive manufacturing techniques, a three-dimensional body can be produced that can be a solid block of polymer material or, alternatively, comprise recesses, gaps, holes, voids, cavities and/or inclusions. Further, the three-dimensional body can be produced in any shape or form that is required for suitable applications such as, but not limited to the shape or form of a cuboid, a rod, a cone, a wedge, combinations thereof, or complex structures like branched distribution networks. In addition, additive manufacturing techniques allow the realization of layer thicknesses down to 1 $\mu$m such that smaller and more filigree structures in the three-dimensional body can be realized than with subtractive manufacturing methods.

According to at least one embodiment, the polymerizable LC medium comprises a photoinitiator. A photoinitiator is a chemical compound that creates reactive species such as free radicals, cations, or anions when exposed to electromagnetic radiation. The reactive species of the photoinitiator can initiate a reaction in the polymerizable LC medium such as a polymerization reaction. The presence of the photoinitiator in the polymerizable LC medium initiates and accelerates the formation of polymerized regions in the regions exposed to electromagnetic radiation.

According to at least one embodiment, the method further comprises the step of removing excess components of the polymerizable LC medium. Preferably, this method step is performed after method step c). Excess components of the polymerizable LC medium are, in particular, components that are not polymerized as well as components that are not confined in cavities in the three-dimensional body. For example, excess components are removed from recesses in the three-dimensional body, but not from inclusions.

According to at least one embodiment, the method further comprises the step of forming a conductive layer on at least one surface of the three-dimensional body. The method step of forming a conductive layer on at least one surface of the three-dimensional body can be repeated in order to form multiple conductive layers on the same or on different surfaces of the three-dimensional body. In particular, the conductive layers are formed during or after producing the three-dimensional body. For example, a multi-layer high-frequency device can be produced comprising a plurality of conductive layers arranged on and/or between surfaces of the three-dimensional body.

In particular, the conductive layer can be printed on the three-dimensional body or applied manually. A conductive layer on the three-dimensional body can function as a metallization or as an electrode. The conductive layer can be in direct mechanical contact to the three-dimensional body, for example, in form of a coating on a surface of the three-dimensional body. For instance, two surfaces on opposite sides of the three-dimensional body comprise a conductive layer such that the conductive layers can function as a pair of electrodes. Alternatively, two conductive layers can be formed on the same surface next to each other in a side-by-side arrangement such that the conductive layers can function as a pair of electrodes.

For example, all accessible surfaces of the three-dimensional body are coated with the conductive layer such that the entire surface of the three-dimensional body is metallized.

Alternatively, the conductive layer can be arranged parallel to the three-dimensional body. In this instance, a main extension plane of the conductive layer is parallel to the three-dimensional body. The main extension plane of the conductive layer and the three-dimensional body can be spaced apart with a side surface of the conductive layer perpendicular to the main extension plane of the conductive layer being in direct contact to a surface of the three-dimensional body. In other words, the conductive layer can be anchored on the three-dimensional body with a side surface of the conductive layer. In this instance, the conductive layer can function as an electrode.

Alternatively, or additionally, the conductive layer can be kept at a constant distance from the three-dimensional body with narrow polymerized bars. The narrow polymerized bars do not significantly affect the high frequency wave. Such an arrangement of the conductive layer is important when using so-called sub-wavelength lines since evanescent fields travel outside the dielectric waveguide in air and must not come into contact with conductive layers.

According to at least one embodiment, the conductive layer comprises or consists of a metal, a transparent metal oxide, or a combination thereof. For example, the metal is selected from copper or silver. For example, the transparent metal oxide is indium tin oxide.

The polymerisable LC medium according to the present invention preferably comprises

- a nematic RM host mixture, comprising one or more di- or multireactive mesogenic compounds, and optionally one or more monoreactive mesogenic compounds, and
- optionally a photoinitiator.

In preferred embodiment, the polymerisable LC medium comprises one or more di- or multireactive RMs that are preferably selected of formula DRM

$$P^1\text{-}Sp^1\text{-}MG\text{-}Sp^2\text{-}P^2 \qquad \text{DRM}$$

wherein

$P^1$ and $P^2$ independently of each other denote a polymerisable group,

$Sp^1$ and $Sp^2$ independently of each other are a spacer group or a single bond, and

MG is a rod-shaped mesogenic group, which is preferably selected of formula MG

$$\text{-}(A^1\text{-}Z^1)_n\text{-}A^2\text{-} \qquad \text{MG}$$

wherein

$A^1$ and $A^2$ denote, in case of multiple occurrence independently of one another, an aromatic or alicyclic group, which optionally contains one or more heteroatoms selected from N, O and S, and is optionally mono- or polysubstituted by L,

L is P-Sp-, F, Cl, Br, I, -CN, $-NO_2$, -NCO, -NCS, -OCN, -SCN, $-C(=O)NR^xR^y$, $-C(=O)OR^x$, $-C(=O)R^x$, $-NR^xR^y$, -OH, $-SF_5$, optionally substituted silyl, aryl or heteroaryl with 1 to 12, preferably 1 to 6 C atoms, and straight chain or branched alkyl, alkoxy, alkylcarbonyl, alkoxycarbonyl, alkylcarbonyloxy or alkoxycarbonyloxy with 1 to 12, preferably 1 to 6 C atoms, wherein one or more H atoms are optionally replaced by F or Cl,

$R^x$ and $R^y$ independently of each other denote H or alkyl with 1 to 12 C-atoms,

$Z^1$ denotes, in case of multiple occurrence independently of one another, -O-, -S-, - CO-, -COO-, -OCO-, -S-CO-, -CO-S-, -O-COO-, $-CO-NR^x-$, $-NR^x-CO-$, $-NR^x-CO-NR^y$, - $NR^x-CO-O-$, $-O-CO-NR^x-$, $-OCH_2-$, $-CH_2O-$, $-SCH_2-$, $-CH_2S-$, $-CF_2O-$, $-OCF_2-$, $-CF_2S-$, - $SCF_2-$, $-CH_2CH_2-$, $-(CH_2)_{n1}$, $-CF_2CH_2-$, $-CH_2CF_2-$, $-CF_2CF_2-$, -CH=N-, -N=CH-, -N=N-, - $CH=CR^x-$, $-CY^1=CY^2-$, -C≡C-, -CH=CH-COO-, -OCO-CH=CH- or a single bond, preferably -COO-, -OCO- or a single bond,

$Y^1$ and $Y^2$ independently of each other denote H, F, Cl or CN,

n is 1, 2, 3 or 4, preferably 1 or 2, most preferably 2,

n1 is an integer from 1 to 10, preferably 1, 2, 3 or 4.

Preferred groups $A^1$ and $A^2$ include, without limitation, furan, pyrrol, thiophene, oxazole, thiazole, thiadiazole, imidazole, phenylene, cyclohexylene, bicyclooctylene, cyclohexenylene, pyridine, pyrimidine, pyrazine, azulene, indane, fluorene, naphthalene, tetrahydronaphthalene, anthracene, phenanthrene and dithienothiophene, all of which are unsubstituted or substituted by 1, 2, 3 or 4 groups L as defined above.

Particular preferred groups $A^1$ and $A^2$ are selected from 1,4-phenylene, pyridine-2,5-diyl, pyrimidine-2,5-diyl, thiophene-2,5-diyl, naphthalene-2,6-diyl, 1,2,3,4-tetrahydronaphthalene-2,6-diyl, indane-2,5-diyl, bicyclooctylene or 1,4-cyclohexylene wherein one or two non-adjacent $CH_2$ groups are optionally replaced by O and/or S, wherein these groups are unsubstituted or substituted by 1, 2, 3 or 4 groups L as defined above.

Preferred RMs of formula DRM are selected of formula DRMa

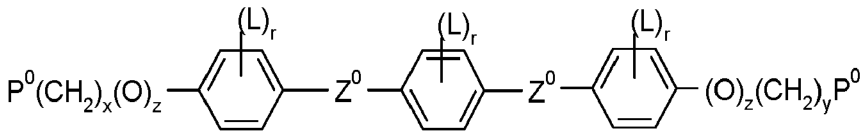

DRMa

wherein

P° is, in case of multiple occurrence independently of one another, a polymerisable group, preferably an acryl, methacryl, oxetane, epoxy, vinyl, heptadiene, vinyloxy, propenyl ether or styrene group,

Z° is -COO-, -OCO-, $-CH_2CH_2-$, $-CF_2O-$, $-OCF_2-$, -C≡C-, -CH=CH-,-OCO-CH=CH-, - CH=CH-COO-, or a single bond,

L has on each occurrence identically or differently one of the meanings given for $L^1$ in formula I, and is preferably, in case of multiple occurrence independently of one another, selected from F, Cl, CN or optionally halogenated alkyl, alkoxy, alkylcarbonyl, alkoxycarbonyl, alkylcarbonyloxy or alkoxycarbonyloxy with 1 to 5 C atoms,

r is 0, 1, 2, 3 or 4,

x and y are independently of each other 0 or identical or different integers from 1 to 12,

z is 0 or 1, with z being 0 if the adjacent x or y is 0.

Very preferred RMs of formula DRM are selected from the following formulae:

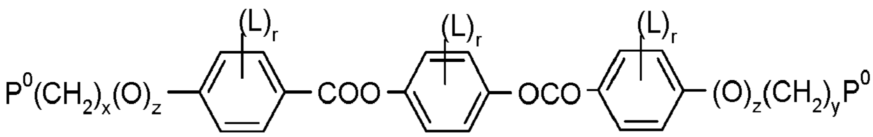

DRMa1

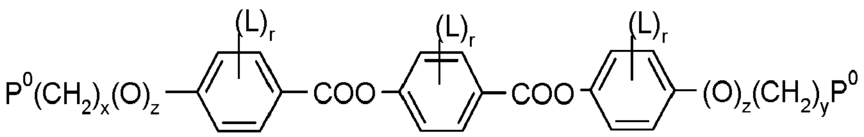

DRMa2

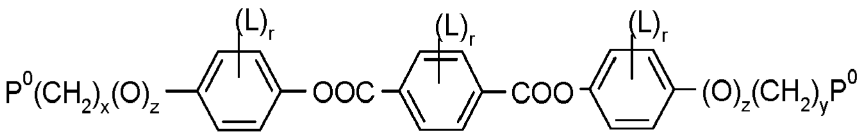

DRMa3

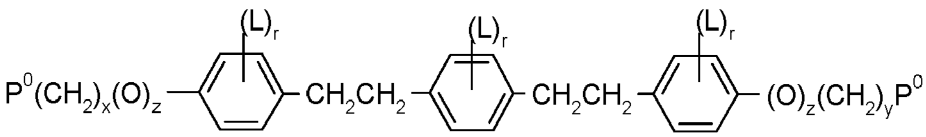

DRMa4

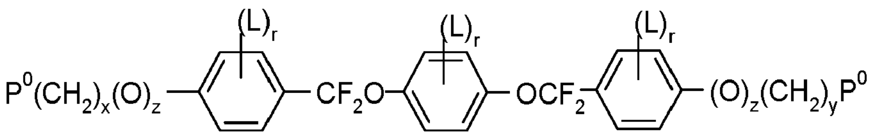

DRMa5

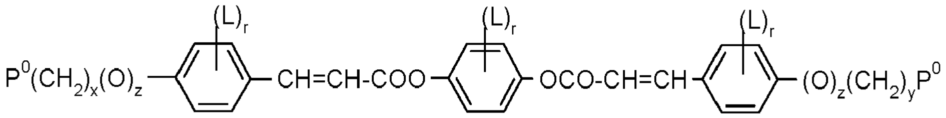

DRMa6

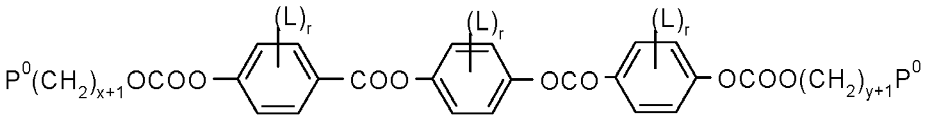

DRMa7

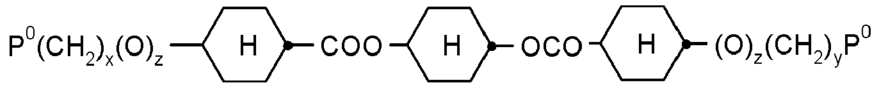

DRMb

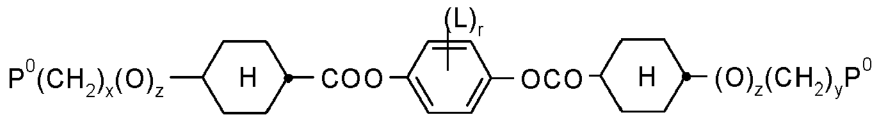

DRMc

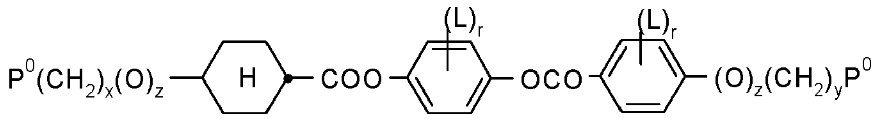

DRMd

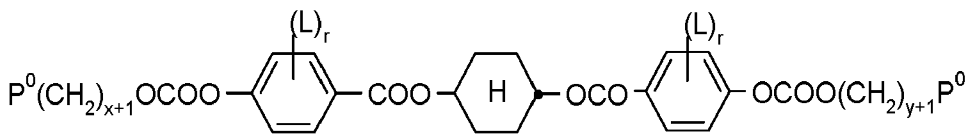

DRMe

wherein $P^0$, L, r, x, y and z are as defined in formula DRMa.

Especially preferred are compounds of formula DRMa1, DRMa2 and DRMa3, in particular those of formula DRMa1.

The concentration of di- or multireactive RMs, preferably those of formula DRM and its subformulae, in the RM mixture is preferably from 1% to 60 %, very preferably from 10 to 60%, more preferably 20 to 55%..

In preferred embodiment, the polymerisable LC medium comprises one or more monoreactive RMs additionally to the di- or multireactive RMs that are preferably selected of formula DRM

These additional monoreactive RMs are preferably selected from compounds of formula MRM:

$P^1$-$Sp^1$-MG-R MRM

wherein $P^1$, $Sp^1$ and MG have the meanings given in formula DRM,

R denotes P-Sp-, F, Cl, Br, I, -CN, $-NO_2$, -NCO, -NCS, -OCN, -SCN, $-C(=O)NR^xR^y$, - C(=O)X, $-C(=O)OR^x$, $-C(=O)R^y$, $-NR^xR^y$, -OH, $-SF_5$, optionally substituted silyl, straight chain or branched alkyl, alkoxy, alkylcarbonyl, alkoxycarbonyl, alkylcarbonyloxy or alkoxycarbonyloxy with 1 to 12, preferably 1 to 6 C atoms, wherein one or more H atoms are optionally replaced by F or Cl,

X is halogen, preferably F or Cl, and

$R^x$ and $R^y$ are independently of each other H or alkyl with 1 to 12 C-atoms.

Preferably the RMs of formula MRM are selected from the following formulae.

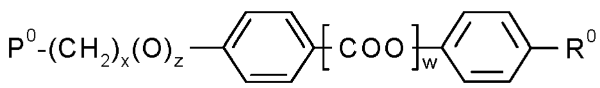

MRM1

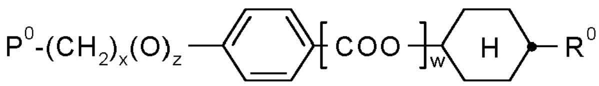

MRM2

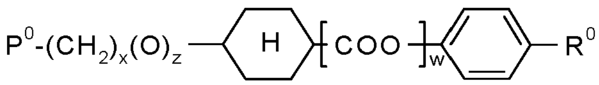

MRM3

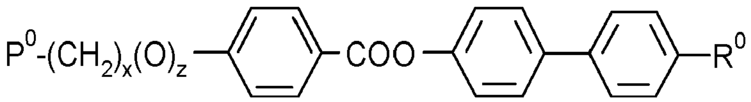

MRM4

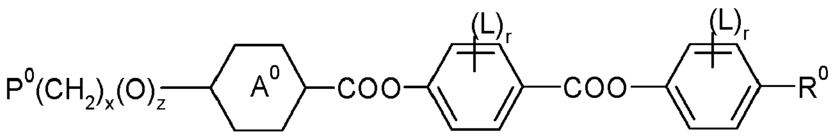

MRM5

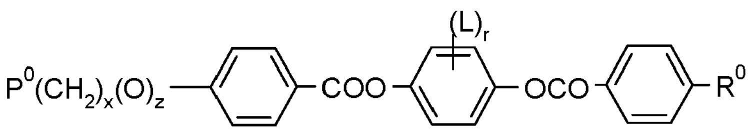

MRM6

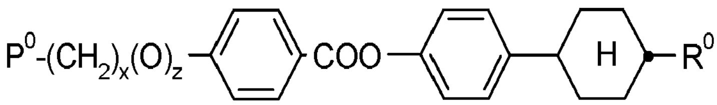

MRM7

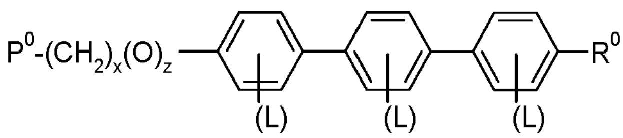

MRM8

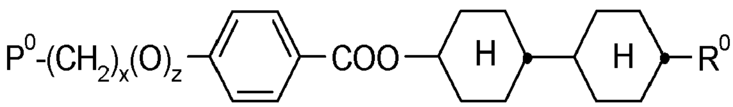

MRM9

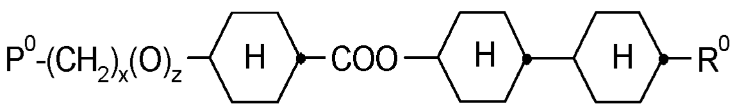

MRM10

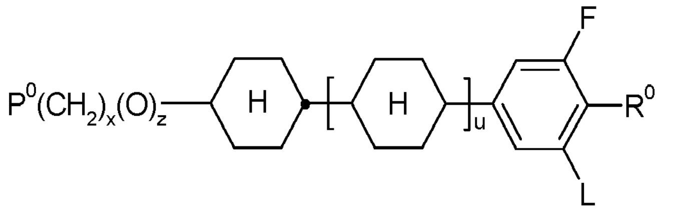

MRM11

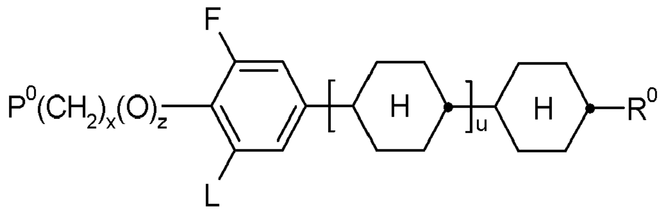

MRM12

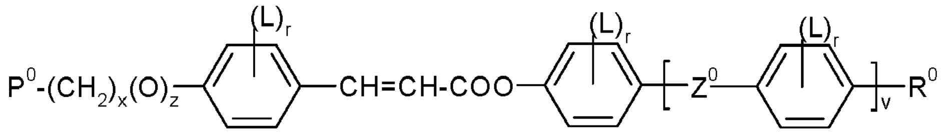

MRM13

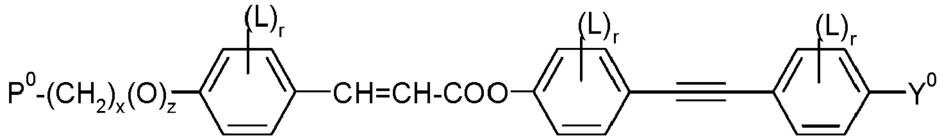

MRM14

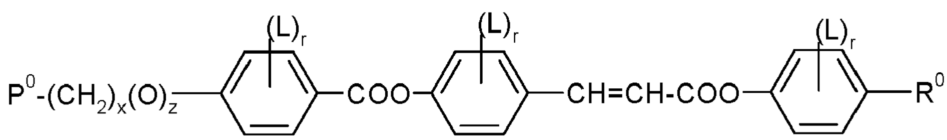

MRM15

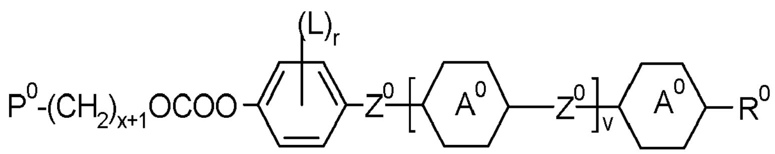

MRM16

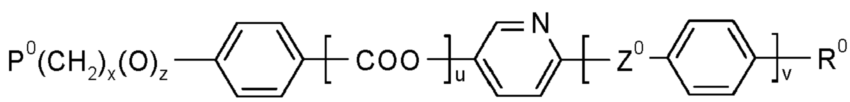

MRM17

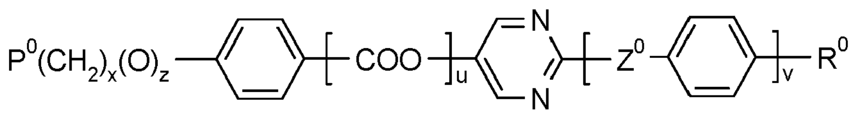

MRM18

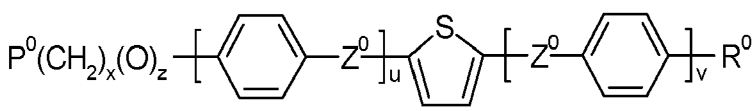

MRM19

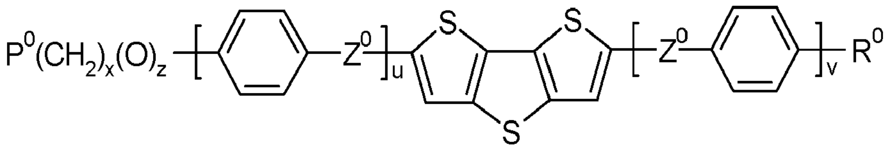

MRM20

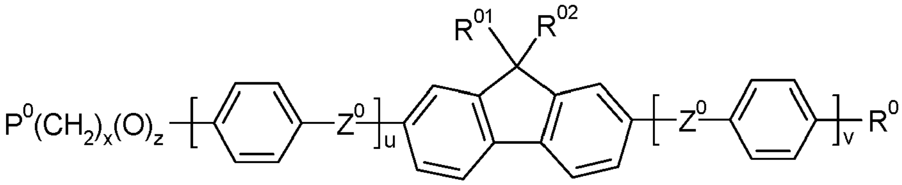

MRM21

MRM22

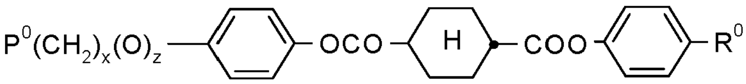

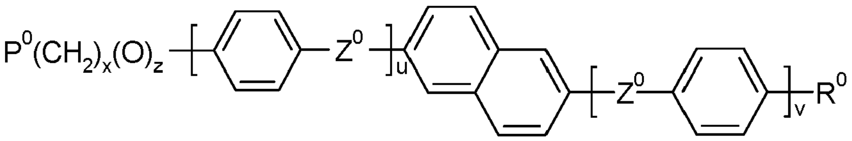

MRM23

MRM24

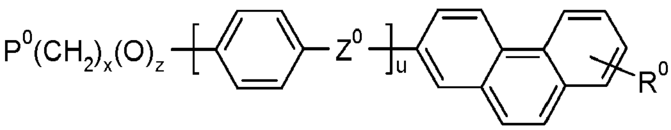

wherein $P^0$, L, r, x, y and z are as defined in formula DRMa,

R° is alkyl, alkoxy, thioalkyl, alkylcarbonyl, alkoxycarbonyl, alkylcarbonyloxy or alkoxycarbonyloxy with 1 or more, preferably 1 to 15 C atoms or denotes $Y^0$ or P-$(CH_2)_y$-(O)z-,

X° is -O-, -S-, -CO-, -COO-, -OCO-, -O-COO-, -CO-$NR^{01}$-, -$NR^{01}$-CO-, -$NR^{01}$-CO-$NR^{01}$-, -$OCH_2$-, -$CH_2O$-, -$SCH_2$-, -$CH_2S$-, -$CF_2O$-, -$OCF_2$-, -$CF_2S$-, -$SCF_2$-, -$CF_2CH_2$-, -$CH_2CF_2$-, - $CF_2CF_2$-, -CH=N-, -N=CH-, -N=N-, -CH=$CR^{01}$-, -CF=CF-, -C≡C-, -CH=CH-COO-, -OCO-CH=CH- or a single bond,

Y° is F, Cl, CN, $NO_2$, $OCH_3$, OCN, SCN, $SF_5$, or mono- oligo- or polyfluorinated alkyl or alkoxy with 1 to 4 C atoms,

Z° is -COO-, -OCO-, -$CH_2CH_2$-, -$CF_2O$-, -$OCF_2$-, -CH=CH-,-OCO-CH=CH-, -CH=CH-COO-, or a single bond,

$A^0$ is, in case of multiple occurrence independently of one another, 1,4-phenylene that is unsubstituted or substituted with 1, 2, 3 or 4 groups L, or trans-1,4-cyclohexylene,

$R^{01,02}$ are independently of each other H, R° or $Y^0$,

u and v are independently of each other 0, 1 or 2,

w is 0 or 1,

and wherein the benzene and naphthalene rings can additionally be substituted with one or more identical or different groups L.

Especially preferred are compounds of formula MRM1, MRM2, MRM3, MRM4, MRM5, MRM6, MRM7, in particular those of formula MRM1, MRM4, MRM6, and MRM7.

The concentration of all monoreactive RMs in the polymerisable LC medium is preferably from 1 to 80%, very preferably from 5 to 70%, more preferably 10 to 60%.

The compounds of the formulae DRM, MRM, and sub-formulae thereof can be pre-pared analogously to processes known to the person skilled in the art and described in standard works of organic chemistry, such as, for example, in Houben-Weyl, Methoden der organischen Chemie [Methods of Organic Chemistry], Thieme-Verlag, Stuttgart.

In a preferred embodiment, the proportion of polymerisable mesogenic compounds in the polymerisable liquid-crystalline medium according to the present invention as a whole, is in the range from 30 to 99 % by weight, more preferably in the range from 40 to 97 % by weight and even more preferably in the range from 50 to 95% by weight.

Preferably, the proportion of said mono-, di- or multireactive liquid-crystalline compounds, preferably selected from the compounds of the formulae DRM, MRM as given above and below in the polymerisable liquid-crystalline medium according to the present invention as a whole, is preferably in the range from 30 to 99.9 % by weight, more preferably in the range from 40 to 99.9 % by weight and even more preferably in the range from 50 to 99.9% by weight.

In a preferred embodiment, the proportion of di- or multireactive polymerisable mesogenic compounds in the polymerisable liquid-crystalline medium according to the present invention as a whole, is preferably in the range from 5 to 99 % by weight, more preferably in the range from 10 to 97 % by weight and even more preferably in the range from 15 to 95% by weight.

In another preferred embodiment, the proportion of monoreactive polymerisable mesogenic compounds in a polymerisable liquid-crystalline medium according to the present invention as a whole, is, if present, preferably in the range from 5 to 80% by weight, more preferably in the range from 10 to 75 % by weight and even more preferably in the range from 15 to 70 % by weight.

In another preferred embodiment, the proportion of multireactive polymerisable mesogenic compounds in a polymerisable liquid-crystalline medium according to the present invention as a whole is, if present, preferably in the range from 1 to 30 % by weight, more preferably in the range from 2 to 20 % by weight and even more preferably in the range from 3 to 10% by weight.

In another preferred embodiment, the proportion of di- or multireactive polymerisable mesogenic compounds in a polymerisable liquid-crystalline medium according to the present invention as a whole is in the range from 20 to 70 % by weight, more preferably in the range from 30 to 60 % by weight, and the proportion of monoreactive polymerisable mesogenic compounds in a polymerisable liquid-crystalline medium according to the present invention as a whole is in the range from 10 to 60 % by weight, more preferably in the range from 20 to 50 % by weight.

In another preferred embodiment the polymerisable LC medium does not contain polymerisable mesogenic compounds having more than two polymerisable groups.

In another preferred embodiment the polymerisable LC medium does not contain polymerisable mesogenic compounds having less than two polymerisable groups.

In a further preferred embodiment, the polymerisable LC materia comprises one or more monoreactive mesogenic compounds, preferably selected from formulae MRM1, MRM7, MRM9 and MRM10, and one or more direactive mesogenic compounds, preferably selected from formula DRMa1.

In a further preferred embodiment, the polymerisable LC medium comprises at least two monoreactive mesogenic compounds, preferably selected from compounds of formulae MRM1, MRM7, MRM9 and MRM10, and one or more direactive mesogenic compounds, preferably selected from formula DRMa1.

In a further preferred embodiment, the polymerisable LC medium comprises at least two monoreactive mesogenic compounds, preferably selected from compounds of formulae MRM1, MRM7, MRM9 and MRM10, and at least two direactive mesogenic compounds, preferably selected from compounds of formula DRMa1.

In a further preferred embodiment, the polymerisable LC medium comprises at least two direactive mesogenic compounds, preferably selected from compounds of formula DRMa1.

The polymerisable LC medium preferably exhibits a nematic LC phase, or a smectic LC phase and a nematic LC phase, very preferably a nematic LC phase at room temperature.

If R is an alkyl or alkoxy radical, i.e. where the terminal $CH_2$ group is replaced by -O-, this may be straight-chain or branched. It is preferably straight-chain, has 2, 3, 4, 5, 6, 7 or 8 carbon atoms and accordingly is preferably ethyl, propyl, butyl, pentyl, hexyl, heptyl, octyl, ethoxy, propoxy, butoxy, pentoxy, hexoxy, heptoxy, or octoxy, furthermore methyl, nonyl, decyl, undecyl, dodecyl, tridecyl, tetradecyl, pentadecyl, methoxy, nonoxy, decoxy, undecoxy, dodecoxy, tridecoxy or tetradecoxy, for example.

Oxaalkyl, i.e. where one $CH_2$ group is replaced by -O-, is preferably straight-chain 2-oxapropyl (=methoxymethyl), 2- (=ethoxymethyl) or 3-oxabutyl (=2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

L and S are preferably F, Cl, CN, $NO_2$, $CH_3$, $C_2H_5$, $OCH_3$, $OC_2H_5$, $COCH_3$, $COC_2H_5$, $CF_3$, $OCF_3$, in particular F, Cl, CN, $CH_3$, $C_2H_5$, $OCH_3$, $COCH_3$ and $OCF_3$, most preferably F, $CH_3$, $OCH_3$ and $COCH_3$.

In the compounds of formula I P is $CH_2$=CW-COO-, WCH=CH-O- or $CH_2$=CH-Phenyl-$(O)_k$- with W being H, $CH_3$ or Cl and k being 0 or 1.

P is preferably a vinyl group, an acrylate group, a methacrylate group, a propenyl ether group or an epoxy group, especially preferably an acrylate or a methacrylate group.

As for the spacer group Sp all groups can be used that are known for this purpose to the skilled in the art. The spacer group Sp is preferably linked to the polymerisable group P by an ester or ether group or a single bond. The spacer group Sp is preferably a linear or branched alkylene group having 1 to 20 C atoms, in particular 1 to 12 C atoms, in which, in addition, one or more non-adjacent $CH_2$ groups may be replaced by -O-, -S-, -NH-, - $N(CH_3)$-, -CO-, -O-CO-, -S-CO-, -O-COO-, -CO-S-, -CO-O-, -CH(halogen)-, -CH(CN)-, -CH=CH- or -C≡C-.

Typical spacer groups are for example $-(CH_2)_o-$, $-(CH_2CH_2O)_r-$,$-CH_2CH_2-$, $-CH_2CH_2-S-CH_2CH_2-$ or $-CH_2CH_2-NH-CH_2CH_2-$,with o being an integer from 2 to 12 and r being an integer from 1 to 3.

Preferred spacer groups are ethylene, propylene, butylene, pentylene, hexylene, heptylene, octylene, nonylene, decylene, undecylene, dodecylene, octadecylene, ethyleneoxyethylene, methyleneoxybutylene, ethylene-thioethylene, ethylene-N-methyliminoethylene and 1-methylalkylene, for example.

In particular preferred are compounds of formula I wherein n is 1.

In a preferred embodiment, the polymers are copolymers obtained by copolymerising mixtures comprising compounds of formula I wherein n is 0 and compounds of formula I wherein n is 1.

In the event that R or $Q^2$ is a group of formula P-Sp-X- or P-Sp- respectively, the spacer groups on each side of the mesogenic core may be identical or different.

In a further preferred embodiment the polymerisable LC medium optionally comprises one or more additives selected from the group consisting of further polymerisation initiators, antioxidants, surfactants, stabilisers, catalysts, sensitizers, inhibitors, chain-transfer agents, co-reacting monomers, reactive thinners, surface-active compounds, lubricating agents, wetting agents, dispersing agents, hydrophobing agents, adhesive agents, flow improvers, degassing or defoaming agents, deaerators, diluents, reactive diluents, auxiliaries, colourants, dyes, pigments and nanoparticles.

In another preferred embodiment, the polymerisable LC medium optionally comprises one or more additives selected from polymerisable non-mesogenic compounds (reactive thinners). The amount of these additives in the polymerisable LC medium is preferably from 0 to 30 %, very preferably from 0 to 25 %.

The reactive thinners used are not only substances which are referred to in the actual sense as reactive thinners, but also auxiliary compounds already mentioned above which contain one or more complementary reactive units or polymerisable groups P, for example hydroxyl, thiol-, or amino groups, via which a reaction with the polymerisable units of the liquid-crystalline compounds can take place.

The substances, which are usually capable of photopolymerisation, include, for example, mono-, bi- and polyfunctional compounds containing at least one olefinic double bond. Examples thereof are vinyl esters of carboxylic acids, for example of lauric, myristic, palmitic and stearic acid, and of dicarboxylic acids, for example of succinic acid, adipic acid, allyl and vinyl ethers and methacrylic and acrylic esters of monofunctional alcohols, for example of lauryl, myristyl, palmityl and stearyl alcohol, and diallyl and divinyl ethers of bifunctional alcohols, for example ethylene glycol and 1,4-butanediol.

Also suitable are, for example, methacrylic and acrylic esters of polyfunctional alcohols, in particular those which contain no further functional groups, or at most ether groups, besides the hydroxyl groups. Examples of such alcohols are bifunctional alcohols, such as ethylene glycol, propylene glycol and their more highly condensed representatives, for example diethylene glycol, triethylene glycol, dipropylene glycol, tripropylene glycol etc., butanediol, pentanediol, hexanediol, neopentyl glycol, alkoxylated phenolic compounds, such as ethoxylated and propoxylated bisphenols, cyclohexanedimethanol, trifunctional and polyfunctional alcohols, such as glycerol, trimethylolpropane, butanetriol, trimethylolethane, pentaerythritol, ditrimethylolpropane, dipentaerythritol, sorbitol, mannitol, and the corresponding alkoxylated, in particular ethoxylated and propoxylated alcohols.

Other suitable reactive thinners are polyester (meth)acrylates, which are the (meth)acrylic ester of polyesterols.

Examples of suitable polyesterols are those which can be prepared by esterification of polycarboxylic acids, preferably dicarboxylic acids, using polyols, preferably diols. The starting materials for such hydroxyl-containing polyesters are known to the person skilled in the art. Dicarboxylic acids which can be employed are succinic, glutaric acid, adipic acid, sebacic acid, o-phthalic acid and isomers and hydrogenation products thereof, and esterifiable and transesterifiable derivatives of said acids, for example anhydrides and dialkyl esters. Suitable polyols are the abovementioned alcohols, preferably ethyleneglycol, 1,2- and 1,3-propylene glycol, 1,4-butanediol, 1,6-hexanediol, neopentyl glycol, cyclohexanedimethanol and polyglycols of the ethylene glycol and propylene glycol type.

Suitable reactive thinners are furthermore 1,4-divinylbenzene, triallyl cyanurate, acrylic esters of tricyclodecenyl alcohol also known under the name dihydrodicyclopentadienyl acrylate, and the allyl esters of acrylic acid, methacrylic acid and cyanoacrylic acid.

Of the reactive thinners, which are mentioned by way of example, those containing photopolymerisable groups are used in particular and in view of the abovementioned preferred compositions.

This group includes, for example, dihydric and polyhydric alcohols, for example ethylene glycol, propylene glycol and more highly condensed representatives thereof, for example diethylene glycol, triethylene glycol, dipropylene glycol, tripropylene glycol etc., butanediol, pentanediol, hexanediol, neopentyl glycol, cyclohexanedimethanol, glycerol, trimethylolpropane, butanetriol, trimethylolethane, pentaerythritol, ditrimethylolpropane, dipentaerythritol, sorbitol, mannitol and the corresponding alkoxylated, in particular ethoxylated and propoxylated alcohols.

The group furthermore also includes, for example, alkoxylated phenolic compounds, for example ethoxylated and propoxylated bisphenols.

These reactive thinners may furthermore be, for example, epoxide or urethane (meth)acrylates.

Epoxide (meth)acrylates are, for example, those as obtainable by the reaction, known to the person skilled in the art, of epoxidized olefins or poly- or diglycidyl ether, such as bisphenol A diglycidyl ether, with (meth)acrylic acid.

Urethane (meth)acrylates are, in particular, the products of a reaction, likewise known to the person skilled in the art, of hydroxylalkyl (meth)acrylates with poly- or diisocyanates.

Such epoxide and urethane (meth)acrylates are included amongst the compounds listed above as "mixed forms".

If reactive thinners are used, their amount and properties must be matched to the respective conditions in such a way that, on the one hand, a satisfactory desired effect, for example the desired colour of the composition according to the invention, is achieved, but, on the other hand, the phase behaviour of the liquid-crystalline composition is not excessively impaired. The low-crosslinking (high-crosslinking) liquid-crystalline compositions can be prepared, for example, using corresponding reactive thinners, which have a relatively low (high) number of reactive units per molecule.

The group of diluents include, for example:

C1-C4-alcohols, for example methanol, ethanol, n-propanol, isopropanol, butanol, isobutanol, sec-butanol and, in particular, the C5-C12-alcohols n-pentanol, n-hexanol, n-heptanol, n-octanol, n-nonanol, n-decanol, n-undecanol and n-dodecanol, and isomers thereof, glycols, for example 1,2-ethylene glycol, 1,2- and 1,3-propylene glycol, 1,2-, 2,3- and 1,4-butylene glycol, di- and triethylene glycol and di- and tripropylene glycol, ethers, for example methyl tert-butyl ether, 1,2-ethylene glycol mono- and dimethyl ether, 1,2-ethylene glycol mono- and -diethylether, 3-methoxypropanol, 3-isopropoxypropanol, tetrahydrofuran and dioxane, ketones, for example acetone, methyl ethyl ketone, methyl isobutyl ketone and diacetone alcohol (4-hydroxy-4-methyl-2-pentanone), C1-C5-alkyl esters, for example methyl acetate, ethyl acetate, propyl acetate, butyl acetate and amyl acetate, aliphatic and aromatic hydrocarbons, for example pentane, hexane, heptane, octane, isooctane, petroleum ether, toluene, xylene, ethylbenzene, tetralin, decalin, dimethylnaphthalene, white spirit, Shellsol® and Solvesso® mineral oils, for example gasoline, kerosine, diesel oil and heating oil, but also natural oils, for example olive oil, soya oil, rapeseed oil, linseed oil and sunflower oil.

It is of course also possible to use mixtures of these diluents in the compositions according to the invention.

So long as there is at least partial miscibility, these diluents can also be mixed with water. Examples of suitable diluents here are C1-C4-alcohols, for example methanol, ethanol, n-propanol, isopropanol, butanol, isobutanol and sec-butanol, glycols, for example 1,2-ethylene glycol, 1,2- and 1,3-propylene glycol, 1,2-, 2,3- and 1,4-butylene glycol, di- and triethylene glycol, and di- and tripropylene glycol, ethers, for example tetrahydrofuran and dioxane, ketones, for example acetone, methyl ethyl ketone and diacetone alcohol (4-hydroxy-4-methyl-2-pentanone), and C1-C4-alkyl esters, for example methyl, ethyl, propyl and butyl acetate.

The diluents are optionally employed in a proportion of from about 0 to 10.0% by weight, preferably from about 0 to 5.0% by weight, based on the total weight of the polymerisable LC medium.

The antifoams and deaerators (c1)), lubricants and flow auxiliaries (c2)), thermally curing or radiation-curing auxiliaries (c3)), substrate wetting auxiliaries (c4)), wetting and dispersion auxiliaries (c5)), hydrophobicizing agents (c6)), adhesion promoters (c7)) and auxiliaries for promoting scratch resistance (c8)) cannot strictly be delimited from one another in their action.

For example, lubricants and flow auxiliaries often also act as antifoams and/or deaerators and/or as auxiliaries for improving scratch resistance. Radiation-curing auxiliaries can also act as lubricants and flow auxiliaries and/or deaerators and/or as substrate wetting auxiliaries. In individual cases, some of these auxiliaries can also fulfil the function of an adhesion promoter (c8)).

Corresponding to the above-said, a certain additive can therefore be classified in a number of the groups c1) to c8) described below.

The antifoams in group c1) include silicon-free and silicon-containing polymers. The silicon-containing polymers are, for example, unmodified or modified polydialkylsiloxanes or branched copolymers, comb or block copolymers comprising polydialkylsiloxane and polyether units, the latter being obtainable from ethylene oxide or propylene oxide.

The deaerators in group c1) include, for example, organic polymers, for example polyethers and polyacrylates, dialkylpolysiloxanes, in particular dimethylpolysiloxanes, organically modified polysiloxanes, for example arylalkyl-modified polysiloxanes, and fluorosilicones.

The action of the antifoams is essentially based on preventing foam formation or destroying foam that has already formed. Antifoams essentially work by promoting coalescence of finely divided gas or air bubbles to give larger bubbles in the medium to be deaerated, for example the compositions according to the invention, and thus accelerate escape of the gas (of the air). Since antifoams can frequently also be employed as deaerators and vice versa, these additives have been included together under group c1).

Such auxiliaries are, for example, commercially available from Tego as TEGO® Foamex 800, TEGO® Foamex

805, TEGO® Foamex 810, TEGO® Foamex 815, TEGO® Foamex 825, TEGO® Foamex 835, TEGO® Foamex 840, TEGO® Foamex 842, TEGO® Foamex 1435, TEGO® Foamex 1488, TEGO® Foamex 1495, TEGO® Foamex 3062, TEGO® Foamex 7447, TEGO® Foamex 8020, Tego® Foamex N, TEGO® Foamex K 3, TEGO® Antifoam 2-18,TEGO® Antifoam 2-18, TEGO® Antifoam 2-57, TEGO® Antifoam 2-80, TEGO® Antifoam 2-82, TEGO® Antifoam 2-89, TEGO® Antifoam 2-92, TEGO® Antifoam 14, TEGO® Antifoam 28, TEGO® Antifoam 81, TEGO® Antifoam D 90, TEGO® Antifoam 93, TEGO® Antifoam 200, TEGO® Antifoam 201, TEGO® Antifoam 202, TEGO® Antifoam 793, TEGO® Antifoam 1488, TEGO® Antifoam 3062, TEGOPREN® 5803, TEGOPREN® 5852, TEGOPREN® 5863, TEGOPREN® 7008, TEGO® Antifoam 1-60, TEGO® Antifoam 1-62, TEGO® Antifoam 1-85, TEGO® Antifoam 2-67, TEGO® Antifoam WM 20, TEGO® Antifoam 50, TEGO® Antifoam 105, TEGO® Antifoam 730, TEGO® Antifoam MR 1015, TEGO® Antifoam MR 1016, TEGO® Antifoam 1435, TEGO® Antifoam N, TEGO® Antifoam KS 6, TEGO® Antifoam KS 10, TEGO® Antifoam KS 53, TEGO® Antifoam KS 95, TEGO® Antifoam KS 100, TEGO® Antifoam KE 600, TEGO® Antifoam KS 911, TEGO® Antifoam MR 1000, TEGO® Antifoam KS 1100, Tego® Airex 900, Tego® Airex 910, Tego® Airex 931, Tego® Airex 935, Tego® Airex 936, Tego® Airex 960, Tego® Airex 970, Tego® Airex 980 and Tego® Airex 985 and from BYK as BYK®-011, BYK®-019, BYK®-020, BYK®-021, BYK®-022, BYK®-023, BYK®-024, BYK®-025, BYK®-027, BYK®-031, BYK®-032, BYK®-033, BYK®-034, BYK®-035, BYK®-036, BYK®-037, BYK®-045, BYK®-051, BYK®-052, BYK®-053, BYK®-055, BYK®-057, BYK®-065, BYK®-066, BYK®-070, BYK®-080, BYK®-088, BYK®-141 and BYK®-A 530.

The auxiliaries in group c1) are optionally employed in a proportion of from about 0 to 3.0% by weight, preferably from about 0 to 2.0% by weight, based on the total weight of the polymerisable LC medium.

In group c2), the lubricants and flow auxiliaries typically include silicon-free, but also silicon-containing polymers, for example polyacrylates or modifiers, low-molecular-weight polydialkylsiloxanes. The modification consists in some of the alkyl groups having been replaced by a wide variety of organic radicals. These organic radicals are, for example, polyethers, polyesters or even long-chain (fluorinated)alkyl radicals, the former being used the most frequently.

The polyether radicals in the correspondingly modified polysiloxanes are usually built up from ethylene oxide and/or propylene oxide units. Generally, the higher the proportion of these alkylene oxide units in the modified polysiloxane, the more hydrophilic is the resultant product.

Such auxiliaries are, for example, commercially available from Tego as TEGO® Glide 100, TEGO® Glide ZG 400, TEGO® Glide 406, TEGO® Glide 410, TEGO® Glide 411, TEGO® Glide 415, TEGO® Glide 420, TEGO® Glide 435, TEGO® Glide 440, TEGO® Glide 450, TEGO® Glide A 115, TEGO® Glide B 1484 (can also be used as antifoam and deaerator), TEGO® Flow ATF, TEGO® Flow 300, TEGO@ Flow 460, TEGO@ Flow 425 and TEGO® Flow ZFS 460. Suitable radiation-curable lubricants and flow auxiliaries, which can also be used to improve the scratch resistance, are the products TEGO@ Rad 2100, TEGO® Rad 2200, TEGO® Rad 2500, TEGO® Rad 2600 and TEGO® Rad 2700, which are likewise obtainable from TEGO.

Such-auxiliaries are also available, for example, from BYK as BYK®-300 BYK®-306, BYK®-307, BYK®-310, BYK®-320, BYK®-333, BYK®-341, Byk® 354, Byk®361, Byk®361N, BYK®388.

Such-auxiliaries are also available, for example, from 3M as FC4430®.

Such-auxiliaries are also available, for example, from Cytonix as FluorN®561 or FluorN®562.

Such-auxiliaries are also available, for example, from Merck KGaA as Tivida® FL 2300 and Tivida® FL 2500

The auxiliaries in group c2) are optionally employed in a proportion of from about 0 to 3.0% by weight, preferably from about 0 to 2.0% by weight, based on the total weight of the polymerisable LC medium.

In group c3), the radiation-curing auxiliaries include, in particular, polysiloxanes having terminal double bonds which are, for example, a constituent of an acrylate group. Such auxiliaries can be crosslinked by actinic or, for example, electron radiation. These auxiliaries generally combine a number of properties together. In the uncrosslinked state, they can act as antifoams, deaerators, lubricants and flow auxiliaries and/or substrate wetting auxiliaries, while, in the crosslinked state, they increase, in particular, the scratch resistance, for example of coatings or films which can be produced using the compositions according to the invention. The improvement in the gloss properties, for example of precisely those coatings or films, is regarded essentially as a consequence of the action of these auxiliaries as antifoams, deaerators and/or lubricants and flow auxiliaries (in the uncrosslinked state).

Examples of suitable radiation-curing auxiliaries are the products TEGO@ Rad 2100, TEGO@ Rad 2200, TEGO@ Rad 2500, TEGO@ Rad 2600 and TEGO® Rad 2700 available from TEGO and the product BYK®-371 available from BYK.

Thermally curing auxiliaries in group c3) contain, for example, primary OH groups, which are able to react with isocyanate groups, for example of the binder.

Examples of thermally curing auxiliaries, which can be used, are the products BYK®-370, BYK®-373 and BYK®-375 available from BYK.

The auxiliaries in group c3) are optionally employed in a proportion of from about 0 to 5.0% by weight, preferably from about 0 to 3.0% by weight, based on the total weight of the polymerisable LC medium.

The substrate wetting auxiliaries in group c4) serve, in particular, to increase the wettability of the substrate to be printed or coated, for example, by printing inks or coating compositions, for example compositions according to the

invention. The generally attendant improvement in the lubricant and flow behaviour of such printing inks or coating compositions has an effect on the appearance of the finished (for example crosslinked) print or coating.

A wide variety of such auxiliaries are commercially available, for example from Tego as TEGO® Wet KL 245, TEGO® Wet 250, TEGO® Wet 260 and TEGO® Wet ZFS 453 and from BYK as BYK®-306, BYK®-307, BYK®-310, BYK®-333, BYK®-344, BYK®-345, BYK®-346 and Byk®-348.

The auxiliaries in group c4) are optionally employed in a proportion of from about 0 to 3.0% by weight, preferably from about 0 to 1.5% by weight, based on the total weight of the liquid-crystalline composition.

The wetting and dispersion auxiliaries in group c5) serve, in particular, to prevent the flooding and floating and the sedimentation of pigments and are therefore, if necessary, suitable in particular in pigmented compositions.

These auxiliaries stabilize pigment dispersions essentially through electrostatic repulsion and/or steric hindrance of the pigment particles containing these additives, where, in the latter case, the interaction of the auxiliary with the ambient medium (for example binder) plays a major role.

Since the use of such wetting and dispersion auxiliaries is common practice, for example in the technical area of printing inks and paints, the selection of a suitable auxiliary of this type generally does not present the person skilled in the art with any difficulties, if they are used.

Such wetting and dispersion auxiliaries are commercially available, for example from Tego, as TEGO® Dispers 610, TEGO® Dispers 610 S, TEGO® Dispers 630, TEGO® Dispers 700, TEGO® Dispers 705, TEGO® Dispers 710, TEGO® Dispers 720 W, TEGO® Dispers 725 W, TEGO® Dispers 730 W, TEGO® Dispers 735 W and TEGO® Dispers 740 Wand from BYK as Disperbyk®, Disperbyk®-107, Disperbyk®-108, Disperbyk®-110, Disperbyk®-111, Disperbyk®-115, Disperbyk®-130, Disperbyk®-160, Disperbyk®-161, Disperbyk®-162, Disperbyk®-163, Disperbyk®-164, Disperbyk®-165, Disperbyk®-166, Disperbyk®-167, Disperbyk®-170, Disperbyk®-174, Disperbyk®-180, Disperbyk®-181, Disperbyk®-182, Disperbyk®-183, Disperbyk®-184, Disperbyk®-185, Disperbyk®-190, Anti-Terra®-U, Anti-Terra®-U 80, Anti-Terra®-P, Anti-Terra®-203, Anti-Terra®-204, Anti-Terra®-206, BYK®-151, BYK®-154, BYK®-155, BYK®-P 104 S, BYK®-P 105, Lactimon®, Lactimon®-WS and Bykumen®.

The amount of the auxiliaries in group c5) used on the mean molecular weight of the auxiliary. In any case, a preliminary experiment is therefore advisable, but this can be accomplished simply by the person skilled in the art.

The hydrophobicizing agents in group c6) can be used to give water-repellent properties to prints or coatings produced, for example, using compositions according to the invention. This prevents or at least greatly suppresses swelling due to water absorption and thus a change in, for example, the optical properties of such prints or coatings. In addition, when the composition is used, for example, as a printing ink in offset printing, water absorption can thereby be prevented or at least greatly reduced.

Such hydrophobicizing agents are commercially available, for example, from Tego as Tego® Phobe WF, Tego® Phobe 1000, Tego® Phobe 1000 S, Tego® Phobe 1010, Tego® Phobe 1030, Tego® Phobe 1010, Tego® Phobe 1010, Tego® Phobe 1030, Tego® Phobe 1040, Tego® Phobe 1050, Tego® Phobe 1200, Tego® Phobe 1300, Tego® Phobe 1310 and Tego® Phobe 1400.

The auxiliaries in group c6) are optionally employed in a proportion of from about 0 to 5.0% by weight, preferably from about 0 to 3.0% by weight, based on the total weight of the polymerisable LC medium.

Further adhesion promoters from group c7) serve to improve the adhesion of two interfaces in contact. It is directly evident from this that essentially the only fraction of the adhesion promoter that is effective is that located at one or the other or at both interfaces. If, for example, it is desired to apply liquid or pasty printing inks, coating compositions or paints to a solid substrate, this generally means that the adhesion promoter must be added directly to the latter or the substrate must be pre-treated with the adhesion promoters (also known as priming), i.e. this substrate is given modified chemical and/or physical surface properties.

If the substrate has previously been primed with a primer, this means that the interfaces in contact are that of the primer on the one hand and of the printing ink or coating composition or paint on the other hand. In this case, not only the adhesion properties between the substrate and the primer, but also between the substrate and the printing ink or coating composition or paint play a part in adhesion of the overall multilayer structure on the substrate.

Adhesion promoters in the broader sense which may be mentioned are also the substrate wetting auxiliaries already listed under group c4), but these generally do not have the same adhesion promotion capacity.

In view of the widely varying physical and chemical natures of substrates and of printing inks, coating compositions and paints intended, for example, for their printing or coating, the multiplicity of adhesion promoter systems is not surprising.

Adhesion promoters based on silanes are, for example, 3-aminopropyltrimethoxysilane, 3-aminopropyltriethoxysilane, 3-aminopropylmethyldiethoxysilane, N-aminoethyl-3-aminopropyltrimethoxysilane, N-aminoethyl-3-aminopropylmethyldimethoxysilane, N-methyl-3-aminopropyltrimethoxysilane, 3-ureidopropyltriethoxysilane, 3-methacryloyloxypropyltrimethoxysilane, 3-glycidyloxypropyltrimethoxysilane, 3-mercaptopropyltrimethoxysilane, 3-chloropropyltrimethoxysilane and vinyltrimethoxysilane. These and other silanes are commercially available from Hüls, for example under the tradename DYNASILAN®.

Corresponding technical information from the manufacturers of such additives should generally be used or the person skilled in the art can obtain this information in a simple manner through corresponding preliminary experiments.

However, if these additives are to be added as auxiliaries from group c7) to the polymerisable LC mediums according to the invention, their proportion optionally corresponds to from about 0 to 5.0% by weight, based on the total weight of the polymerisable LC medium. These concentration data serve merely as guidance, since the amount and identity of the additive are determined in each individual case by the nature of the substrate and of the printing/coating composition. Corresponding technical information is usually available from the manufacturers of such additives for this case or can be determined in a simple manner by the person skilled in the art through corresponding preliminary experiments.

The auxiliaries for improving the scratch resistance in group c8) include, for example, the abovementioned products TEGO® Rad 2100, TEGO® Rad 2200, TEGO® Rad 2500, TEGO® Rad 2600 and TEGO® Rad 2700, which are available from Tego.

For these auxiliaries, the amount data given for group c3) are likewise suitable, i.e. these additives are optionally employed in a proportion of from about 0 to 5.0% by weight, preferably from about 0 to 3.0% by weight, based on the total weight of the liquid-crystalline composition.

Examples that may be mentioned of further light, heat and/or oxidation stabilizers are the following:

alkylated monophenols, such as 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which have a linear or branched side chain, for example 2,6-dinonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures of these compounds, alkylthiomethylphenols, such as 2,4-dioctylthiomethyl-6-tert-butylphenol, 2,4-dioctylthiomethyl-6-methylphenol, 2,4-dioctylthiomethyl-6-ethylphenol and 2,6-didodecylthiomethyl-4-nonylphenol,

Hydroquinones and alkylated hydroquinones, such as 2,6-di-tert-butyl-4-methoxyphenol, 2,5-di-tert-butylhydroquinone, 2,5-di-tert-amylhydrocrainone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate and bis(3,5-di-tert-butyl-4-hydroxyphenyl)adipate,

Tocopherols, such as α-tocopherol, β-tocopherol, γ-tocopherol, δ-tocopherol and mixtures of these compounds, and tocopherol derivatives, such as tocopheryl acetate, succinate, nicotinate and polyoxyethylenesuccinate ("tocofersolate"),

hydroxylated diphenyl thioethers, such as 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol) and 4,4'-bis(2,6-dimethyl-4-hydroxyphenyl)disulfide,

Alkylidenebisphenols, such as 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecyl-mercaptobutane, ethylene glycol bis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl]terephthalate, 1,1-bis(3,5-dimethyl-2-hydroxyphenyl)butane, 2,2-bis(3,5-di-tert-butyl-4-hydroxyphenyl)propane, 2,2-bis(5-tert-butyl-4-hydroxy-2-methylphenyl)-4-n-dodecylmercaptobutane and 1,1,5,5-tetrakis(5-tert-butyl-4-hydroxy-2-methylphenyl)pentane,

O-, N- and S-benzyl compounds, such as 3,5,3',5'-tetra-tert-butyl-4,4'-dihydroxydibenzyl ether, octadecyl 4-hydroxy-3,5-dimethylbenzylmercaptoacetate, tridecyl 4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide and isooctyl-3,5-di-tert-butyl-4-hydroxybenzylmercaptoacetate,

aromatic hydroxybenzyl compounds, such as 1,3,5-tris(3,5-di-tert-butyl-4-hydroxybenzyl)-2,4,6-trimethyl-benzene,

1,4-bis(3,5-di-tert-butyl-4-hydroxybenzyl)-2,3,5,6-tetramethylbenzene and 2,4,6-tris(3,5-di-tert-butyl-4-hydroxybenzyl)phenol,

Triazine compounds, such as 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris-(3,5-di-tert-butyl-4-hydroxyphenylpropionyl)hexahydro-1,3,5-triazine, 1,3,5-tris(3,5-dicyclohexyl-4-hydroxybenzyl)isocyanurate and 1,3,5-tris(2-hydroxyethyl)isocyanurate,

Benzylphosphonates, such as dimethyl 2,5-di-tert-butyl-4-hydroxybenzylphosphonate, diethyl 3,5-di-tert-butyl-4-hydroxybenzylphosphonate, dioctadecyl 3,5-di-tert-butyl-4-hydroxybenzylphosphonate and dioctadecyl 5-tert-butyl-4-hydroxy-3-methylbenzylphosphonate,

Acylaminophenols, such as 4-hydroxylauroylanilide, 4-hydroxystearoylanilide and octyl N-(3,5-di-tert-butyl-4-hydroxyphenyl)carbamate,

Propionic and acetic esters, for example of monohydric or polyhydric alcohols, such as methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxalamide, 3-thiaundecanol, 3-thiapentadecanol, trimethylhexanediol, trimethylolpropane and 4-hydroxymethyl-1-phospha-2,6,7-trioxabicyclo[2.2.2]-octane,

Propionamides based on amine derivatives, such as N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine and N,N'-bis(3,5-di-tert-butyl-4-hydroxyphenylpropionyl)hydrazine,

Ascorbic acid (Vitamin C) and ascorbic acid derivatives, such as ascorbyl palmitate, laurate and stearate, and ascorbyl sulfate and phosphate,

Antioxidants based on amine compounds, such as N,N'-diisopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octyl-substituted diphenylamine, such as p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis[4-methoxyphenyl)amine, 2,6-di-tert-butyl-4-dimethylaminomethylphenol, 2,4-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octyl-substituted N-phenyl-1-naphthylamine, a mixture of mono- and dialkylated tert-butyl/tert-octyldiphenylamine, a mixture of mono- and dialkylated nonyldiphenylamine, a mixture of mono- and dialkylated dodecyldiphenylamine, a mixture of mono- and dialkylated isopropyl/isohexyldiphenylamine, a mixture of mono- and dialkylated tert-butyldiphenylamine, 2,3-dihydro-3,3-dimethyl-4H-1,4-benzothiazine, phenothiazine, a mixture of mono- and dialkylated tert-butyl/tert-octylphenothiazine, a mixture of mono- and dialkylated tert-octylphenothiazine, N-allylphenothiazine, N,N,N',N'-tetraphenyl-1,4-diaminobut-2-ene, N,N-bis(2,2,6,6-tetramethylpiperidin-4-yl)hexamethylenediamine, bis(2,2,6,6-tetramethylpiperidin-4-yl)sebacate, 2,2,6,6-tetramethylpiperidin-4-one and 2,2,6,6-tetramethylpiperidin-4-ol,

Phosphines, Phosphites and phosphonites, such as triphenylphosnine triphenylphosphite, diphenyl alkyl phosphite, phenyl dialkyl phosphite, tris(nonylphenyl)phosphite, trilauryl phosphite, trioctadecyl phosphite, distearyl pentaerythritol diphosphite, tris(2,4-di-tert-butylphenyl)phosphite, diisodecyl pentaerythritol diphosphite, bis(2,4-di-tert-butylphenyl)pentaerythritol diphosphite, bis(2,6-di-tert-butyl-4-methylphenyl)pentaerythritol diphosphite, diisodecyloxy pentaerythritol diphosphite, bis(2,4-di-tert-butyl-6-methylphenyl)pentaerythritol diphosphite, bis(2,4,6-tris(tert-butylphenyl))pentaerythritol diphosphite, tristearyl sorbitol triphosphite, tetrakis(2,4-di-tert-butylphenyl)4,4'-biphenylenediphosphonite, 6-isooctyloxy-2,4,8,10-tetra-tert-butyl-12H-dibenz[d,g]-1,3,2-dioxaphosphocine, 6-fluoro-2,4,8,10-tetra-tert-butyl-12-methyl-dibenz[d,g]-1,3,2-dioxaphosphocine, bis(2,4-di-tert-butyl-6-methylphenyl)methyl phosphite and bis(2,4-di-tert-butyl-6-methylphenyl)ethyl phosphite,

2-(2'-Hydroxyphenyl)benzotriazoles, such as 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3,5'-bis-(α,α-dimethylbenzyl)-2'-hydroxyphenyl)benzotriazole, a mixture of 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxy phenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxy phenyl)benzotriazole, 2-(3'-dodecyl-2'-hydroxy-5'-methylphenyl)benzotriazole and 2-(3'-tert-butyl-2'-hydroxy-5'-(2-isooctyloxycarbonylethyl)phenyl benzotriazole, 2,2'-methylenebis[4-(1,1,3,3-tetramethylbutyl)-6-benzotriazol-2-ylphenol]; the product of complete esterification of 2-[3'-tert-butyl-5'-(2-methoxycarbonylethyl)-2'-hydroxyphenyl]-2H-benzotriazole with polyethylene glycol 300;

sulfur-containing peroxide scavengers and sulfur-containing antioxidants, such as esters of 3,3'-thiodipropionic acid, for example the lauryl, stearyl, myristyl and tridecyl esters, mercaptobenzimidazole and the zinc salt of 2-mercaptobenzimidazole, dibutylzinc dithiocarbamates, dioctadecyl disulfide and pentaerythritol tetrakis(β-dodecyl mercapto) propionate,

2-hydroxybenzophenones, such as the 4-hydroxy, 4-methoxy, 4-octyloxy, 4-decycloxy, 4-dodecyloxy, 4-benzyloxy, 4,2',4'-trihydroxy and 2'-hydroxy-4,4'-dimethoxy derivatives,

Esters of unsubstituted and substituted benzoic acids, such as 4-tert-butylphenyl salicylate, phenyl salicylate, octylphenyl salicylate, dibenzoylresorcinol, bis(4-tert-butylbenzoyl)resorcinol, benzoylresorcinol, 2,4-di-tert-butylphenyl 3,5-di-tert-butyl-4-hydroxybenzoate, hexadecyl-3,5-di-tert-butyl-4-hydroxybenzoate, octadecyl-3,5-di-tert-butyl-4-hydroxybenzoate and 2-methyl-4,6-di-tert-butylphenyl-3,5-di-tert-butyl-4-hydroxybenzoate,

Acrylates, such as ethyl α-cyano-β,β-diphenylacrylate, isooctyl α-cyano-β,β-diphenylacrylate, methyl α-methoxycarbonylcinnamate, methyl α-cyano-β-methyl-p-methoxycinnamate, butyl-α-cyano-β-methyl-p-methoxycinnamate and methyl-α-methoxycarbonyl-p-methoxycinnamate, sterically hindered amines, such as bis(2,2,6,6-tetramethylpiperidin-4-yl)sebacate, bis(2,2,6,6-tetramethylpiperidin-4-yl)succinate, bis(1,2,2,6,6-pentamethylpiperidin-4-yl)sebacate, bis(1-octyloxy-2,2,6,6-tetramethylpiperidin-4-yl)sebacate, bis(1,2,2,6,6-pentamethylpiperidin-4-yl)-n-butyl-3,5-di-tert-butyl-4-hydroxybenzylmalonate, the condensation product of 1-(2-hydroxyethyl)-2,2,6,6-tetramethyl-4-hydroxypiperidine and succinic acid, the condensation product of N,N'-bis(2,2,6,6-tetramethylpiperidin-4-yl)hexamethylenediamine and 4-tert-octylamino-2,6-dichloro-1,3,5-triazine, tris(2,2,6,6-tetramethylpiperidin-4-yl)nitrilotriacetate, tetrakis(2,2,6,6-tetramethylpiperidin-4-yl)1,2,3,4-butanetetracarboxylate, 1,1'-(1,2-ethylene)bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidin-4-yl)2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidin-4-yl)sebacate, bis(1-octyloxy-2,2,6,6-tetramethylpiperidin-4-yl)succinate, the condensation product of N,N'-bis(2,2,6,6-tetramethylpiperidin-4-yl)hexamethylenediamine and 4-morpholino-2,6-dichloro-1,3,5-triazine, the condensation product of 2-chloro-4,6-bis(4-n-butylamino-2,2,6,6-tetramethylpiperidin-4-yl)-1,3,5-triazine and 1,2-bis(3-aminopropylamino)ethane, the condensation product of 2-chloro-4,6-di(4-n-butylamino-1 ,2,2,6,6-pentamethylpiperidin-4-yl)-1,3,5-triazine and 1,2-bis(3-aminopropylamino)ethane, 8-acetyl-3-dodecyl-7,7,9,9-tetramethyl-1,3,8-triazaspiro[4.5]-decane-2,4-dione, 3-dodecyl-1-(2,2,6,6-tetramethylpiperidin-4-yl)pyrrolidine-2,5-dione, 3-dodecyl-1-(1,2,2,6,6-pentamethylpiperidin-4-yl)pyrrolidine-2,5-dione, a mixture of 4-hexadecyloxy- and 4-stearyloxy-2,2,6,6-tetramethylpiperidine, the condensation product of N,N'-bis(2,2,6,6-tetramethylpiperidin-4-yl)hexamethylenediamine and 4-cyclohexylamino-2,6-dichloro-1,3,5-triazine, the condensation product of 1,2-bis(3-aminopropylamino)ethane and 2,4,6-trichloro-1,3,5-triazine, 4-butylamino-2,2,6,6-tetramethylpiperidine, N-(2,2,6,6-tetramethylpiperidin-4-yl)-n-dodecylsuccinimide, N-(1,2,2,6,6-pentamethylpiperidin-4-yl)-n-dodecylsuccinimide, 2-undecyl-7,7,9,9-tetramethyl-1-oxa-3,8-diaza-4-oxo-spiro[4.5]-decane, the condensation product of 7,7,9,9-tetramethyl-2-cycloundecyl-1-oxa-3,8-diaza-4-oxospiro-[4.5]decane and epichlorohydrin, the condensation products of 4-amino-2,2,6,6-tetramethylpiperidine with tetramethylolacetylenediureas and poly(methoxypropyl-3-oxy)-[4(2,2,6,6-tetramethyl)piperidinyl]-siloxane,

Oxalamides, such as 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxalamide, 2-ethoxy-5-tert-butyl-2'-ethoxanilide and its mixture with 2-ethoxy-2'-ethyl-5,4'-di-tert-butoxanilide, and mixtures of ortho-, para-methoxy-disubstituted oxanilides and mixtures of ortho- and para-ethoxy-disubstituted oxanilides, and

2-(2-hydroxyphenyl)-1,3,5-triazines, such as 2,4,6-tris-(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropoxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis-(2,4-dimethylphenyl)-1,3,5-triazine, 2-(2-hydroxy-4-hexyloxyphenyl)-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine and 2-(2-hydroxyphenyl)-4-(4-methoxyphenyl)-6-phenyl-1,3,5-triazine.

In another preferred embodiment the polymerisable LC medium comprises one or more specific antioxidant additives, preferably selected from the Irganox® series, e.g. the commercially available antioxidants Irganox®1076 and Irganox®1010, from Ciba, Switzerland.

In another preferred embodiment, the polymerisable LC medium comprises one or more, more preferably two or more photoinitiators, for example, selected from the commercially available Irgacure® or Darocure® (Ciba AG) series, in particular, Irgacure 127, Irgacure 184, Irgacure 369, Irgacure 651, Irgacure 817, Irgacure 907, Irgacure 1300, Irgacure, Irgacure 2022, Irgacure 2100, Irgacure 2959, or Darcure TPO. Especially the polymerisable LC medium comprises preferably one or more oxime ester photoinitiators preferably selected from the commercially available OXE02 (Ciba AG), NCI 930, N1919T (Adeka), SPI-03 or SPI-04 (Samyang).

The concentration of the polymerisation initiator(s) as a whole in the polymerisable LC medium is preferably from 0.5 to 10%, very preferably from 0.8 to 8%, more preferably 1 to 6%.

In a preferred embodiment the polymerisable LC medium is dissolved in a suitable solvent, which are preferably selected from organic solvents.

The solvents are preferably selected from ketones such as acetone, methyl ethyl ketone, methyl propyl ketone, methyl isobutyl ketone or cyclohexanone; acetates such as methyl, ethyl or butyl acetate or methyl acetoacetate; alcohols such as methanol, ethanol or isopropyl alcohol; aromatic solvents such as toluene or xylene; alicyclic hydrocarbons such as cyclopentane or cyclohexane; halogenated hydrocarbons such as di- or trichloromethane; glycols or their esters such as PGMEA (propyl glycol monomethyl ether acetate), □-butyrolactone. It is also possible to use binary, ternary or higher mixtures of the above solvents.

In case the polymerisable LC medium contains one or more solvents, the total concentration of all solids, including the RMs, in the solvent(s) is preferably from 10 to 60%.

Preferably, the polymerisable LC medium comprises,

a) one or more di- or multireactive polymerisable mesogenic compounds,
b) optionally one or more monoreactive polymerisable mesogenic compounds, preferably selected from compounds of formula MRM1, MRM7, MRM9 and/or MRM10 and their corresponding subformulae,
c) optionally one or more antioxidative additives,
d) optionally one or more mono-, di- or multireactive polymerisable non-mesogenic compounds,
e) optionally one or more dyes showing an absorption maximum at the wavelength used to initiate photo polymerisation,
f) optionally one or more chain transfer agents,
g) optionally one or more further stabilizers,
h) optionally one or more lubricants and flow auxiliaries, and
i) optionally one or more diluents,
j) a non-polymerisable nematic component,
k) optionally one or more organic solvents.

In a preferred embodiment of the present invention the medium comprises one or more compounds selected from the group of compounds of the formulae I, II, III, IV, V, VI, VII, VIII, IX, X, XI and XII.

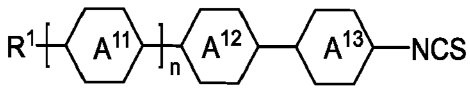

I

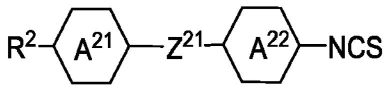

II

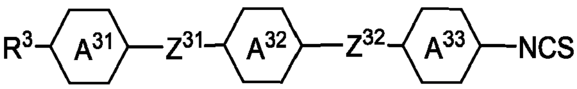

III

in which

$R^1$ denotes H, unfluorinated alkyl or unfluorinated alkoxy having 1 to 17, preferably 3 to 10 C atoms, or unfluorinated alkenyl, unfluorinated alkenyloxy or unfluorinated alkoxyalkyl having 2 to 15, preferably 3 to 10, C atoms, in which one or more $CH_2$-groups may be replaced by

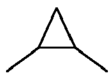, 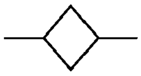, 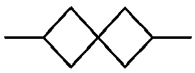, 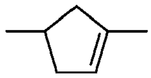 or 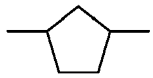,

n preferably unfluorinated alkyl or unfluorinated alkenyl, is 0, 1 or 2,

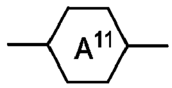

to

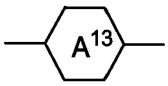,

on each occurrence, independently of one another, denote

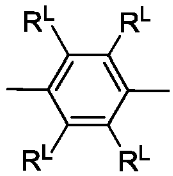, 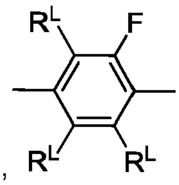, 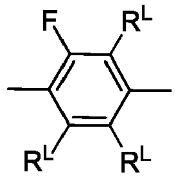,

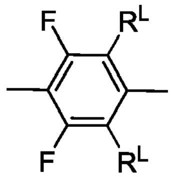, 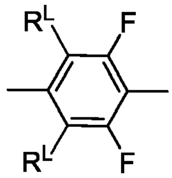, 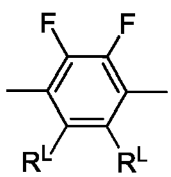

or

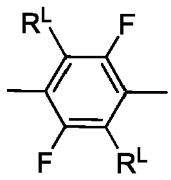,

in which $R^L$ , on each occurrence, identically or differently, denotes H or alkyl having 1 to 6 C atoms, preferably H, methyl, or ethyl, particularly preferably H, and wherein

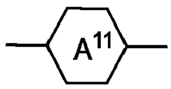

alternatively denotes

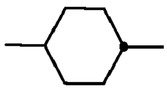, 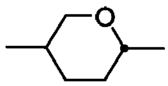, 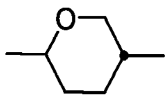, 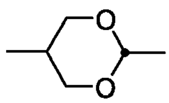,

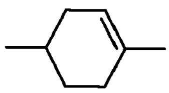 or 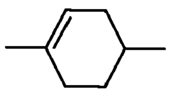,

preferably

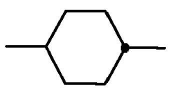,

and in case n = 2, one of

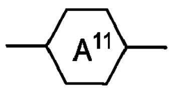

preferably denotes

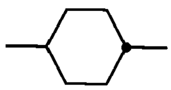

and the other preferably denotes

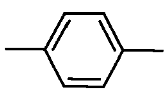, 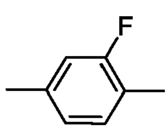, 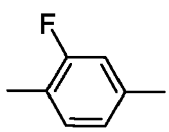,

preferably

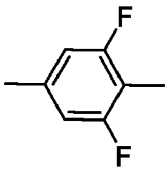 or 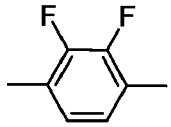 ;

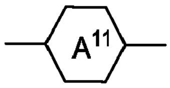

to

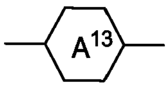 ,

independently of one another, denote

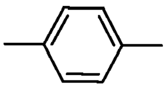 , 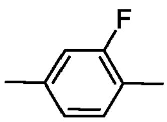 , 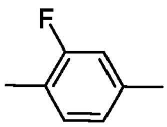 ,

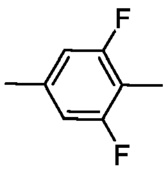 , 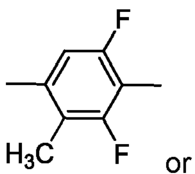 or 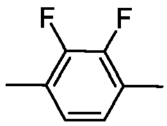 ,

more preferably

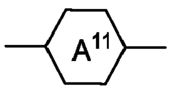

denotes

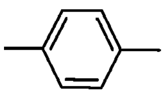 or 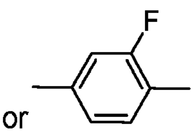 ,

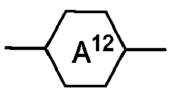

denotes

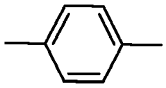, 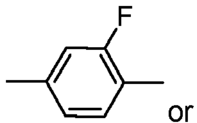 or 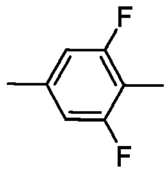,

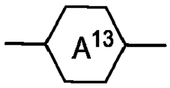

denotes

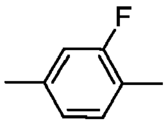 or 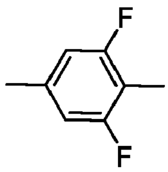;

$R^2$ denotes H, unfluorinated alkyl or unfluorinated alkoxy having 1 to 17, preferably 3 to 10 C atoms, or unfluorinated alkenyl, unfluorinated alkenyloxy or unfluorinated alkoxyalkyl having 2 to 15, preferably 3 to 10, C atoms, in which one or more $CH_2$-groups may be replaced by

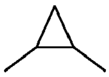, 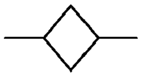, 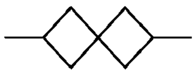, 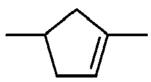 or 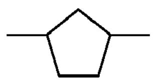,

preferably unfluorinated alkyl or unfluorinated alkenyl,

$Z^{21}$ denotes *trans*-CH=CH-, *trans*-CF=CF- or -C=C-, preferably -C≡C- or *trans*-CH=CH-, and

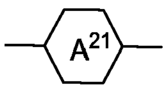 and 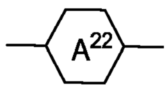,

independently of one another, denote

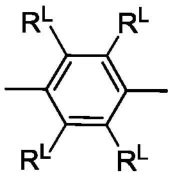, 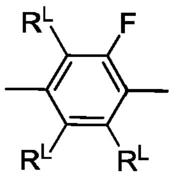, 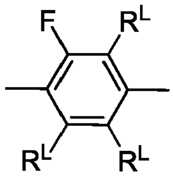,

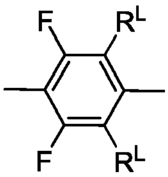, 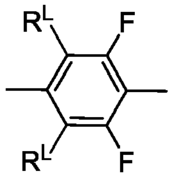, 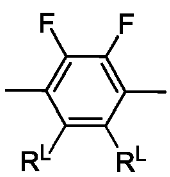

or

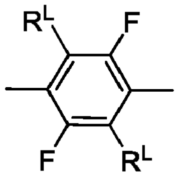,

in which $R^L$, on each occurrence, identically or differently, denotes H or alkyl having 1 to 6 C atoms, preferably H, methyl or ethyl, particularly preferably H, and wherein preferably

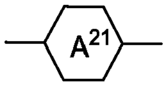 and 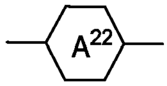,

independently of one another, denote

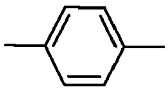, 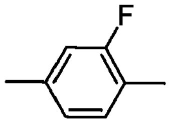

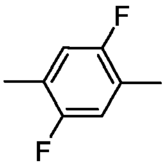, 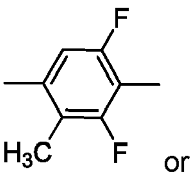 or 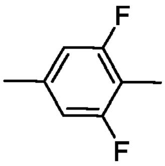,

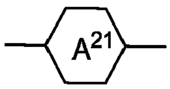

preferably denotes

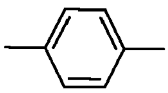, 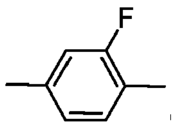

or

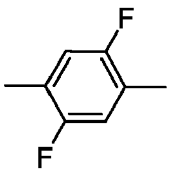,

and

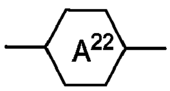

preferably denotes

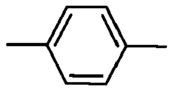, 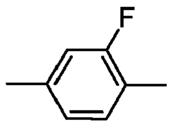

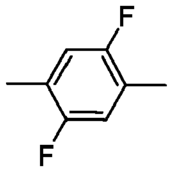 or 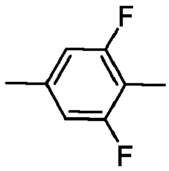 ,

more preferably

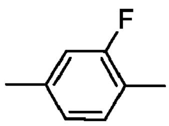 or 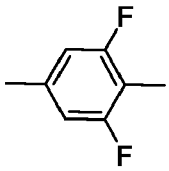 ;

$R^3$ denotes H, unfluorinated alkyl or unfluorinated alkoxy having 1 to 17, preferably 3 to 10 C atoms, or unfluorinated alkenyl, unfluorinated alkenyloxy or unfluorinated alkoxyalkyl having 2 to 15, preferably 3 to 10, C atoms, in which one or more $CH_2$-groups may be replaced by

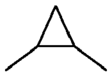, 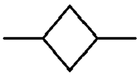, 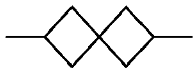, 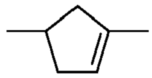 or 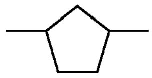,

preferably unfluorinated alkyl or unfluorinated alkenyl,

one of $Z^{31}$ and $Z^{32}$, preferably $Z^{32}$; denotes *trans*-CH=CH-, *trans*-CF=CF- or -C≡C- and the other one, independently thereof, denotes -C=C-, *trans*-CH=CH-, *trans*-CF=CF- or a single bond, preferably one of them, preferably $Z^{32}$; denotes -C=C- or *trans*-CH=CH- and the other denotes a single bond, and

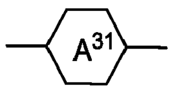

to

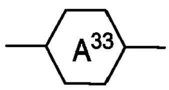,

independently of one another, denote

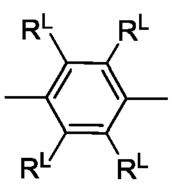, 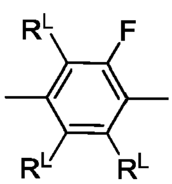, 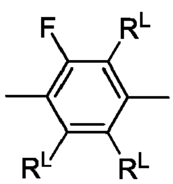,

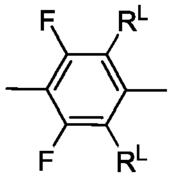, 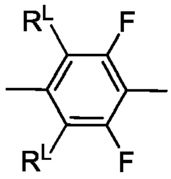, 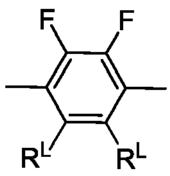

or,

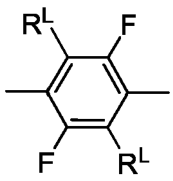,

in which $R^L$, on each occurrence, identically or differently, denotes H or alkyl having 1 to 6 C atoms, preferably H, methyl or ethyl, particularly preferably H, and wherein

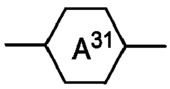

alternatively denotes

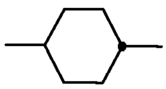, 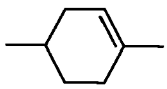 or 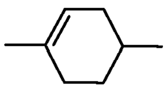,

preferably

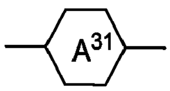

to

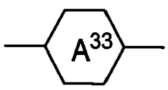,

independently of one another, denote

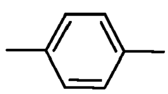, 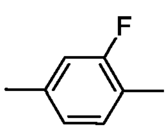, 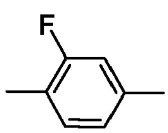,

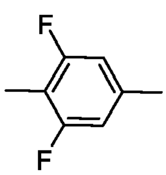, 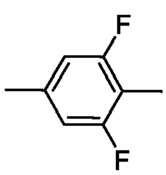, 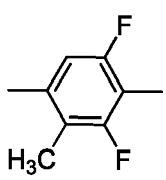, 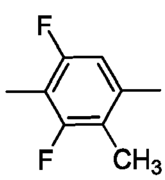

or

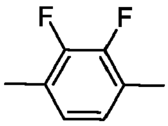,

more preferably

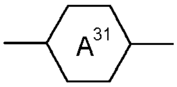

denotes

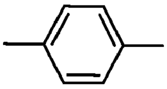 or 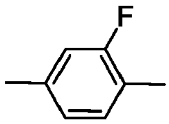,

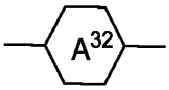

denotes

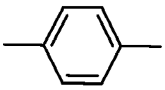, 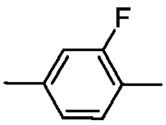 or 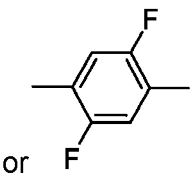

in particular

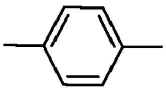 or 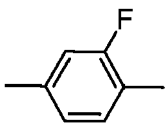,

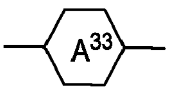

denotes

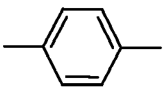, 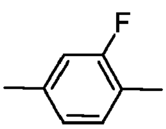 or 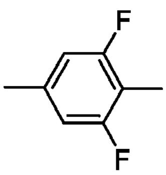,

in particular

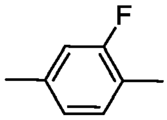 or 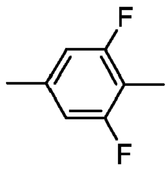 .

In the compounds of the formulae I, II and III, $R^L$ preferably denotes H.

In another preferred embodiment, in the compounds of formulae I, II and III, one or two groups $R^L$ , preferably one group $R^L$ is different from H.

In a preferred embodiment of the present invention, the compounds of formula I are selected from the group of compounds of the formulae I-1 to I-5:

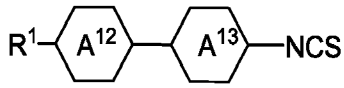

I-1

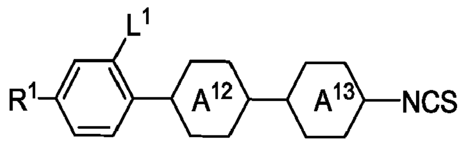

I-2

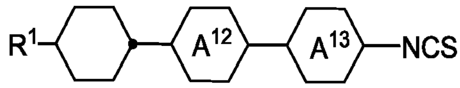

I-3

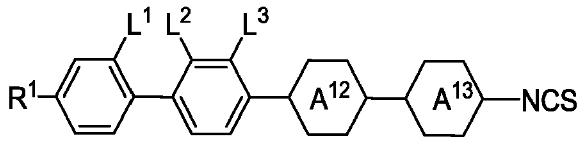

I-4

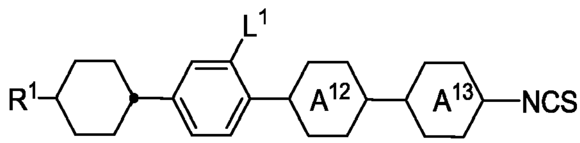

I-5

in which

$L^1$, $L^2$ and $L^3$ on each occurrence, identically or differently, denote H or F, and the other groups have the respective meanings indicated above for formula I and

preferably

$R^1$ denotes unfluorinated alkyl having 1 to 7 C atoms or unfluorinated alkenyl having 2 to 7 C atoms.

The media preferably comprise one or more compounds of formula I-1, which are preferably selected from the group of the compounds of the formulae I-1a to I-1d, preferably of formula I-1b:

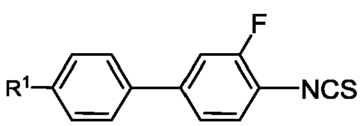

I-1a

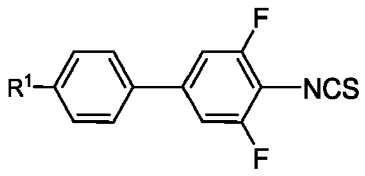

I-1b

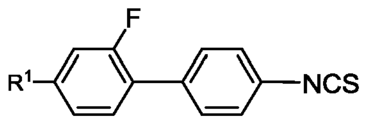

I-1c

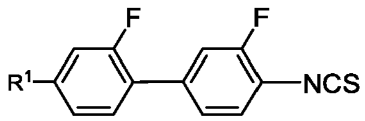

I-1d

in which $R^1$ has the meaning indicated above for formula I and preferably denotes unfluorinated alkyl having 1 to 7 C atoms or unfluorinated alkenyl having 2 to 7 C atoms.

The media preferably comprise one or more compounds of formula I-2, which are preferably selected from the group of the compounds of the formulae I-2a to I-2e, preferably of formula I-2c:

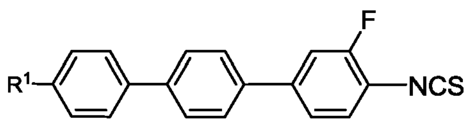

I-2a

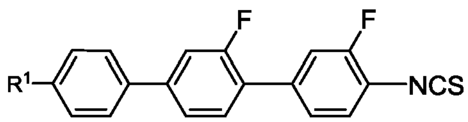

I-2b

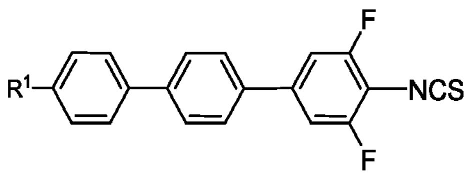

I-2c

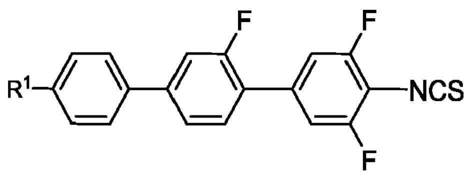

I-2d

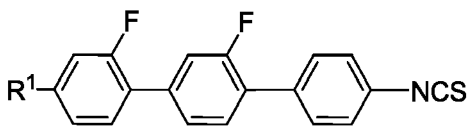

I-2e

in which $R^1$ has the meaning indicated above for formula I and preferably denotes unfluorinated alkyl having 1 to 7 C atoms or unfluorinated alkenyl having 2 to 7 C atoms.

The media preferably comprise one or more compounds of formula I-3, which are preferably selected from the group of the compounds of the formulae I-3a to I-3d , particularly preferably of formula I-3b:

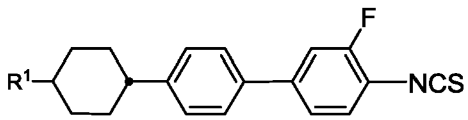

I-3a

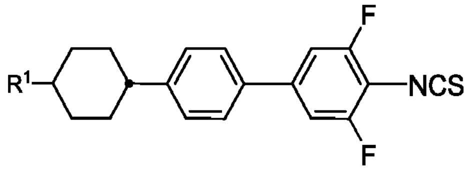

I-3b

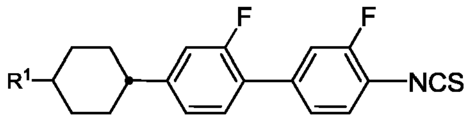

I-3c

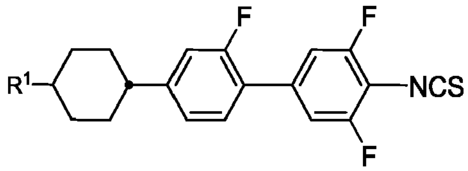

I-3d

in which $R^1$ has the meaning indicated above for formula I and preferably denotes unfluorinated alkyl having 1 to 7 C atoms or unfluorinated alkenyl having 2 to 7 C atoms.

The media preferably comprise one or more compounds of formula I-4, which are preferably selected from the group of the compounds of the formulae I-4a to I-4e, particularly preferably of formula I-4b:

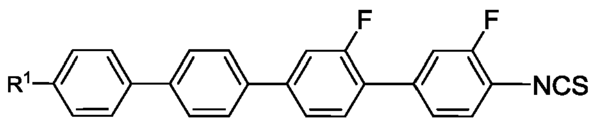

I-4a

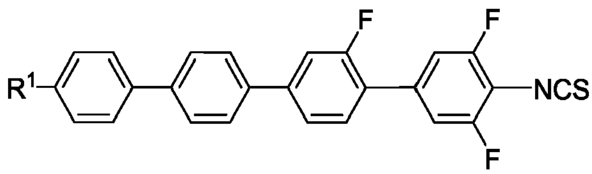

I-4b

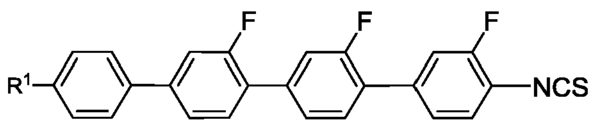

I-4c

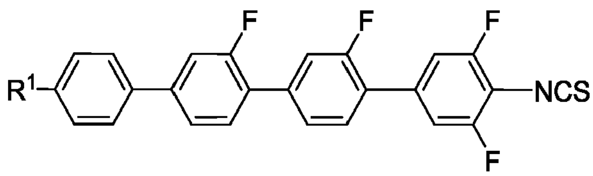

I-4d

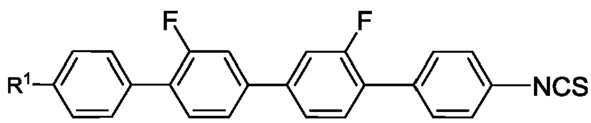

I-4e

in which $R^1$ has the meaning indicated above for formula I and preferably denotes unfluorinated alkyl having 1 to 7 C atoms or unfluorinated alkenyl having 2 to 7 C atoms.

The media preferably comprise one or more compounds of formula I-5, which are preferably selected from the group of the compounds of the formulae I-5a to I-5d, particularly preferably of formula I-5b:

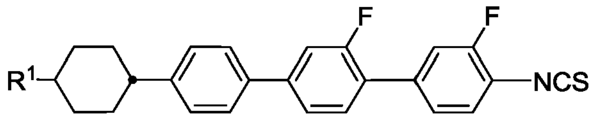

I-5a

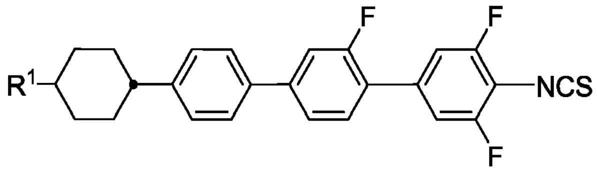

I-5b

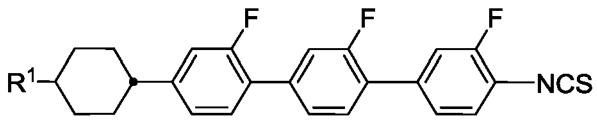

I-5c

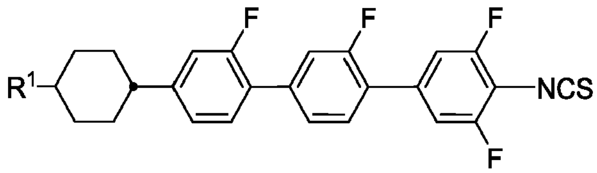

I-5d

in which $R^1$ has the meaning indicated above for formula I and preferably denotes unfluorinated alkyl having 1 to 7 C atoms or unfluorinated alkenyl having 2 to 7 C atoms.

The media preferably comprise one or more compounds of formula II, which are preferably selected from the group of the compounds of the formulae II-1 to II-3, preferably selected from the group of the compounds of the formulae II-1 and II-2:

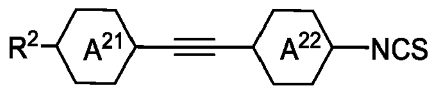

II-1

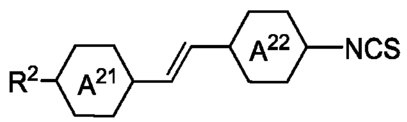

II-2

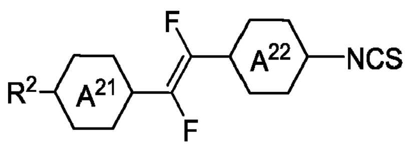

II-3

in which the occurring groups have the meanings given under formula II above and preferably

$R^2$ denotes H, unfluorinated alkyl or alkoxy having 1 to 7 C atoms or unfluorinated alkenyl having 2 to 7 C atoms, and one of

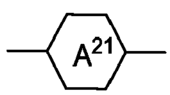

and

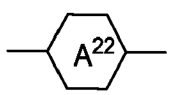

denotes

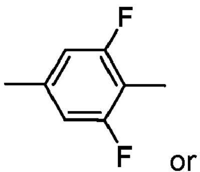 or 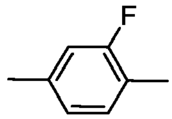,

and the other, independently denotes

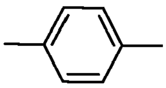, 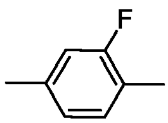, 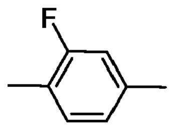,

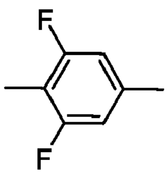, 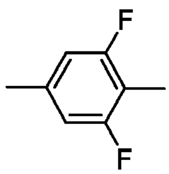, 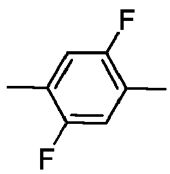

or

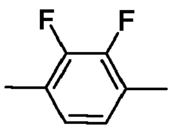,

preferably

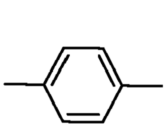, 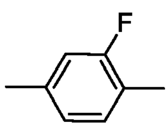, 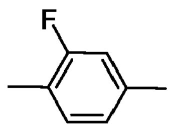,

most preferably

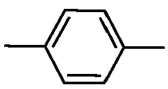,

and preferably
$R^2$ denotes $C_nH_{2n+1}$ or $CH_2$=CH-$(CH_2)_z$, and
n denotes an integer in the range from 0 to 15, preferably in the range from 1 to 7 and particularly preferably 1 to 5, and
z denotes 0, 1, 2, 3 or 4, preferably 0 or 2.

The compounds of formula II-1 are preferably selected from the group of the compounds of the formulae II-1a to II-1e:

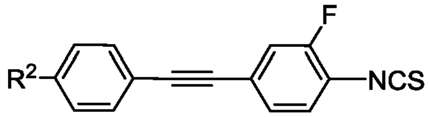

II-1a

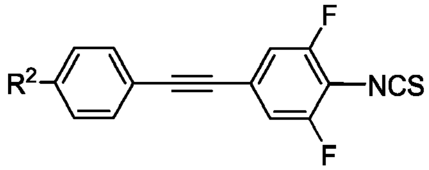

II-1b

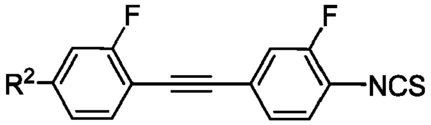

II-1c

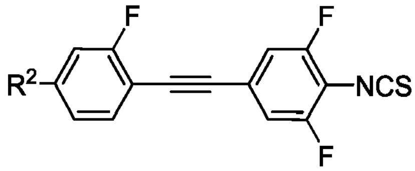

II-1d

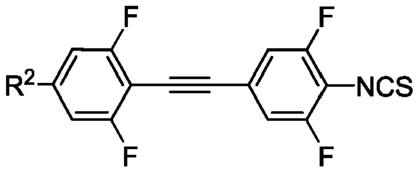

II-1e

in which

$R^2$ has the meaning indicated above and preferably denotes $C_nH_{2n+1}$ or $CH_2=CH-(CH_2)_z$, and

n independently of one another, denote an integer in the range from 0 to 15, preferably in the range from 1 to 7 and particularly preferably 1 to 5, and

z denotes 0, 1, 2, 3 or 4, preferably 0 or 2.

The compounds of formula II-2 are preferably selected from the group of the compounds of the formulae II-2a and II-2b:

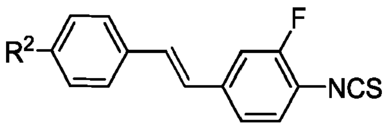

II-2a

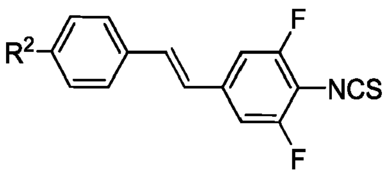

II-2b

in which

$R^2$ has the meaning indicated above and preferably denotes $C_nH_{2n+1}$ or $CH_2=CH-(CH_2)_z$,

n denotes an integer in the range from 0 to 15, preferably in the range from 1 to 7 and particularly preferably 1 to 5, and
z denotes 0, 1, 2, 3 or 4, preferably 0 or 2.

The compounds of formula II-3 are preferably selected from the group of the compounds of the of formulae II-3a to II-3d:

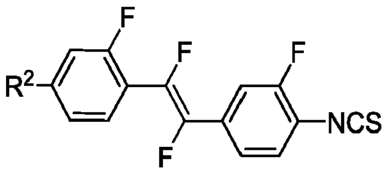

II-3a

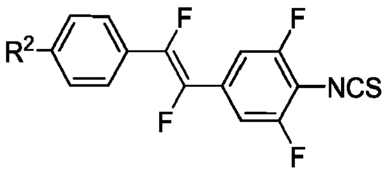

II-3b

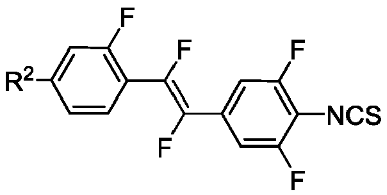

II-3c

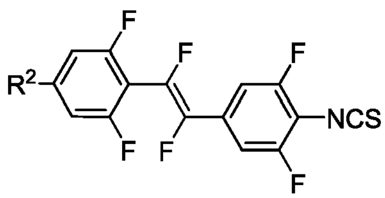

II-3d

in which

$R^2$ has the meaning indicated above and preferably denotes $C_nH_{2n+1}$ or $CH_2=CH-(CH_2)_z$,
n denotes an integer in the range from 0 to 15, preferably in the range from 1 to 7 and particularly preferably 1 to 5, and
z denotes 0, 1, 2, 3 or 4, preferably 0 or 2.

The compounds of formula III are preferably selected from the group of the compounds of the formulae III-1 to III-6, more preferably of the formulae selected from the group of the compounds of the formulae III-1, III-2, III-3 and III-4, and particularly preferably of formula III-1:

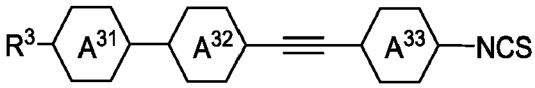

III-1

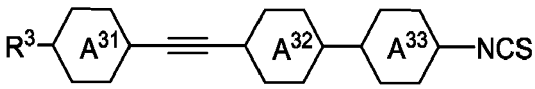

III-2

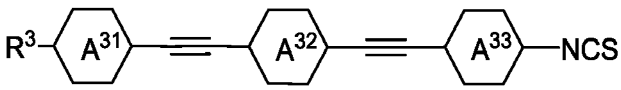

III-3

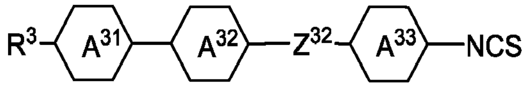

III-4

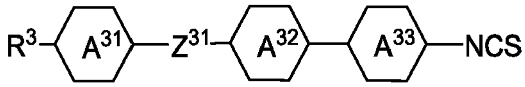

III-5

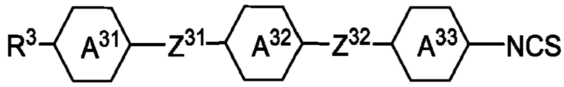

III-6

in which

$Z^{31}$ and $Z^{32}$ independently of one another denote *trans*-CH=CH- or *trans*-CF=CF-, preferably *trans*-CH=CH-, and in formula III-6 alternatively one of $Z^{31}$ and $Z^{32}$ may denote -C≡C- and the other groups have the meaning given above under formula III, and preferably

$R^3$ denotes H, unfluorinated alkyl or alkoxy having 1 to 7 C atoms or unfluorinated alkenyl having 2 to 7 C atoms,

and one of

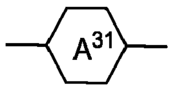

to

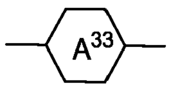

,

preferably

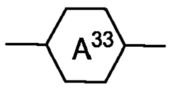

,

denotes

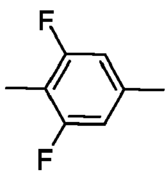

,

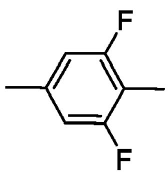

,

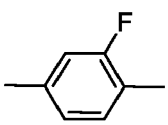

or

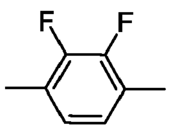

,

preferably

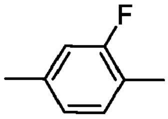 or 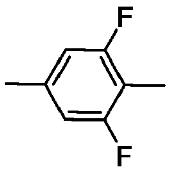 ,

and the others, independently of one another, denote

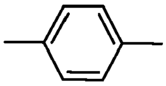 , 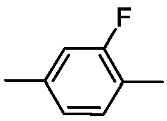 , 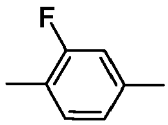 ,

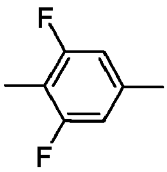 , 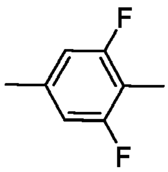 , 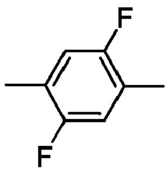

or

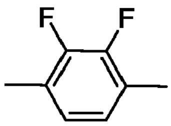 ,

preferably

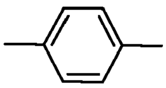 , 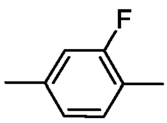 , 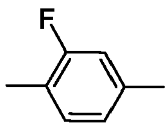 ,

or

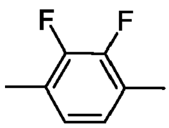 ,

more preferably

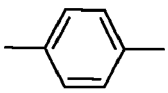 or 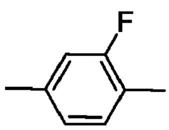 ,

where

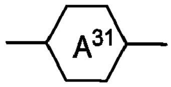

alternatively denotes

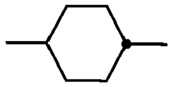

and preferably

$R^3$ denotes $C_nH_{2n+1}$ or $CH_2$=CH-$(CH_2)_z$,

n denotes an integer in the range from 0 to 15, preferably in the range from 1 to 7 and particularly preferably 1 to 5, and

z denotes 0, 1, 2, 3 or 4, preferably 0 or 2.

The compounds of formula III-1 are preferably selected from the group of the compounds of the formulae III-1a to III-1k, more preferably selected from the group of the compounds of the formulae III-1a, III-1b, III-1g and III-1h, particularly preferably of formula III-1b and/or III-1h:

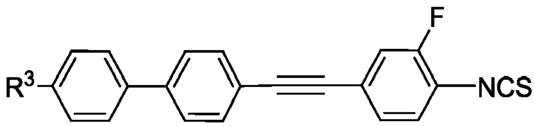

III-1a

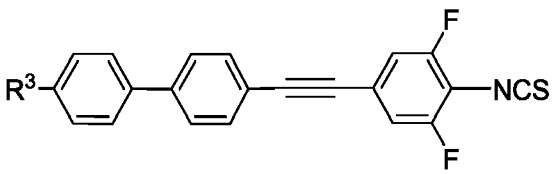

III-1b

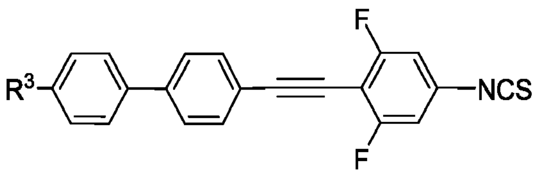

III-1c

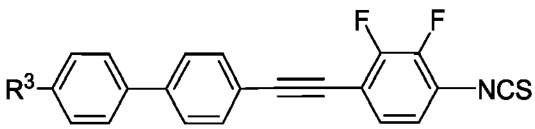

III-1d

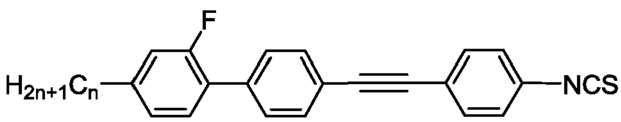

III-1e

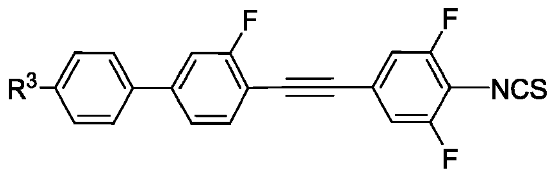

III-1f

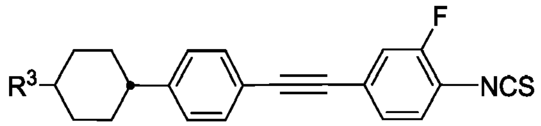

III-1g

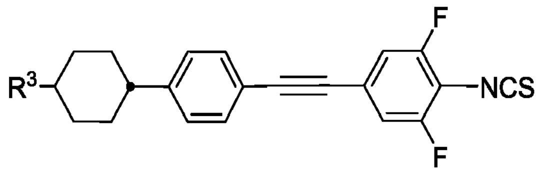

III-1h

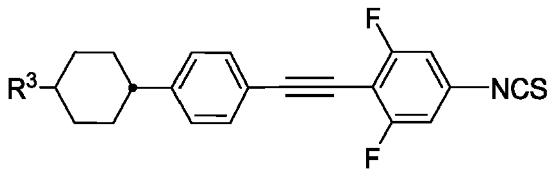

III-1i

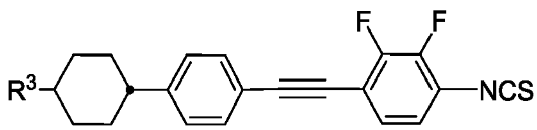

III-1j

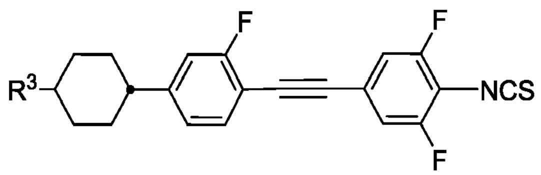

III-1k

in which

$R^3$ has the meaning indicated above and preferably denotes $C_nH_{2n+1}$ or $CH_2=CH-(CH_2)_z$,
n denotes an integer in the range from 0 to 15, preferably in the range from 1 to 7 and particularly preferably 1 to 5, and
z denotes 0, 1, 2, 3 or 4, preferably 0 or 2.

The compounds of formula III-2 are preferably compounds of formula III-2a to III-2l, very preferably III-2b and/or III-2j:

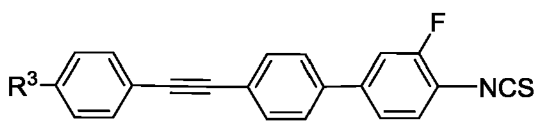

III-2a

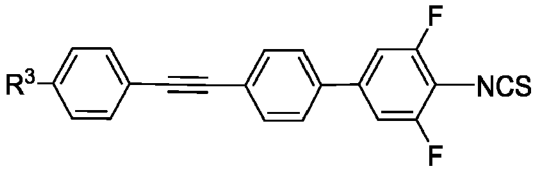

III-2b

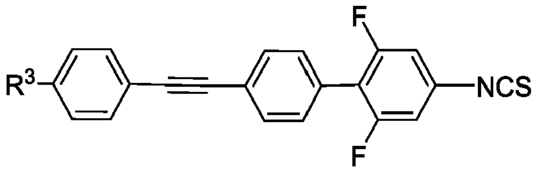

III-2c

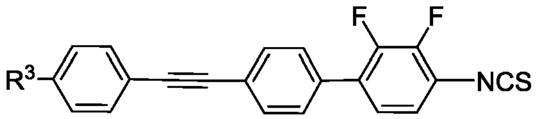

III-2d

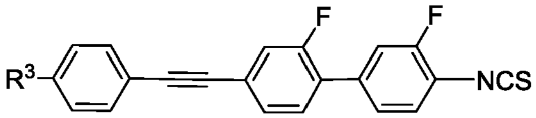

III-2e

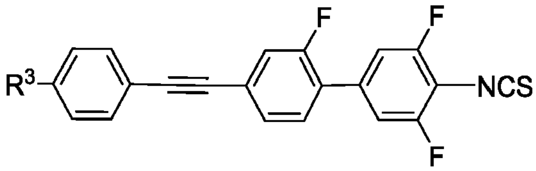

III-2f

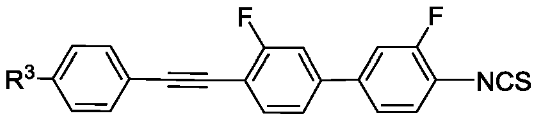

III-2g

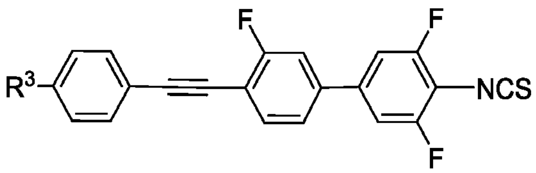

III-2h

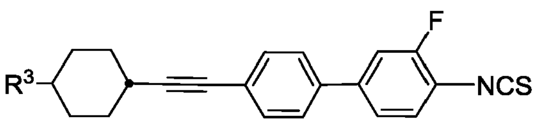

III-2i

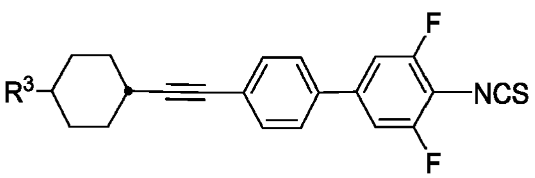

III-2j

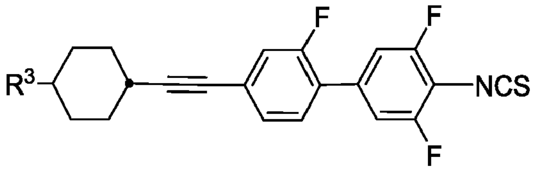

III-2k

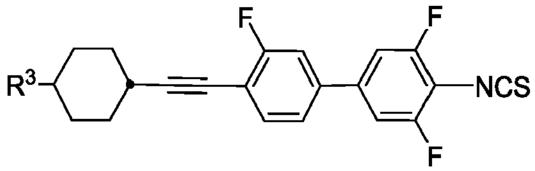

III-2l

in which

$R^3$ has the meaning indicated above and preferably denotes $C_nH_{2n+1}$ or $CH_2=CH-(CH_2)_z$,
n denotes an integer in the range from 0 to 15, preferably in the range from 1 to 7 and particularly preferably 1 to 5, and
z denotes 0, 1, 2, 3 or 4, preferably 0 or 2.

The compounds of formula III-5 are preferably selected from the compounds of formula III-5a:

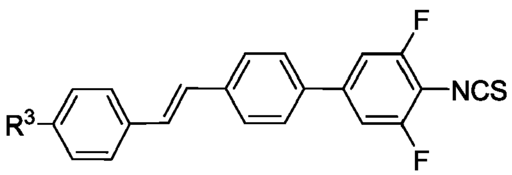

III-5a

$R^3$ has the meaning indicated above for formula III-5 and preferably denotes $C_nH_{2n+1}$, in which
n denotes an integer in the range from 0 to 7, preferably in the range from 1 to 5.

Additionally, the liquid-crystalline media according to the present invention in a certain embodiment, which may be the same or different from the previous preferred embodiments preferably comprise one or more compounds of formula IV,

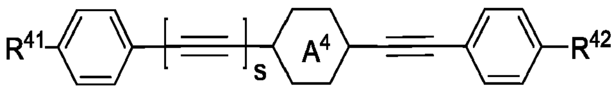

IV

in which

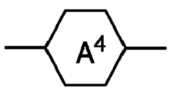

denotes

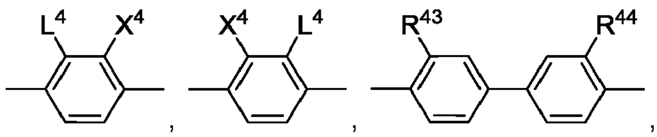

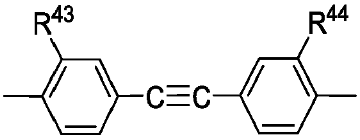 or 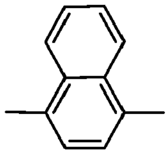,

s is 0 or 1, preferably 1, and

preferably

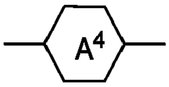

denotes

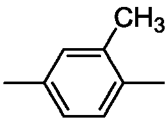, 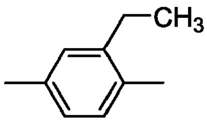, 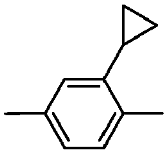,

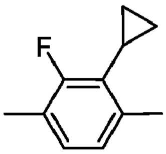, 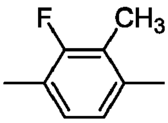, 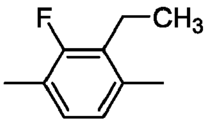,

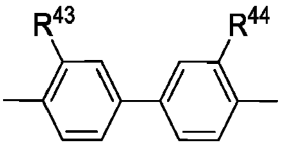, 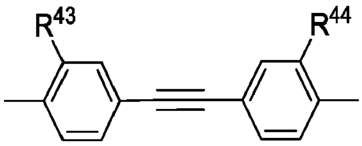,

or

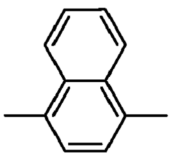;

particularly preferably

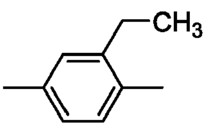, 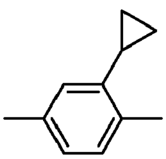, 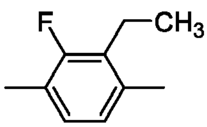,

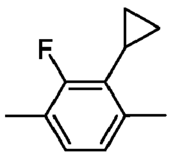 or 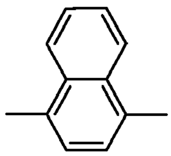 ,

$L^4$ denotes H or alkyl having 1 to 6 C atoms, cycloalkyl having 3 to 6 C atoms or cycloalkenyl having 4 to 6 C atoms, preferably $CH_3$, $C_2H_5$, $n$-$C_3H_7$, $i$-$C_3H_7$, cyclopropyl, cyclobutyl, cyclohexyl, cyclopent-1-enyl or cyclohex-1-enyl, and particularly preferably $CH_3$, $C_2H_5$, cyclopropyl or cyclobutyl,

$X^4$ denotes H, alkyl having 1 to 3 C atoms or halogen, preferably H, F or Cl, more preferably H or F and very particularly preferably F,

$R^{41}$ to $R^{44}$, independently of one another, denote unfluorinated alkyl or unfluorinated alkoxy, each having 1 to 15 C atoms, unfluorinated alkenyl, unfluorinated alkenyloxy or unfluorinated alkoxyalkyl, each having 2 to 15 C atoms, or cycloalkyl, alkylcycloalkyl, cycloalkenyl, alkylcycloalkenyl, alkylcycloalkylalkyl or alkylcycloalkenylalkyl, each having up to 15 C atoms, and alternatively one of $R^{43}$ and $R^{44}$ or both also denote H,

preferably

$R^{41}$ and $R^{42}$, independently of one another, denote unfluorinated alkyl or unfluorinated alkoxy, each having 1 to 7 C atoms, or unfluorinated alkenyl, unfluorinated alkenyloxy or unfluorinated alkoxyalkyl, each having 2 to 7 C atoms,

particularly preferably

$R^{41}$ denotes unfluorinated alkyl having 1 to 7 C atoms or unfluorinated alkenyl, unfluorinated alkenyloxy or unfluorinated alkoxyalkyl, each having 2 to 7 C atoms, and

particularly preferably

$R^{42}$ denotes unfluorinated alkyl or unfluorinated alkoxy, each having 1 to 7 C atoms, and

preferably

$R^{43}$ and $R^{44}$ denote H, unfluorinated alkyl having 1 to 5 C atoms, unfluorinated cycloalkyl or cycloalkenyl having 3 to 7 C atoms, unfluorinated alkylcyclohexyl or unfluorinated cyclohexylalkyl, each having 4 to 12 C atoms, or unfluorinated alkylcyclohexylalkyl having 5 to 15 C atoms, particularly preferably cyclopropyl, cyclobutyl or cyclohexyl, and very particularly preferably at least one of $R^{43}$ and $R^{44}$ denotes $n$-alkyl, particularly preferably methyl, ethyl or $n$-propyl, and the other denotes H or $n$-alkyl, particularly preferably H, methyl, ethyl or $n$-propyl.

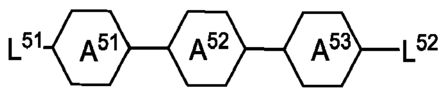 V

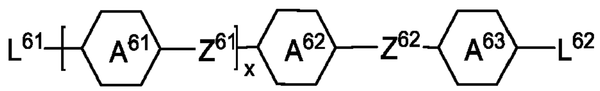 VI

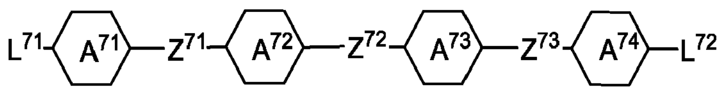 VII

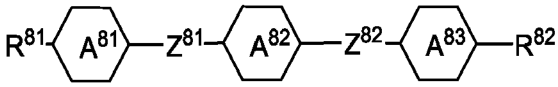

VIII

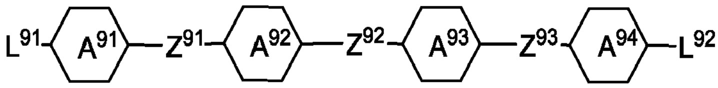

IX

in which

L$^{51}$ denotes R$^{51}$ or X$^{51}$,

L$^{52}$ denotes R$^{52}$ or X$^{52}$,

R$^{51}$ and R$^{52}$, independently of one another, denote H, unfluorinated alkyl or unfluorinated alkoxy having 1 to 17, preferably 3 to 10, C atoms or unfluorinated alkenyl, unfluorinated alkenyloxy or unfluorinated alkoxyalkyl having 2 to 15, preferably 3 to 10, C atoms, preferably alkyl or unfluorinated alkenyl,

X$^{51}$ and X$^{52}$, independently of one another, denote H, F, Cl, -CN, $SF_5$, fluorinated alkyl or fluorinated alkoxy having 1 to 7 C atoms or fluorinated alkenyl, fluorinated alkenyloxy or fluorinated alkoxyalkyl having 2 to 7 C atoms, preferably fluorinated alkoxy, fluorinated alkenyloxy, F or Cl, and

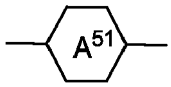

to

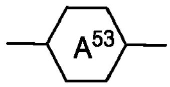

,

independently of one another, denote

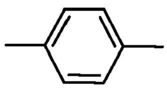

,

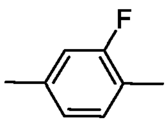

,

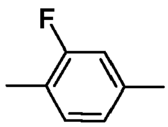

,

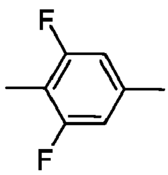

,

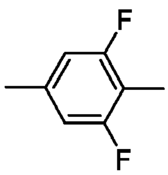

,

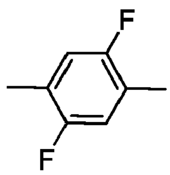

or

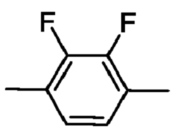

,

preferably

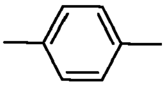, 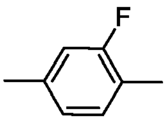, 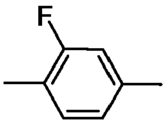,

or

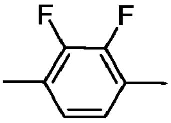,

$L^{61}$ denotes $R^{61}$ and, in the case where $Z^{61}$ and/or $Z^{62}$ denote *trans*-CH=CH- or *trans*-CF=CF-, alternatively also denotes $X^{61}$,

$L^{62}$ denotes $R^{62}$ and, in the case where $Z^{61}$ and/or $Z^{62}$ denote *trans*-CH=CH- or *trans*-CF=CF-, alternatively also denotes $X^{62}$,

$R^{61}$ and $R^{62}$, independently of one another, denote H, unfluorinated alkyl or unfluorinated alkoxy having 1 to 17, preferably 3 to 10, C atoms or unfluorinated alkenyl, unfluorinated alkenyloxy or unfluorinated alkoxyalkyl having 2 to 15, preferably 3 to 10, C atoms, preferably alkyl or unfluorinated alkenyl,

$X^{61}$ and $X^{62}$, independently of one another, denote F or Cl, -CN, $SF_5$, fluorinated alkyl or alkoxy having 1 to 7 C atoms or fluorinated alkenyl, alkenyloxy or alkoxyalkyl having 2 to 7 C atoms,

one of $Z^{61}$ and $Z^{62}$ denotes *trans*-CH=CH-, *trans*-CF=CF- or -C≡C- and the other, independently thereof, denotes *trans*-CH=CH-, *trans*-CF=CF- or a single bond, preferably one of them denotes -C=C- or *trans*-CH=CH-and the other denotes a single bond, and

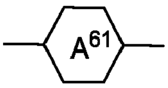

to

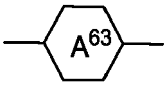,

independently of one another, denote

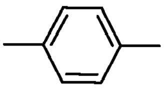, 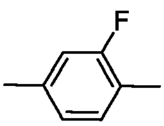, 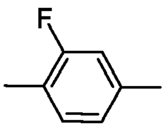,

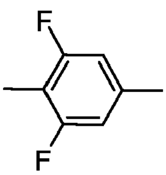, 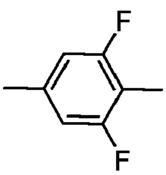, 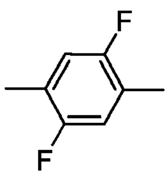,

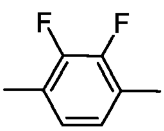, 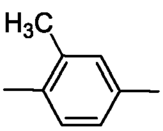, or 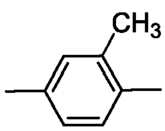,

preferably

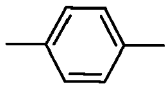, 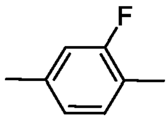, 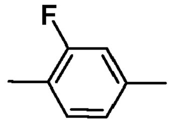,

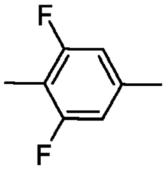, 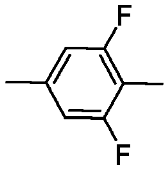, or 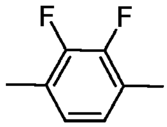;

and

x denotes 0 or 1;

$L^{71}$ denotes $R^{71}$ or $X^{71}$,

$L^{72}$ denotes $R^{72}$ or $X^{72}$,

$R^{71}$ and $R^{72}$, independently of one another, denote H, unfluorinated alkyl or unfluorinated alkoxy having 1 to 17, preferably 3 to 10, C atoms or unfluorinated alkenyl, unfluorinated alkenyloxy or unfluorinated alkoxyalkyl having 2 to 15, preferably 3 to 10, C atoms, preferably alkyl or unfluorinated alkenyl,

$X^{71}$ and $X^{72}$, independently of one another, denote H, F, Cl, -CN, -NCS, $-SF_5$, fluorinated alkyl or fluorinated alkoxy having 1 to 7 C atoms or fluorinated alkenyl, unfluorinated or fluorinated alkenyloxy or unfluorinated or fluorinated alkoxyalkyl having 2 to 7 C atoms, preferably fluorinated alkoxy, fluorinated alkenyloxy, F or Cl, and

$Z^{71}$ to $Z^{73}$, independently of one another, denote *trans*-CH=CH-, *trans*-CF=CF-,-C=C- or a single bond, preferably one or more of them denote a single bond, particularly preferably all denote a single bond and

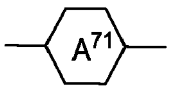

to

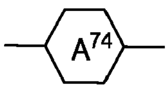,

independently of one another, denote

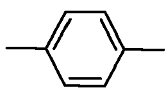, 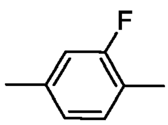, 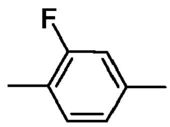,

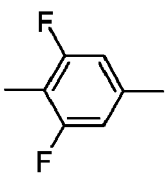, 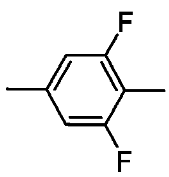, 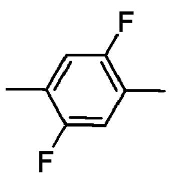

or

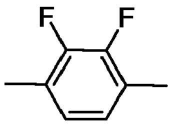,

preferably

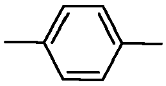, 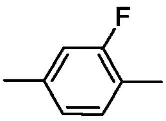, 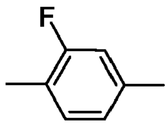,

or

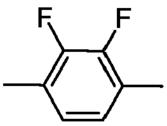,

R$^{81}$ and R$^{82}$, independently of one another, denote H, unfluorinated alkyl or alkoxy having 1 to 15, preferably 3 to 10, C atoms or unfluorinated alkenyl, alkenyloxy or alkoxyalkyl having 2 to 15, preferably 3 to 10, C atoms, preferably unfluorinated alkyl or alkenyl,

one of Z$^{81}$ and Z$^{82}$ denotes *trans*-CH=CH-, *trans*-CF=CF- or -C≡C- and the other, independently thereof, denotes *trans*-CH=CH-, *trans*-CF=CF- or a single bond, preferably one of them denotes -C=C- or *trans*-CH=CH-and the other denotes a single bond, and

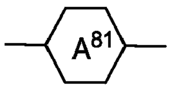

denotes

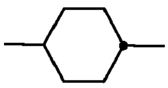,

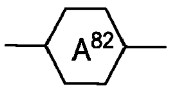

and

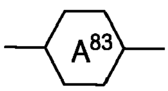,

independently of one another, denote

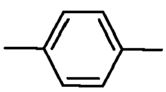, 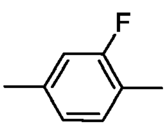, 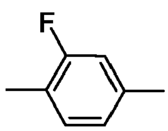,

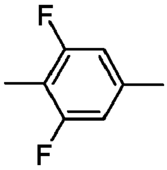, 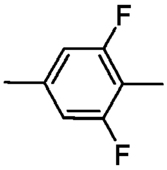, 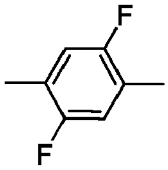

or

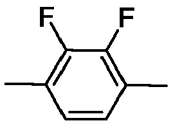,

| | | |
|---|---|---|
| $L^{91}$ | denotes $R^{91}$ or $X^{91}$, |
| $L^{92}$ | denotes $R^{92}$ or $X^{92}$, |
| $R^{91}$ and $R^{92}$, | independently of one another, denote H, unfluorinated alkyl or alkoxy having 1 to 15, preferably 3 to 10, C atoms or unfluorinated alkenyl, alkenyloxy or alkoxyalkyl having 2 to 15, preferably 3 to 10, C atoms, preferably unfluorinated alkyl or alkenyl, |
| $X^{91}$ and $X^{92}$, | independently of one another, denote H, F, Cl, -CN, -NCS, $-SF_5$, fluorinated alkyl or fluorinated alkoxy having 1 to 7 C atoms or fluorinated alkenyl, unfluorinated or fluorinated alkenyloxy or unfluorinated or fluorinated alkoxyalkyl having 2 to 7 C atoms, preferably fluorinated alkoxy, fluorinated alkenyloxy, F or Cl, and |
| $Z^{91}$ to $Z^{93}$, | independently of one another, denote *trans*-CH=CH-, *trans*-CF=CF-,-C=C- or a single bond, preferably one or more of them denotes a single bond, and particularly preferably all denote a single bond, |

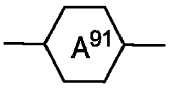

denotes

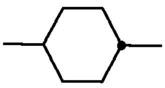, 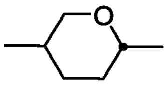

or

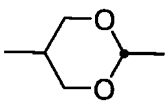,

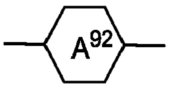

to

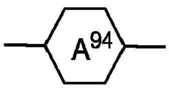

independently of one another, denote

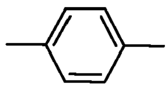, 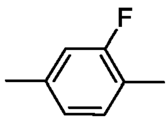, 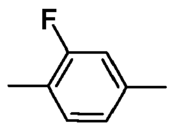,

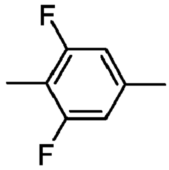, 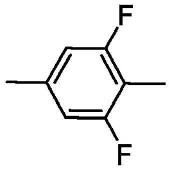, 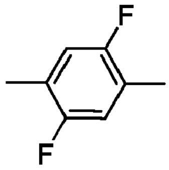

or

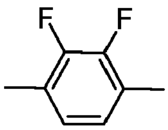.

In a preferred embodiment of the present invention, the liquid-crystal medium comprises one or more compounds of the formula V, preferably selected from the group of the compounds of the formulae V-1 to V-3, preferably of the formulae V-1 and/or V-2 and/or V-3, preferably of the formulae V-1 and V-2:

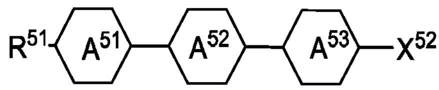

V-1

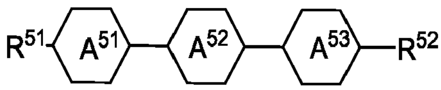

V-2

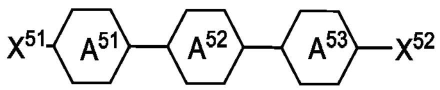

V-3

in which the occurring groups have the respective meanings indicated above for formula V and preferably

| | |
|---|---|
| $R^{51}$ | denotes unfluorinated alkyl having 1 to 7 C atoms or unfluorinated alkenyl having 2 to 7 C atoms, |
| $R^{52}$ | denotes unfluorinated alkyl having 1 to 7 C atoms or unfluorinated alkenyl having 2 to 7 C atoms or unfluorinated alkoxy having 1 to 7 C atoms, |
| $X^{51}$ and $X^{52}$, | independently of one another, denote F, Cl, $-OCF_3$, $-CF_3$, -CN or $-SF_5$, preferably F, Cl, $-OCF_3$ or -CN. |

The compounds of the formula V-1 are preferably selected from the group of the compounds of the formulae V-1a to V-1d, preferably V-1c and V-1d :

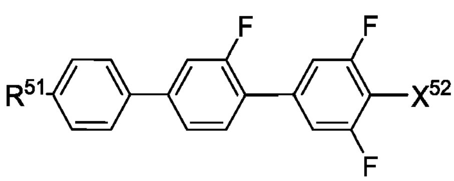

V-1a

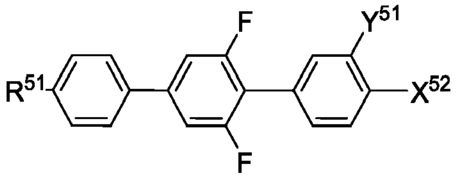

V-1b

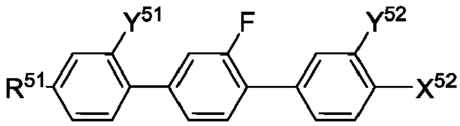

V-1c

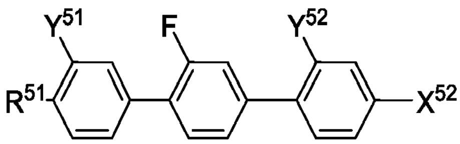

V-1d

in which the parameters have the respective meanings indicated above for formula V-1 and in which

$Y^{51}$ and $Y^{52}$, in each case independently of one another, denote H or F, and preferably
$R^{51}$ denotes alkyl or alkenyl, and
$X^{51}$ denotes F, Cl or $-OCF_3$.

The compounds of the formula V-2 are preferably selected from the group of the compounds of the formulae V-2a to V-2e and/or from the group of the compounds of the formulae V-2f and V-2g:

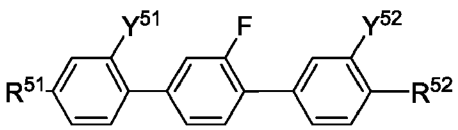

V-2a

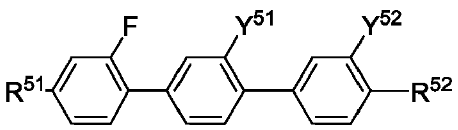

V-2b

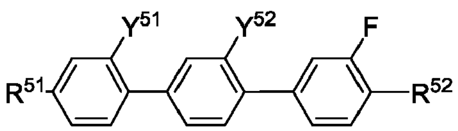

V-2c

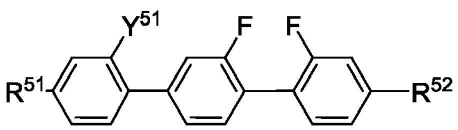

V-2d

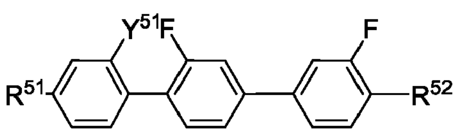

V-2e

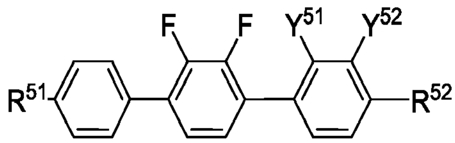

V-2f

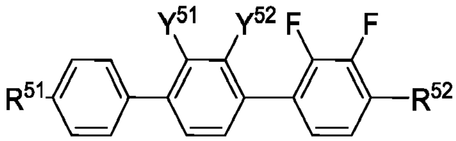

V-2g

where in each case the compounds of the formula V-2a are excluded from the compounds of the formulae V-2b and V-2c, the compounds of the formula V-2b are excluded from the compounds of the formula V-2c and the compounds of the formula V-2f are excluded from the compounds of the formula V-2g, and
in which the parameters have the respective meanings indicated above for formula V-1 and in which

$Y^{51}$ and $Y^{52}$, in each case independently of one another, denote H or F, and
preferably
$Y^{51}$ and $Y^{52}$ denotes H and the other denotes H or F, preferably likewise denotes H.

The compounds of the formula V-3 are preferably compounds of the formula V-3a:

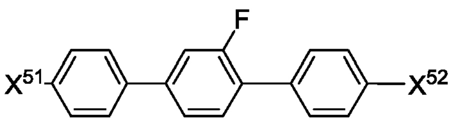

V-3a

in which the parameters have the respective meanings indicated above for formula V-1 and in which preferably

$X^{51}$ denotes F, Cl, preferably F,
$X^{52}$ denotes F, Cl or $-OCF_3$, preferably $-OCF_3$.

The compounds of the formula V-1a are preferably selected from the group of the compounds of the formulae V-1a-1 and V-1a-2:

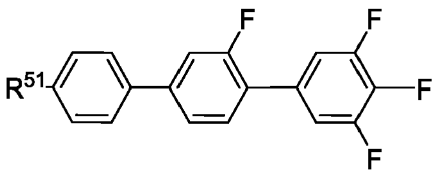

V-1a-1

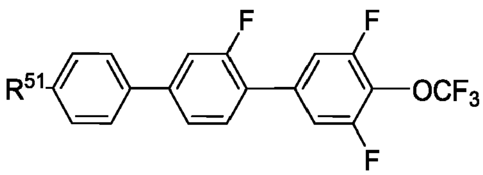

V-1a-2

in which

$R^{51}$ has the meaning indicated above and preferably denotes $C_nH_{2n+1}$, in which

n denotes an integer in the range from 1 to 7, preferably in the range from 1 to 6 and particularly preferably 3 to 5.

The compounds of the formula V-1b are preferably compounds of the formula V-1b-1:

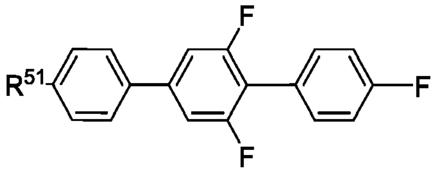

V-1b-1

in which

$R^{51}$ has the meaning indicated above and preferably denotes $C_nH_{2n+1}$, in which n denotes an integer in the range from 1 to 7, preferably in the range from 1 to 6 and particularly preferably 3 to 5.

The compounds of the formula V-1c are preferably selected from the group of the compounds of the formulae V-1c-1 to V-1c-4, particularly preferably selected from the group of the compounds of the formulae V-1c-1 and V-1c-2:

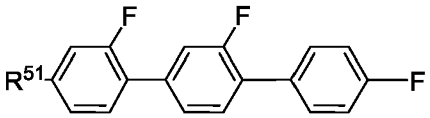

V-1c-1

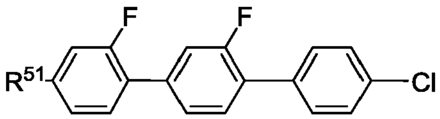

V-1c-2

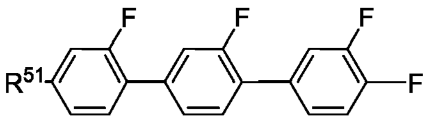

V-1c-3

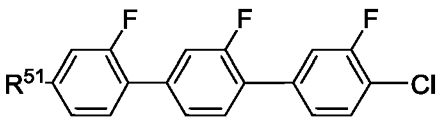

V-1c-4

in which

$R^{51}$ has the meaning indicated above and preferably denotes $C_nH_{2n+1}$, in which

n denotes an integer in the range from 1 to 7, preferably in the range from 1 to 6 and particularly preferably 3 to 5.

The compounds of the formula V-1d are preferably selected from the group of the compounds of the formulae V-1d-1 and V-1d-2, particularly preferably the compound of the formula V-1d-2:

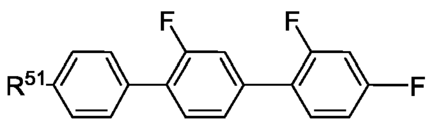

V-1d-1

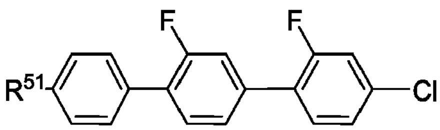

V-1d-2

in which

$R^{51}$ has the meaning indicated above and preferably denotes $C_nH_{2n+1}$, in which

n denotes an integer in the range from 1 to 7, preferably in the range from 1 to 6 and particularly preferably 3 to 5.

The compounds of the formula V-2a are preferably selected from the group of the compounds of the formulae V-2a-1 and V-2a-2, particularly preferably the compounds of the formula V-2a-1:

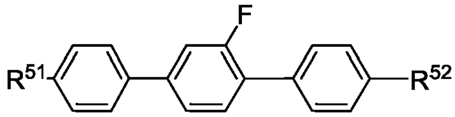

V-2a-1

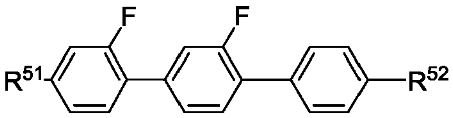

V-2a-2

in which

$R^{51}$ has the meaning indicated above and preferably denotes $C_nH_{2n+1}$ or $CH_2=CH-(CH_2)_z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 1 to 7, preferably in the range from 1 to 6 and particularly preferably 3 to 5, and

z denotes 0, 1, 2, 3 or 4, preferably 0 or 2.

Preferred combinations of $R^{51}$ with $R^{52}$, in particular in the case of formula V-2a-1, are ($C_nH_{2n+1}$ and $C_mH_{2m+1}$), ($C_nH_{2n+1}$ and $O-C_mH_{2m+1}$), ($CH_2=CH-(CH_2)_Z$ and $C_mH_{2m+1}$), ($CH_2=CH-(CH_2)_Z$ and $O-C_mH_{2m+1}$) and ($C_nH_{2n+1}$ and $(CH_2)_Z-CH=CH_2$).

Preferred compounds of the formula V-2b are the compounds of the formula V-2b-1:

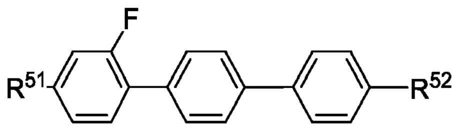

V-2b-1

in which

$R^{51}$ has the meaning indicated above and preferably denotes $C_nH_{2n+1}$ or $CH_2=CH-(CH_2)_z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 1 to 7, preferably in the range from 1 to 6 and particularly preferably 3 to 5, and

z denotes 0, 1, 2, 3 or 4, preferably 0 or 2.

The preferred combination of $R^{51}$ with $R^{52}$ here is, in particular, $C_nH_{2n+1}$ and $C_mH_{2m+1}$. Preferred compounds of the formula V-2c are the compounds of the formula V-2c-1:

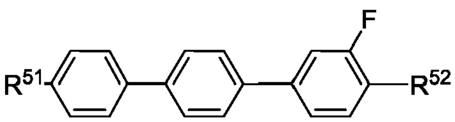

V-2c-1

in which

$R^{51}$ has the meaning indicated above and preferably denotes $C_nH_{2n+1}$ or $CH_2=CH-(CH_2)_z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 1 to 7, preferably in the range from 1 to 6 and particularly preferably 3 to 5, and

z denotes 0, 1, 2, 3 or 4, preferably 0 or 2.

The preferred combination of ($R^{51}$ and $R^{52}$) here is, in particular, ($C_nH_{2n+1}$ and $C_mH_{2m+1}$).

Preferred compounds of the formula V-2d are the compounds of the formula V-2d-1:

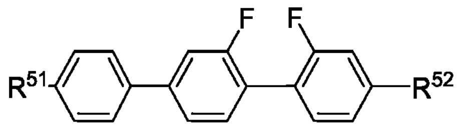

V-2d-1

in which

$R^{51}$ has the meaning indicated above and preferably denotes $C_nH_{2n+1}$ or $CH_2=CH-(CH_2)_z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 1 to 7, preferably in the range from 1 to 6 and particularly preferably 3 to 5, and

z denotes 0, 1, 2, 3 or 4, preferably 0 or 2.

The preferred combination of ($R^{51}$ and $R^{52}$) here is, in particular, ($C_nH_{2n+1}$ and $C_mH_{2m+1}$). Preferred compounds of the formula V-2e are the compounds of the formula V-2e-1:

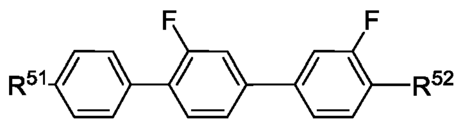

V-2e-1

in which

$R^{51}$ has the meaning indicated above and preferably denotes $C_nH_{2n+1}$ or $CH_2=CH-(CH_2)_z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 1 to 7, preferably in the range from 2 to 6 and particularly preferably 3 to 5, and

z denotes 0, 1, 2, 3 or 4, preferably 0 or 2.

The preferred combination of ($R^{51}$ and $R^{52}$) here is, in particular, ($C_nH_{2n+1}$ and $O-C_mH_{2m+1}$).

Preferred compounds of the formula V-2f are the compounds of the formula V-2f-1:

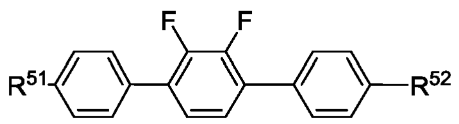

V-2f-1

in which

$R^{51}$ has the meaning indicated above and preferably denotes $C_nH_{2n+1}$ or $CH_2=CH-(CH_2)_Z$, and

$R^{52}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 1 to 7, preferably in the range from 2 to 6 and particularly preferably 3 to 5, and

z denotes 0, 1, 2, 3 or 4, preferably 0 or 2.

The preferred combinations of ($R^{51}$ and $R^{52}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).

Preferred compounds of the formula V-2g are the compounds of the formula V-2g-1:

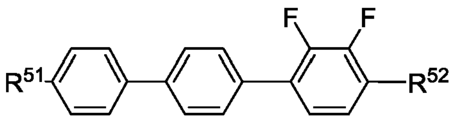

V-2g-1

in which

| | |
|---|---|
| $R^{51}$ | has the meaning indicated above and preferably denotes $C_nH_{2n+1}$ or $CH_2=CH-(CH_2)_z$, and |
| $R^{52}$ | has the meaning indicated above and preferably denotes $C_mH_{2m+1}$ or $O-C_mH_{2m+1}$ or $(CH_2)_Z-CH=CH_2$, and in which |
| n and m, | independently of one another, denote an integer in the range from 1 to 7, preferably in the range from 2 to 6 and particularly preferably 3 to 5, and |
| z | denotes 0, 1, 2, 3 or 4, preferably 0 or 2. |

The preferred combinations of ($R^{51}$ and $R^{52}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $O-C_mH_{2m+1}$).

The compounds of the formula VI are preferably selected from the group of the compounds of the formulae VI-1 to VI-5:

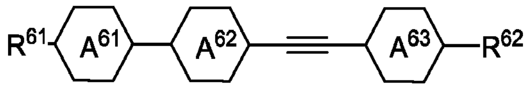

VI-1

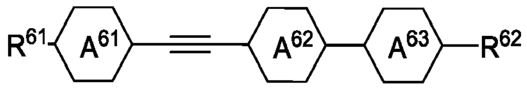

VI-2

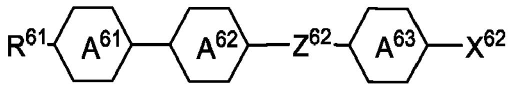

VI-3

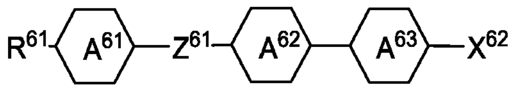

VI-4

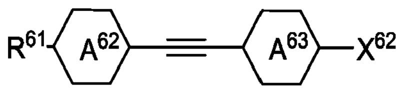

VI-5

in which

| | |
|---|---|
| $Z^{61}$ and $Z^{62}$ | denote -C≡C-, *trans*-CH=CH- or *trans*-CF=CF-, preferably -C≡C- or *trans*-CH=CH-, and the other occurring groups and parameters have the meaning given above under formula VI, |

and preferably

| | |
|---|---|
| $R^{61}$ and $R^{62}$, | independently of one another, denote H, unfluorinated alkyl or alkoxy having 1 to 7 C atoms or unfluorinated alkenyl having 2 to 7 C atoms, |
| $X^{62}$ | denotes F, Cl, $-OCF_3$ or -CN, |

The compounds of the formula VI-1 are preferably selected from the group of the compounds of the formulae VI-1a and VI-1b, more preferably selected from compounds of the formula VI-1a:

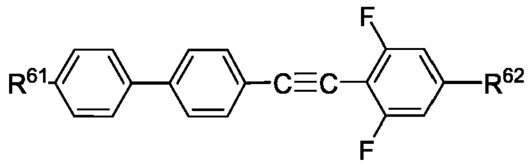

VI-1a

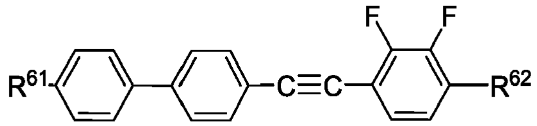

VI-1b

in which

| | |
|---|---|
| $R^{61}$ | has the meaning indicated above and preferably denotes $C_nH_{2n+1}$ or $CH_2$=CH-$(CH_2)_z$, and |
| $R^{62}$ | has the meaning indicated above and preferably denotes $C_mH_{2m+1}$ or O-$C_mH_{2m+1}$ or $(CH_2)_Z$-CH=$CH_2$, and in which |
| n and m, | independently of one another, denote an integer in the range from 1 to 7, preferably in the range from 2 to 6 and particularly preferably 3 to 5, and |
| z | denotes 0, 1, 2, 3 or 4, preferably 0 or 2. |

The preferred combinations of ($R^{61}$ and $R^{62}$) here are, in particular, ($C_nH_{2n+1}$ and $C_mH_{2m+1}$) and ($C_nH_{2n+1}$ and O-$C_mH_{2m+1}$), in the case of formula VI-1a particularly preferably ($C_nH_{2n+1}$ and $C_mH_{2m+1}$) and in the case of formula VI-1b particularly preferably ($C_nH_{2n+1}$ and O-$C_mH_{2m+1}$).

The compounds of the formula VI-3 are preferably selected from the compounds of the formula VI-3a to VI-3e:

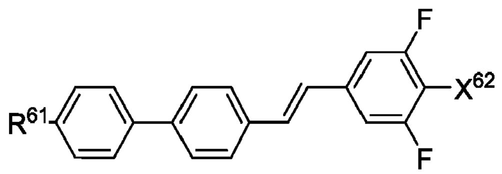

VI-3a

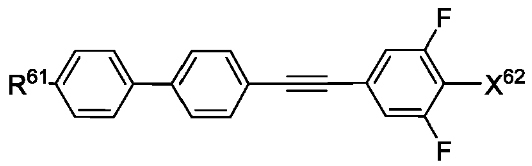

VI-3b

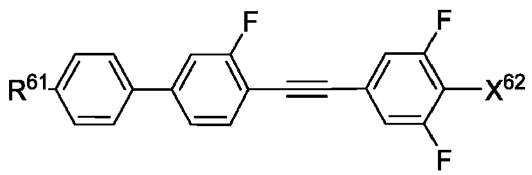

VI-3c

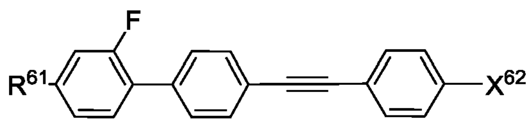

VI-3d

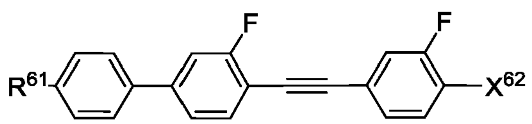

VI-3e

in which the parameters have the meaning given above under formula VI-3 and preferably

$R^{61}$ has the meaning indicated above and preferably denotes $C_nH_{2n+1}$, in which
n denotes an integer in the range from 1 to 7, preferably in the range from 1 to 5, and
$X^{62}$ denotes -F, -Cl, -$OCF_3$, or -CN.

The compounds of the formula VI-4 are preferably selected from compounds of the formulae VI-4a to VI-4e:

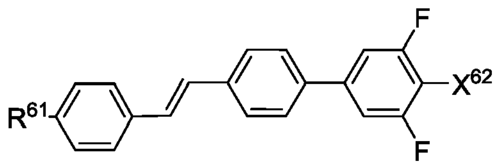

VI-4a

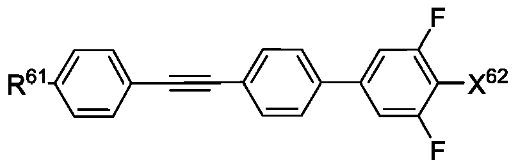

VI-4b

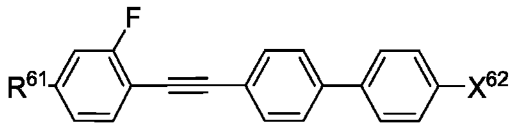

VI-4c

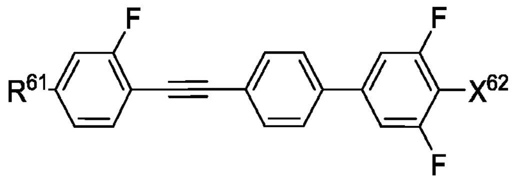

VI-4d

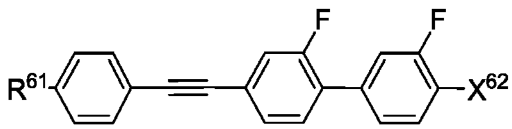

VI-4e

in which the parameters have the meaning given above under formula VI-4 and preferably

$R^{61}$ has the meaning indicated above and preferably denotes $C_nH_{2n+1}$, in which
n denotes an integer in the range from 1 to 7, preferably in the range from 1 to 5, and
$X^{62}$ denotes F, Cl, $OCF_3$, or -CN.

The compounds of the formula VI-5 are preferably selected from the compounds of the formulae VI-5a to VI-5d, preferably VI-5b:

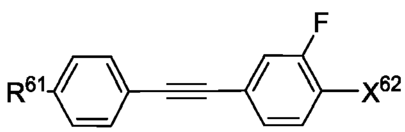

VI-5a

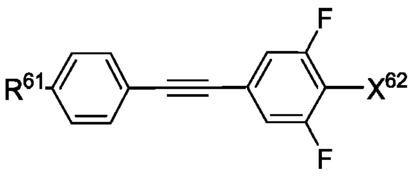

VI-5b

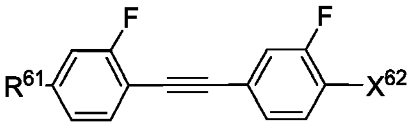

VI-5c

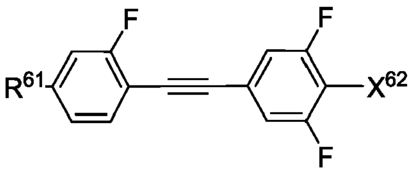

VI-5d

in which the parameters have the meaning given above under formula VI-5 and preferably

$R^{61}$ has the meaning indicated above and preferably denotes $C_nH_{2n+1}$, in which
n denotes an integer in the range from 1 to 7, preferably in the range from 1 to 5, and
$X^{62}$ denotes -F, -Cl, -$OCF_3$, or -CN, particularly preferably -$OCF_3$.

The compounds of the formula VII are preferably selected from the group of the compounds of the formulae VII-1 to VII-6:

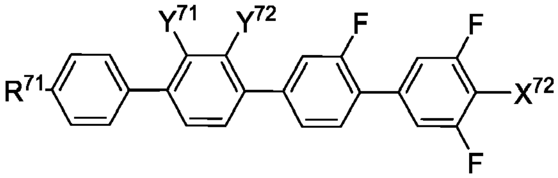

VII-1

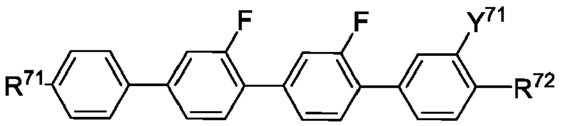

VII-2

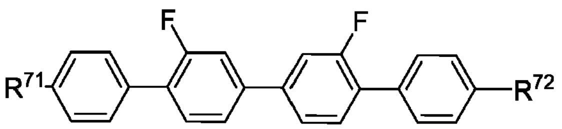

VII-3

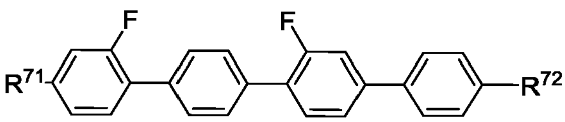

VII-4

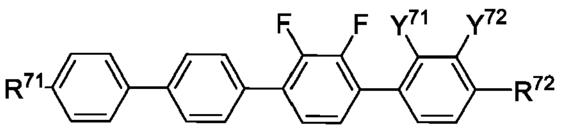

VII-5

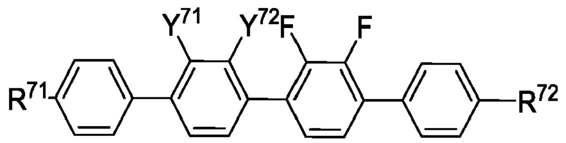

VII-6

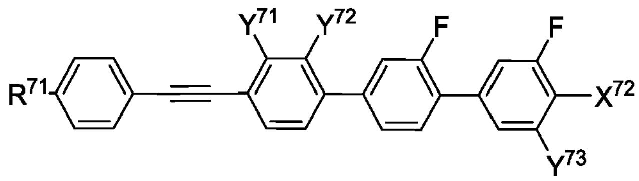

VII-7

where the compounds of the formula VII-5 are excluded from the compounds of the formula VII-6, and in which the parameters have the respective meanings indicated above for formula VII,

$Y^{71}$, $Y^{72}$, $Y^{73}$ independently from one another, denote H or F,

and preferably

$R^{71}$ denotes unfluorinated alkyl or alkoxy, each having 1 to 7 C atoms, or unfluorinated alkenyl having 2 to 7 C atoms,
$R^{72}$ denotes unfluorinated alkyl or alkoxy, each having 1 to 7 C atoms, or unfluorinated alkenyl having 2 to 7 C atoms,
$X^{72}$ denotes F, Cl; NCS or $-OCF_3$, preferably F or NCS, and

particularly preferably

$R^{71}$ has the meaning indicated above and preferably denotes $C_nH_{2n+1}$ or $CH_2$=CH-$(CH_2)_z$, and
$R^{72}$ has the meaning indicated above and preferably denotes $C_mH_{2m+1}$ or O-$C_mH_{2m+1}$ or $(CH_2)_Z$-CH=$CH_2$, and in which
n and m, independently of one another, denote an integer in the range from 1 to 7, preferably in the range from 2 to 6 and particularly preferably 3 to 5, and
z denotes 0, 1, 2, 3 or 4, preferably 0 or 2.

The compounds of the formula VII-1 are preferably selected from the group of the compounds of the formulae VII-1a to VII-1d:

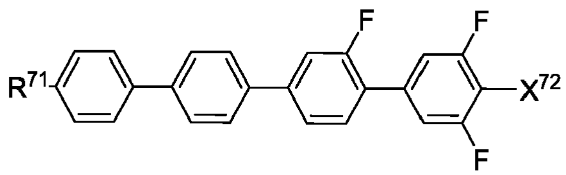

VII-1a

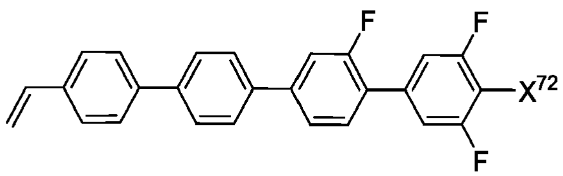

VII-1b

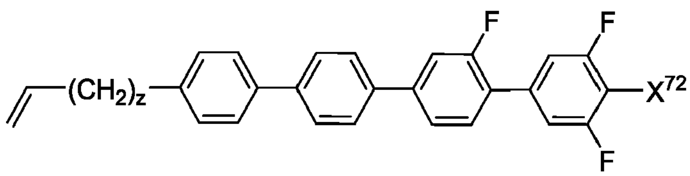

VII-1c

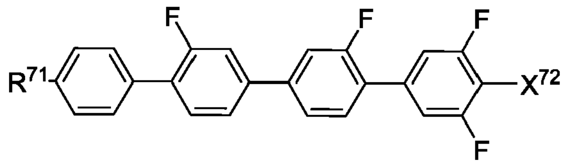

VII-1d

in which $X^{72}$ has the meaning given above for formula VII-2 and

$R^{71}$ has the meaning indicated above and preferably denotes $C_nH_{2n+1}$, in which
n denotes an integer in the range from 1 to 7, preferably in the range from 2 to 6 and particularly preferably 3 to 5, and z denotes 0, 1, 2, 3 or 4, preferably 0 or 2, and
$X^{72}$ preferably denotes F.

The compounds of the formula VII-2 are preferably selected from the group of the compounds of the formulae VII-2a and VII-2b, particularly preferably of the formula VII-2a:

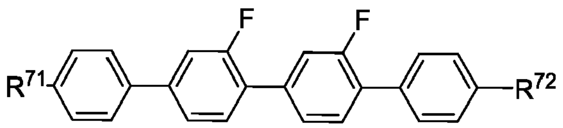

VII-2a

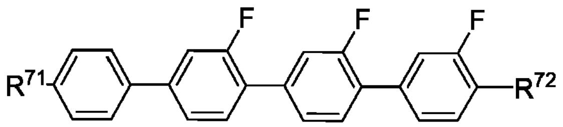

VII-2b

in which

$R^{71}$ has the meaning indicated above and preferably denotes $C_nH_{2n+1}$ or $CH_2=CH-(CH_2)_z$, and
$R^{72}$ has the meaning indicated above and preferably denotes $C_mH_{2m+1}$ or $O-C_mH_{2m+1}$ or $(CH_2)_Z-CH=CH_2$, and in which
n and m, independently of one another, denote an integer in the range from 1 to 7, preferably in the range from 2 to 6 and particularly preferably 3 to 5, and
z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).

The compounds of the formula VII-3 are preferably compounds of the formula VII-3a:

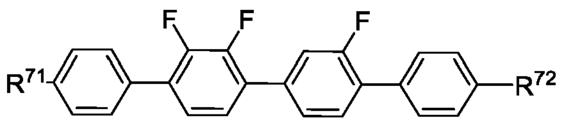

VII-3a

in which

$R^{71}$ has the meaning indicated above and preferably denotes $C_nH_{2n+1}$ or $CH_2=CH-(CH_2)_z$, and
$R^{72}$ has the meaning indicated above and preferably denotes $C_mH_{2m+1}$ or $O-C_mH_{2m+1}$ or $(CH_2)_Z-CH=CH_2$, and in which
n and m, independently of one another, denote an integer in the range from 1 to 7, preferably in the range from 2 to 6 and particularly preferably 3 to 5, and
z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).

The compounds of the formula VII-4 are preferably compounds of the formula VII-4a:

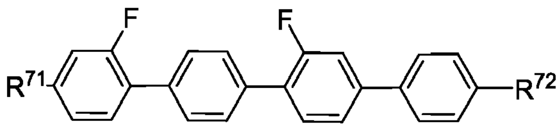

VII-4a

in which

$R^{71}$ has the meaning indicated above and preferably denotes $C_nH_{2n+1}$ or $CH_2=CH-(CH_2)_Z$, and

$R^{72}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 1 to 7, preferably in the range from 2 to 6 and particularly preferably 3 to 5, and

z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).

The compounds of the formula VII-5 are preferably selected from the group of the compounds of the formulae VII-5a and VII-5b, more preferably of the formula VII-5a:

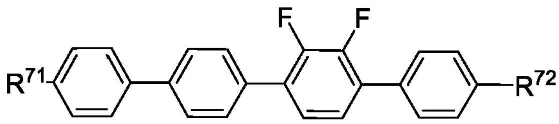

VII-5a

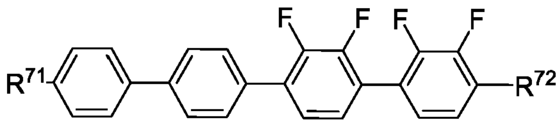

VII-5b

in which

$R^{71}$ has the meaning indicated above and preferably denotes $C_nH_{2n+1}$ or $CH_2=CH-(CH_2)_Z$, and

$R^{72}$ has the meaning indicated above and preferably denotes $C_mH_{2m+1}$ or $O-C_mH_{2m+1}$ or $(CH_2)_Z-CH=CH_2$, and in which

n and m, independently of one another, denote an integer in the range from 1 to 7, preferably in the range from 2 to 6 and particularly preferably 3 to 5, and

z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).

The compounds of the formula VII-6 are preferably selected from the group of the compounds of the formulae VII-6a and VII-6b:

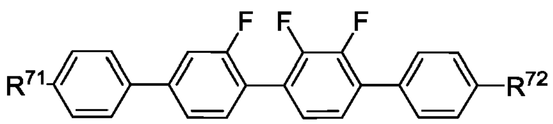

VII-6a

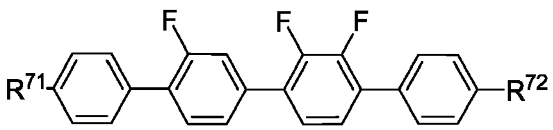

VII-6b

in which

$R^{71}$ has the meaning indicated above and preferably denotes $C_nH_{2n+1}$ or $CH_2$=CH-$(CH_2)_z$, and
$R^{72}$ has the meaning indicated above and preferably denotes $C_mH_{2m+1}$ or O-$C_mH_{2m+1}$ or $(CH_2)_Z$-CH=$CH_2$, and in which
n and m, independently of one another, denote an integer in the range from 1 to 7, preferably in the range from 2 to 6 and particularly preferably 3 to 5, and
z denotes 0, 1, 2, 3 or 4, preferably 0 or 2.

The preferred combinations of ($R^{71}$ and $R^{72}$) here are, in particular, ($C_nH_{2n+1}$ and $C_mH_{2m+1}$) and ($C_nH_{2n+1}$ and O-$C_mH_{2m+1}$), particularly preferably ($C_nH_{2n+1}$ and $C_mH_{2m+1}$).
The compounds of the formula VII-7 are preferably selected from the group of the compounds of the formulae VII-7a to VII-7d:

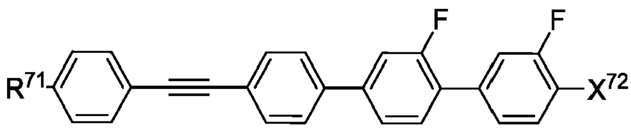
VII-7a

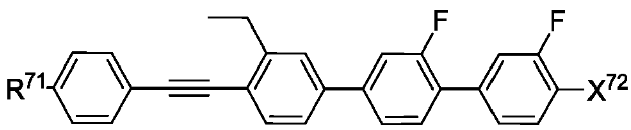
VII-7b

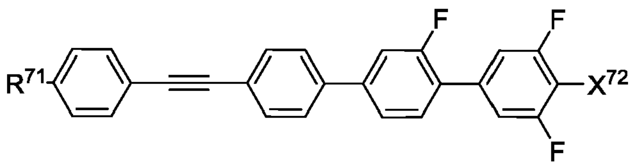
VII-7c

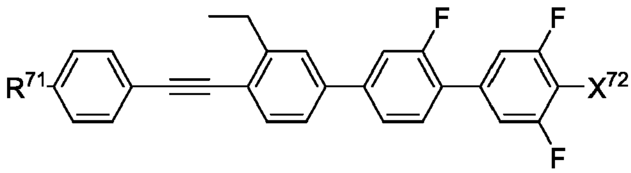
VII-7d

in which

$R^{71}$ has the meaning indicated above and preferably denotes $C_nH_{2n+1}$ or $CH_2$=CH-$(CH_2)_Z$,
$X^{72}$ denotes F, -$OCF_3$ or -NCS,
n denotes an integer in the range from 1 to 7, preferably in the range from 2 to 6 and particularly preferably 3 to 5, and
z denotes 0, 1, 2, 3 or 4, preferably 0 or 2.

The compounds of the formula VIII are preferably selected from the group of the compounds of the formulae VIII-1 to VIII-3, more preferably these compounds of the formula VIII predominantly consist, even more preferably essentially consist and very particularly preferably completely consist thereof:

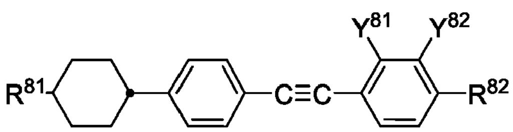
VIII-1

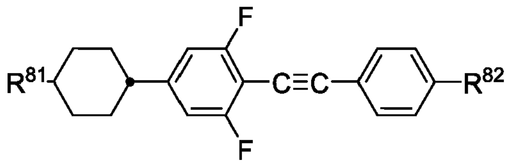

VIII-2

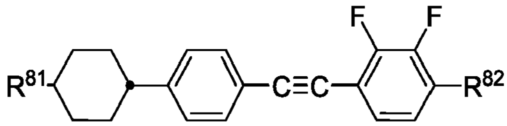

VIII-3

in which
one of

$Y^{81}$ and $Y^{82}$ denotes H and the other denotes H or F, and
$R^{81}$ has the meaning indicated above and preferably denotes $C_nH_{2n+1}$ or $CH_2=CH-(CH_2)_z$, and
$R^{82}$ has the meaning indicated above and preferably denotes $C_mH_{2m+1}$ or $O-C_mH_{2m+1}$ or $(CH_2)_Z-CH=CH_2$, and in which
n and m, independently of one another, denote an integer in the range from 1 to 7, preferably in the range from 2 to 6 and particularly preferably 3 to 5, and
z denotes 0, 1, 2, 3 or 4, preferably 0 or 2.

The preferred combinations of ($R^{81}$ and $R^{82}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).
The compounds of the formula VIII-1 are preferably selected from the group of the compounds of the formulae VIII-1a to VIII-1c:

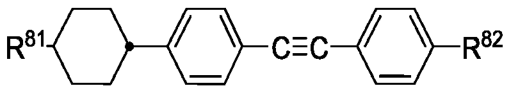

VIII-1a

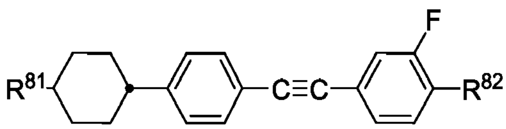

VIII-1b

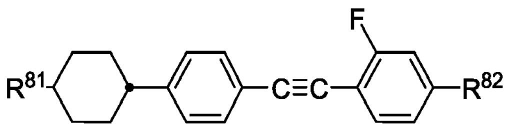

VIII-1c

in which

$R^{81}$ has the meaning indicated above and preferably denotes $C_nH_{2n+1}$ or $CH_2=CH-(CH_2)_z$, and
$R^{82}$ has the meaning indicated above and preferably denotes $C_mH_{2m+1}$ or $O-C_mH_{2m+1}$ or $(CH_2)_Z-CH=CH_2$, and in which
n and m, independently of one another, denote an integer in the range from 1 to 7, preferably in the range from 2 to 6 and particularly preferably 3 to 5, and
z denotes 0, 1, 2, 3 or 4, preferably 0 or 2.

The preferred combinations of ($R^{81}$ and $R^{82}$) here are, in particular, ($C_nH_{2n+1}$ and $C_mH_{2m+1}$) and ($C_nH_{2n+1}$ and $O-C_mH_{2m+1}$), particularly preferably ($C_nH_{2n+1}$ and $C_mH_{2m+1}$).
The compounds of the formula VIII-2 are preferably compounds of the formula VIII-2a:

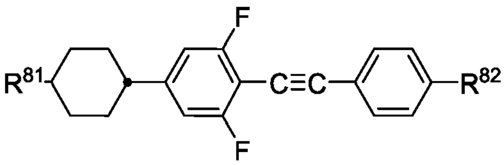

VIII-2a

in which

$R^{81}$ has the meaning indicated above and preferably denotes $C_nH_{2n+1}$ or $CH_2=CH-(CH_2)_Z$, and
$R^{82}$ has the meaning indicated above and preferably denotes $C_mH_{2m+1}$ or $O-C_mH_{2m+1}$ or $(CH_2)_Z-CH=CH_2$, and in which
n and m, independently of one another, denote an integer in the range from 1 to 7, preferably in the range from 2 to 6 and particularly preferably 3 to 5, and
z denotes 0, 1, 2, 3 or 4, preferably 0 or 2.

The preferred combinations of ($R^{81}$ and $R^{82}$) here are, in particular, ($C_nH_{2n+1}$ and $C_mH_{2m+1}$), ($C_nH_{2n+1}$ and $O-C_mH_{2m+1}$) and ($CH_2=CH-(CH_2)_Z$ and $C_mH_{2m+1}$), particularly preferably ($C_nH_{2n+1}$ and $C_mH_{2m+1}$).

The compounds of the formula VIII-3 are preferably compounds of the formula VIII-3a:

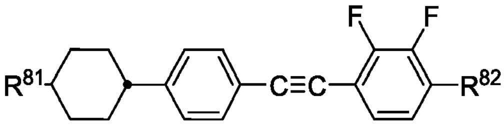

VIII-3a

in which

$R^{81}$ has the meaning indicated above and preferably denotes $C_nH_{2n+1}$ or $CH_2=CH-(CH_2)_Z$, and
$R^{82}$ has the meaning indicated above and preferably denotes $C_mH_{2m+1}$ or $O-C_mH_{2m+1}$ or $(CH_2)_Z-CH=CH_2$, and in which
n and m, independently of one another, denote an integer in the range from 1 to 7, preferably in the range from 2 to 6 and particularly preferably 3 to 5, and
z denotes 0, 1, 2, 3 or 4, preferably 0 or 2.

The preferred combinations of ($R^{81}$ and $R^{82}$) here are, in particular, ($C_nH_{2n+1}$ and $C_mH_{2m+1}$) and ($C_nH_{2n+1}$ and $O-C_mH_{2m+1}$).

The compounds of the formula IX are preferably selected from the group of the compounds of the formulae IX-1 to IX-3:

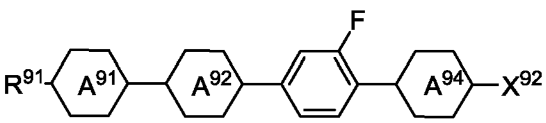

IX-1

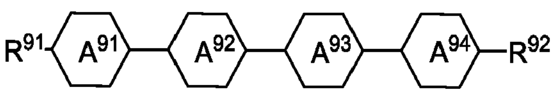

IX-2

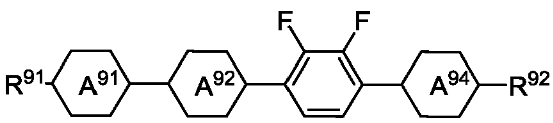

IX-3

in which the parameters have the respective meaning indicated above under formula IX and preferably one of

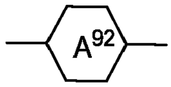

to

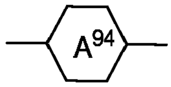

denotes

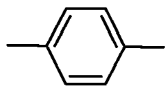, 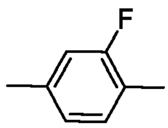 or 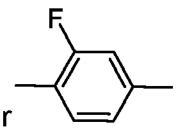,

and in which

| | |
|---|---|
| $R^{91}$ | has the meaning indicated above and preferably denotes $C_nH_{2n+1}$ or $CH_2$=CH-$(CH_2)_Z$, and |
| $R^{92}$ | has the meaning indicated above and preferably denotes $C_mH_{2m+1}$ or O-$C_mH_{2m+1}$ or $(CH_2)_Z$-CH=$CH_2$, and in which |
| n and m, | independently of one another, denote an integer in the range from 1 to 7, preferably in the range from 2 to 6 and particularly preferably 3 to 5, and |
| z | denotes 0, 1, 2, 3 or 4, preferably 0 or 2. |

The preferred combinations of ($R^{91}$ and $R^{92}$) here are, in particular, ($C_nH_{2n+1}$ and $C_mH_{2m+1}$) and ($C_nH_{2n+1}$ and O-$C_mH_{2m+1}$).

The compounds of the formula IX-1 are preferably selected from the group of the compounds of the formulae IX-1a to IX-1e:

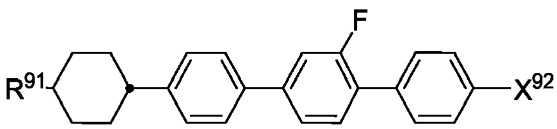

IX-1a

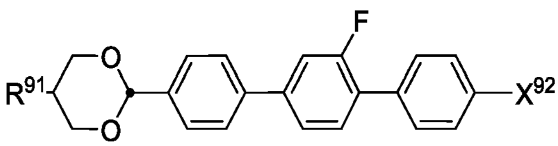

IX-1b

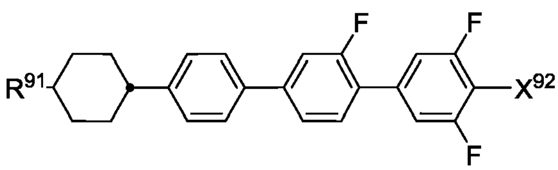

IX-1c

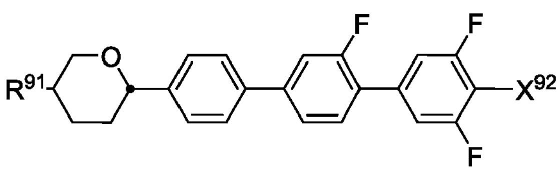

IX-1d

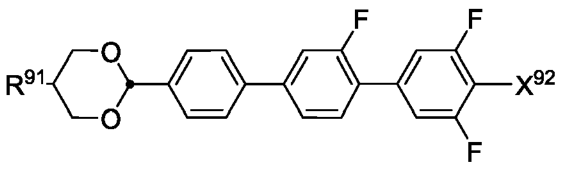

IX-1e

in which the parameters have the meaning given above and preferably

| | |
|---|---|
| $R^{91}$ | has the meaning indicated above and preferably denotes $C_nH_{2n+1}$, and |
| n | denotes an integer in the range from 0 to 15, preferably in the range from 1 to 7 and particularly preferably 1 to 5, and |
| $X^{92}$ | preferably denotes F or Cl. |

The compounds of the formula IX-2 are preferably selected from the group of the compounds of the formulae IX-2a and IX-2b:

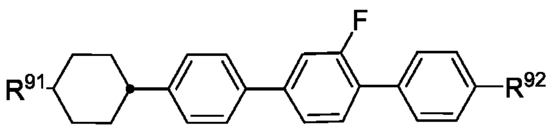

IX-2a

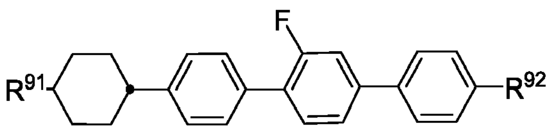

IX-2b

in which

| | |
|---|---|
| $R^{91}$ | has the meaning indicated above and preferably denotes $C_nH_{2n+1}$ or $CH_2$=CH-$(CH_2)_Z$, and |
| $R^{92}$ | has the meaning indicated above and preferably denotes $C_mH_{2m+1}$ or O-$C_mH_{2m+1}$ or $(CH_2)_Z$-CH=$CH_2$, and in which |
| n and m, | independently of one another, denote an integer in the range from 1 to 7, preferably in the range from 2 to 6 and particularly preferably 3 to 5, and |
| z | denotes 0, 1, 2, 3 or 4, preferably 0 or 2. |

The preferred combination of ($R^{91}$ and $R^{92}$) here is, in particular, ($C_nH_{2n+1}$ and $C_mH_{2m+1}$).

The compounds of the formula IX-3 are preferably compounds of the formulae IX-3a and IX-3b:

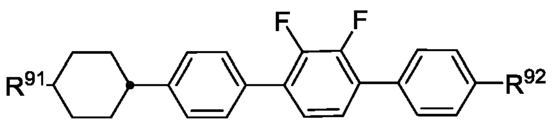

IX-3a

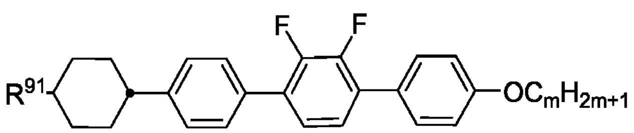

IX-3b

in which

| | |
|---|---|
| $R^{91}$ | has the meaning indicated above and preferably denotes $C_nH_{2n+1}$ or $CH_2$=CH-$(CH_2)_Z$, and |
| $R^{92}$ | has the meaning indicated above and preferably denotes $C_mH_{2m+1}$ or O-$C_mH_{2m+1}$ or $(CH_2)_Z$-CH=$CH_2$, and in which |
| n and m, | independently of one another, denote an integer in the range from 1 to 7, preferably in the range from 2 to 6 and particularly preferably 3 to 5, and |

z denotes 0, 1, 2, 3 or 4, preferably 0 or 2.

The preferred combinations of ($R^{91}$ and $R^{92}$) here are, in particular, ($C_nH_{2n+1}$ and $C_mH_{2m+1}$) and ($C_nH_{2n+1}$ and O-$C_mH_{2m+1}$), particularly preferably ($C_nH_{2n+1}$ and O-$C_mH_{2m+1}$).

In a preferred embodiment of the present invention the medium comprises one or more compounds of formula X

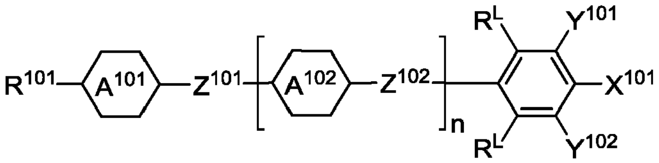

X

in which

$R^{101}$ denotes H, alkyl or alkoxy having 1 to 15, preferably 3 to 10, C atoms or unfluorinated alkenyl, unfluorinated alkenyloxy or unfluorinated alkoxyalkyl having 2 to 15, preferably 3 to 10, C atoms, preferably alkyl or alkenyl,

$X^{101}$ denotes H, F, Cl, -CN, $SF_5$, NCS, fluorinated alkyl or fluorinated alkoxy having 1 to 7 C atoms or fluorinated alkenyl, fluorinated alkenyloxy or fluorinated alkoxyalkyl having 2 to 7 C atoms, preferably fluorinated alkoxy, fluorinated alkenyloxy, F, Cl or NCS, particularly preferably NCS,

$Y^{101}$ denotes methyl, ethyl or Cl,

$Y^{102}$ denotes H, methyl, ethyl, F or Cl, preferably H or F,

$Z^{101}$, $Z^{102}$ identically or differently, denote a single bond, -CH=CH-, -CF=CF- or -C≡C-,

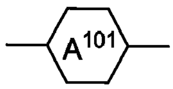

and

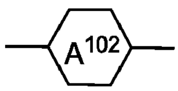

independently of one another, denote

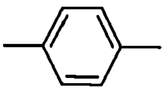 , 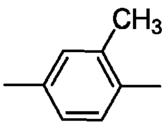 , 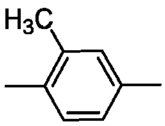 , 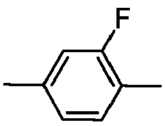 ,

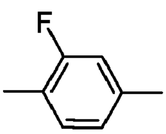 , 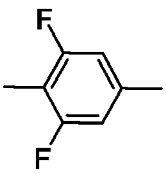 , 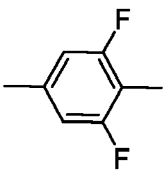 , 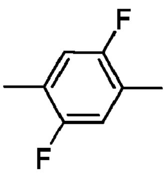

or

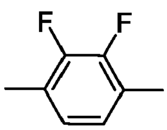 ,

preferably

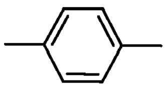, 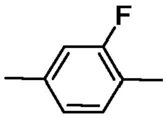, 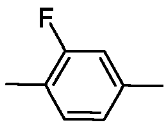, or 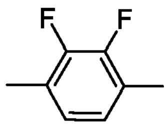,

and where

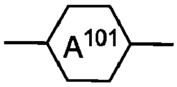

alternatively denotes

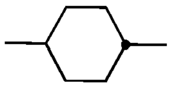,

and n is 0 or 1.

Preferably, the compounds of formula X are selected from the sub-formulae X-1 and X-2

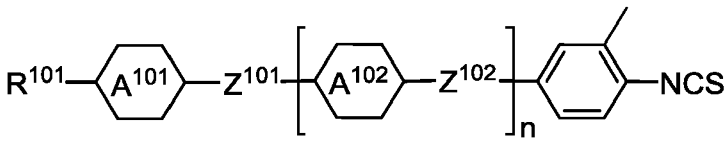

X-1

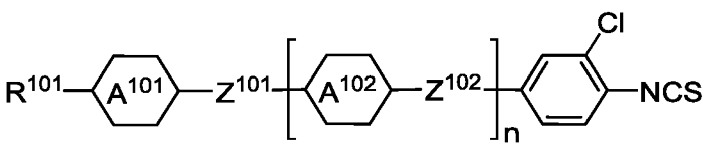

X-2

in which the occurring groups and parameters have the meanings given above for formula X.

Particularly preferably, the media according to the invention comprise one or more compounds selected from the group of compounds of the formulae X-1-1 to X-1-9

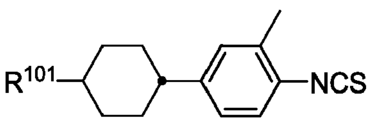

X-1-1

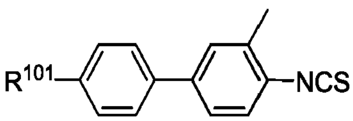

X-1-2

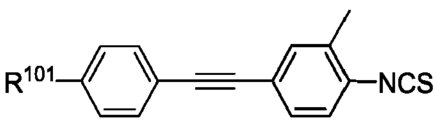

X-1-3

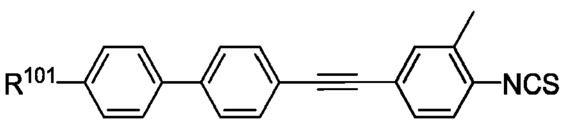

X-1-4

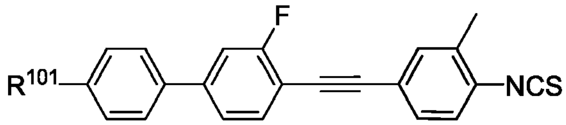

X-1-5

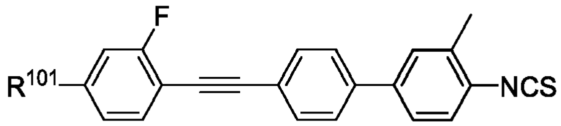

X-1-6

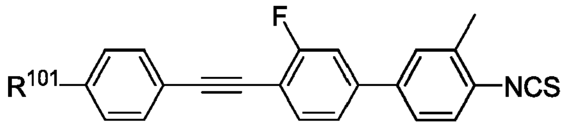

X-1-7

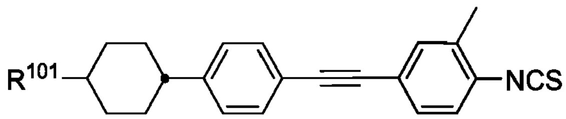

X-1-8

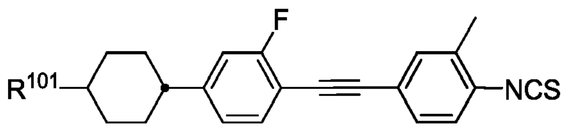

X-1-9

in which $R^{101}$ has the meanings given above for formula X.

In a preferred embodiment, the medium according to the invention comprises one or more compounds of formula XI

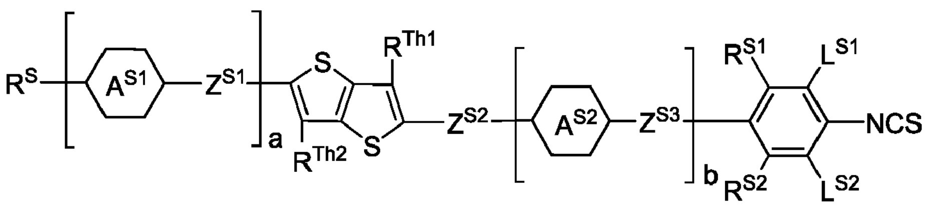

XI

in which

$R^S$ denotes H, alkyl or alkoxy having 1 to 12 C atoms, or alkenyl, alkenyloxy or alkoxyalkyl having 2 to 12 C atoms, in which one or more $CH_2$-groups may be replaced by

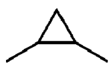, 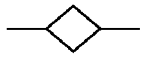,

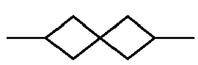, 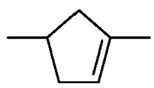 or 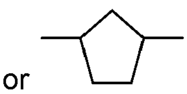,

and in which one or more H atoms may be replaced by F,

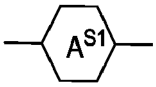

and

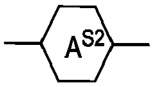

, on each occurrence, independently of one another, denote

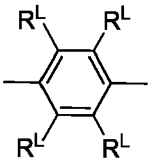 , 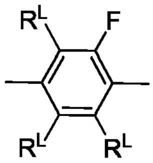 , 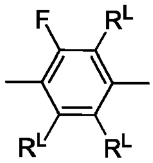 ,

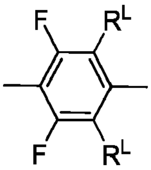 , 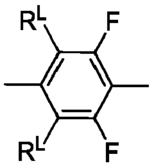 , 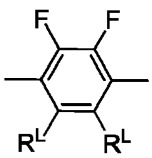

or,

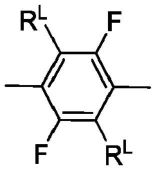 ,

in which $R^L$, on each occurrence identically or differently, denotes H, Cl or straight chain, branched or cyclic alkyl having 1 to 6 C atoms,

$L^{S1}$, $L^{S2}$ identically or differently, denote H, Cl or F,

$R^{S1}$, $R^{S2}$, identically or differently, denote H, alkyl or alkenyl, having up to 6 C atoms, or cyclopropyl, cyclobutyl, cyclopentenyl, or cyclopentyl,

$R^{Th1}$, $R^{Th2}$ identically or differently, denote H, alkyl or alkenyl or alkoxy, having up to 6 C atoms, or cyclopropyl, cyclobutyl, cyclopentenyl or cyclopentyl,

$Z^{S1}$, $Z^{S2}$, $Z^{S3}$ identically or differently, denote -CH=CH-, -CH=CF-, -CF=CH-, -CF=CF-, -C≡C-, or a single bond,

a, b identically or differently, are 0 or 1.

Preferably, the compounds of formula XI are selected from the group of compounds of the formulae XI-1 to XI-24:

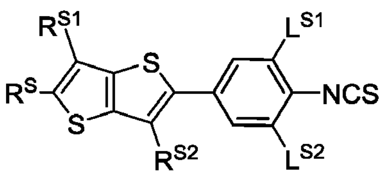

XI-1

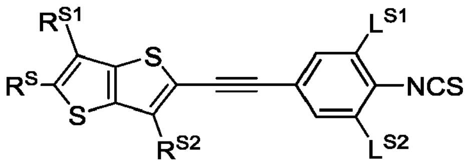

XI-2

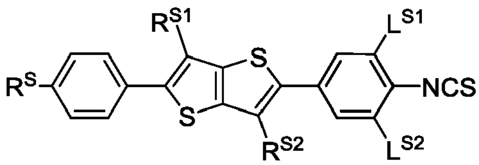

XI-3

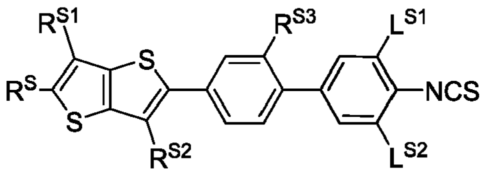

XI-4

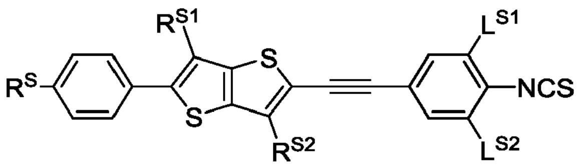

XI-5

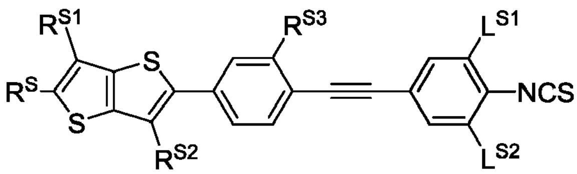

XI-6

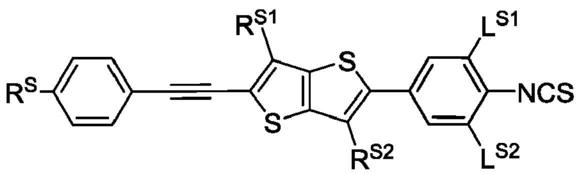

XI-7

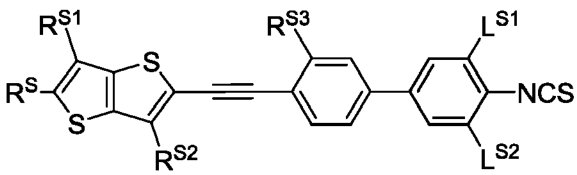

XI-8

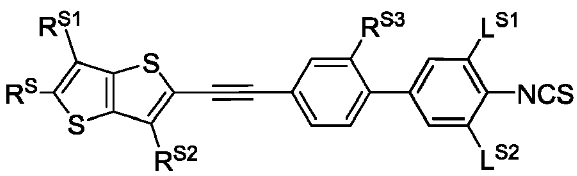

XI-9

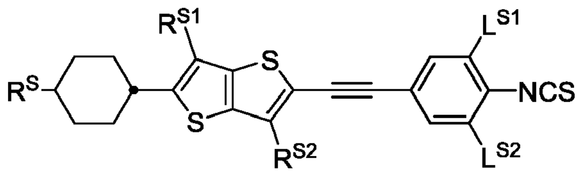

XI-10

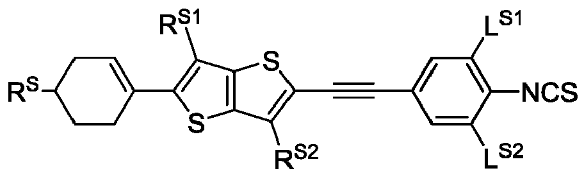

XI-11

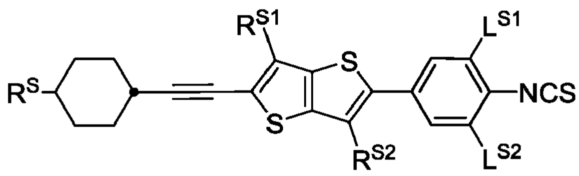

XI-12

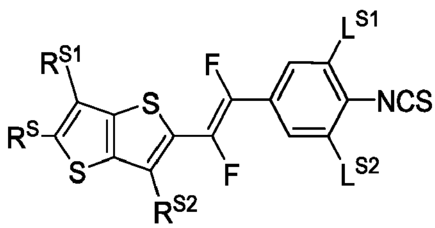

XI-13

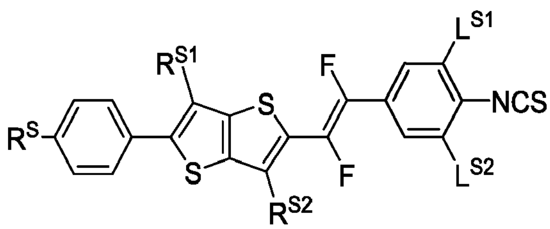

XI-14

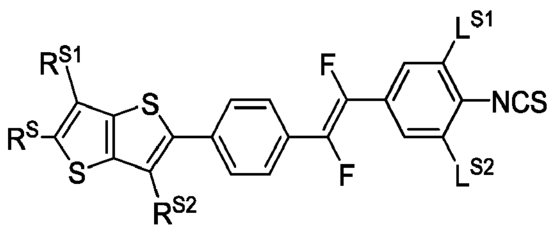

XI-15

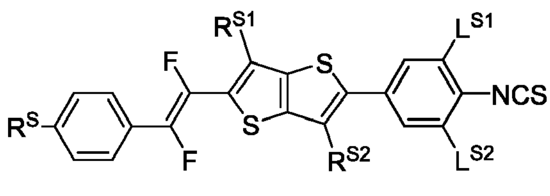

XI-16

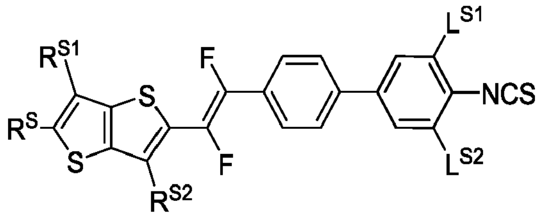

XI-17

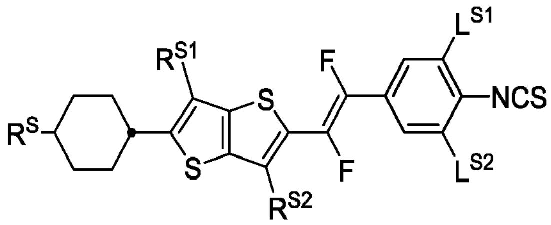

XI-18

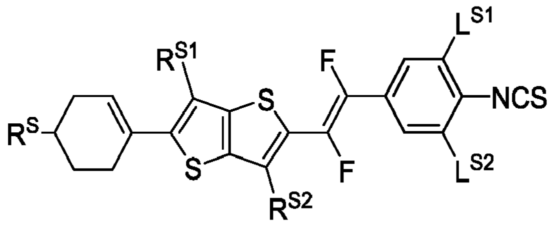

XI-19

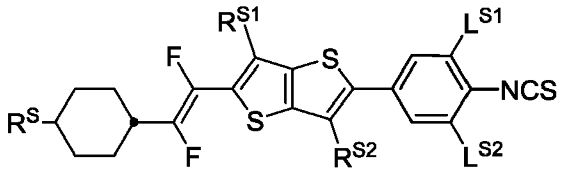

XI-20

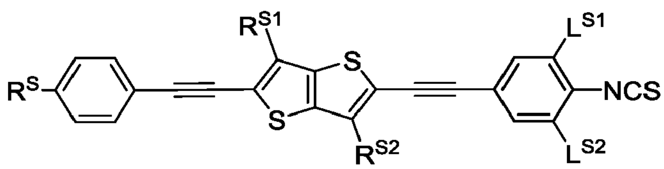

XI-21

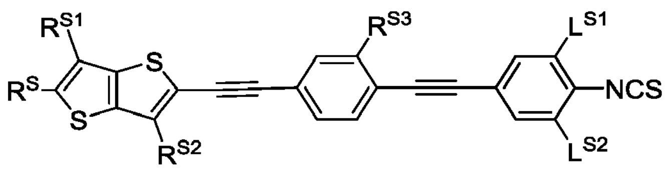

XI-22

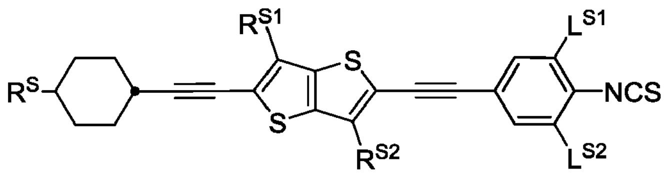

XI-23

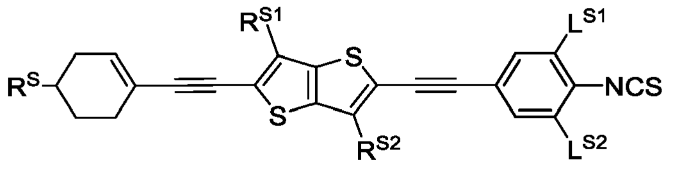

XI-24

in which the occurring groups have the meanings given above for formula XI and preferably

$R^S$ denotes alkyl or alkenyl having 2 to 6 C atoms, in which one or more $CH_2$-groups may be replaced by ,

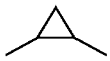, 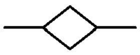, 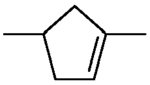 or 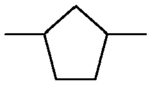

$R^{S1}$ and $R^{S2}$ identically or differently, denote H or alkyl having 1 to 6 C atoms, preferably H,

$R^{S3}$ denotes H, F or alkyl, having up to 6 C atoms, or cyclopropyl, preferably H, F or ethyl, very preferably H,

$L^{S1}$ and $L^{S2}$ identically or differently, denote H or F, preferably F.

Preferably, the medium according to the invention comprises one or more compounds of formula XII

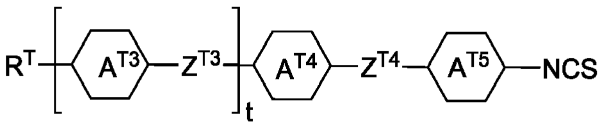

XII

in which

$R^T$ denotes halogen, CN, NCS, $R^F$, $R^F$-O- or $R^F$-S-, wherein $R^F$ denotes fluorinated alkyl or fluorinated alkenyl having up to 12 C atoms,

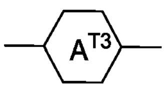, 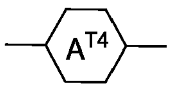 and 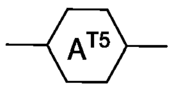

on each occurrence, independently of one another, denote

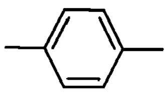, 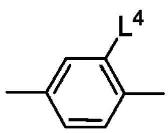, 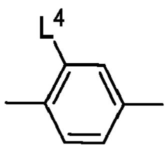,

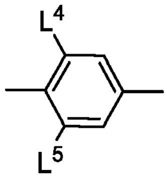, 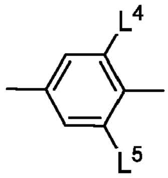, 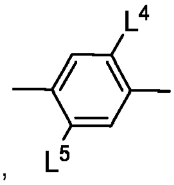 or 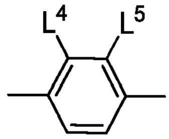;

$L^4$ and $L^5$ identically or differently, denote F, Cl or straight chain or branched or cyclic alkyl or alkenyl each having up to 12 C atoms;

$Z^{T3}$, $Z^{T4}$ identically or differently, denote -CH=CH-, -CF=CF-, -CH=CF-, -CF=CH-, -C≡C- or a single bond, and

t is 0 or 1.

In a preferred embodiment, the liquid crystalline media according to the invention comprise one or more compounds selected from the group of compounds of the formulae XII-1a to XII-3b below:

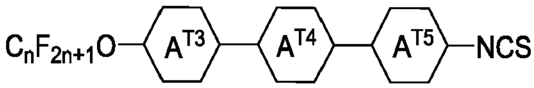

XII-1a

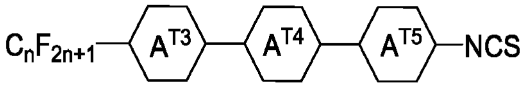

XII-1b

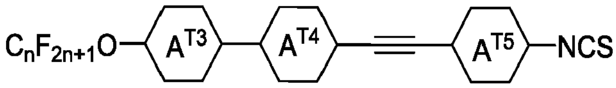

XII-2a

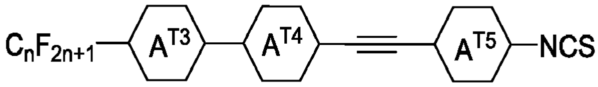

XII-2b

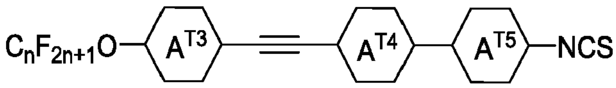

XII-3a

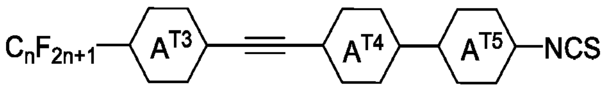

XII-3b

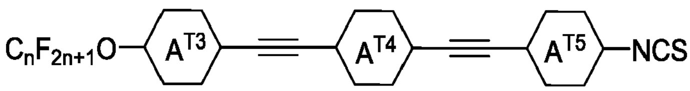

XII-4a

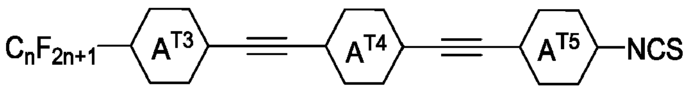

XII-4b

in which

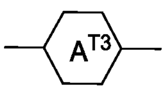 , 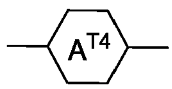 and 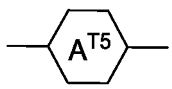

have the meanings given above and

n is 1, 2, 3, 4, 5 ,6 or 7, preferably 1, 2, 3 or 4, particularly preferably 1.

In a particularly preferred embodiment of the present invention the media comprise one or more compounds selected from the compounds of the formulae XII-1a and XII-2a.

Preferred compounds of formula XII-1a are selected from the group of compounds of the following sub-formulae:

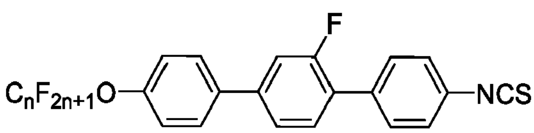

XII-1a-1

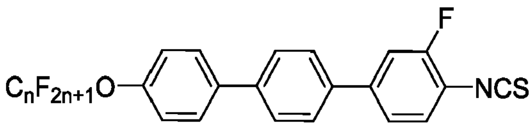

XII-1a-2

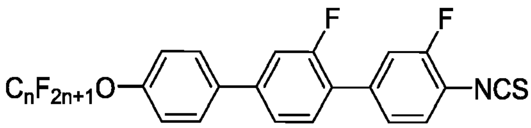

XII-1a-3

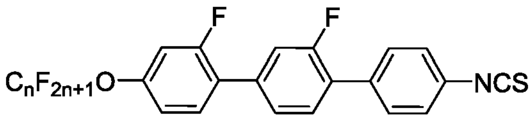

XII-1a-4

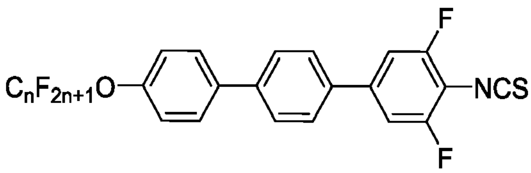

XII-1a-5

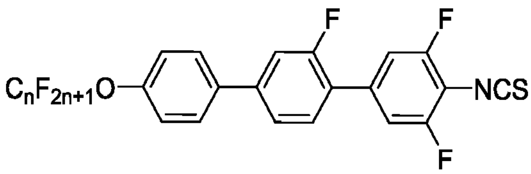

XII-1a-6

in which n is 1, 2, 3 or 4, preferably 1.

Preferred compounds of formula XII-2a are selected from the group of compounds of the following sub-formulae:

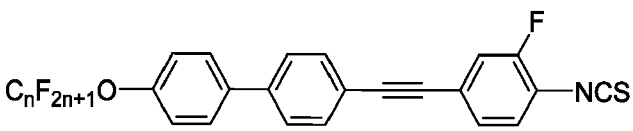

XII-2a-1

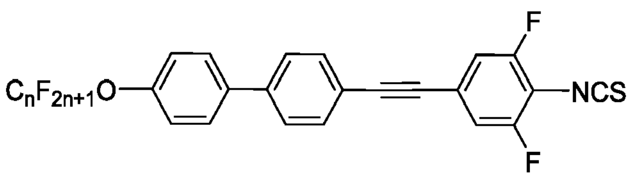

XII-2a-2

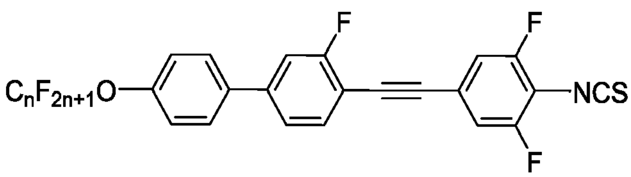

XII-2a-3

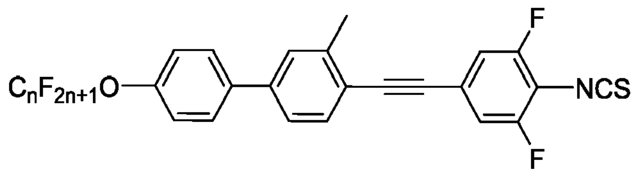

XII-2a-4

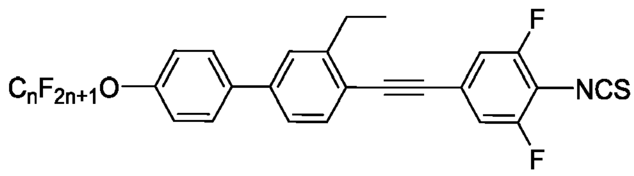

XII-2a-5

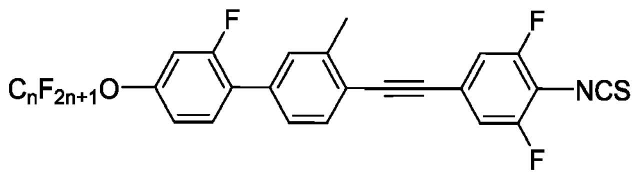

XII-2a-6

in which n is 1, 2, 3 or 4, preferably 1.

Very preferably, the medium according to the invention comprises one or more compounds of formula XII-1a-5.

Preferably, the media according to the invention, comprise a stabilizer selected from the group of compounds of the formulae ST-1 to ST-19.

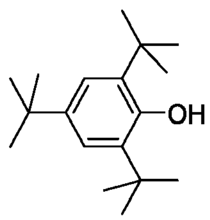

ST-1

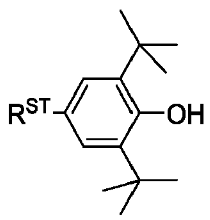

ST-2

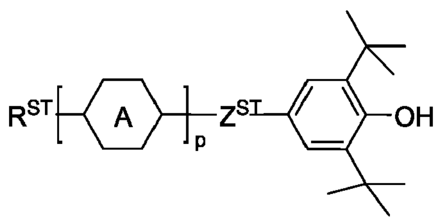

ST-3

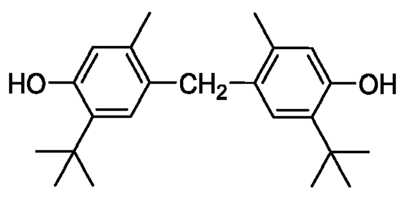

ST-4

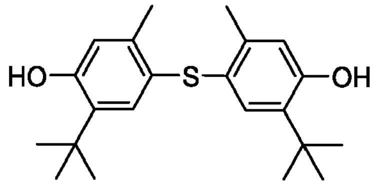

ST-5

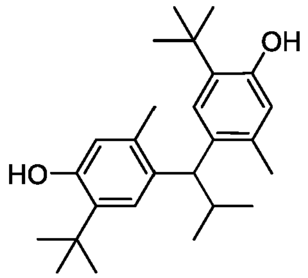

ST-6

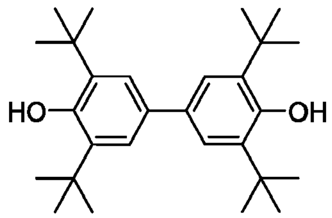

ST-7

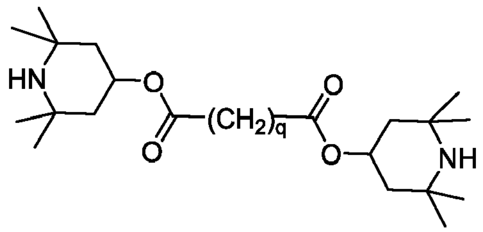

ST-8

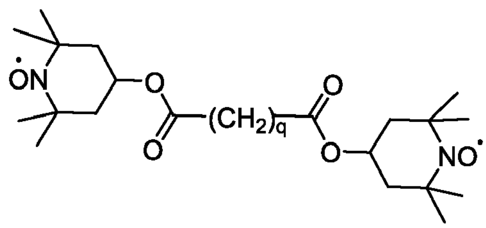

ST-9

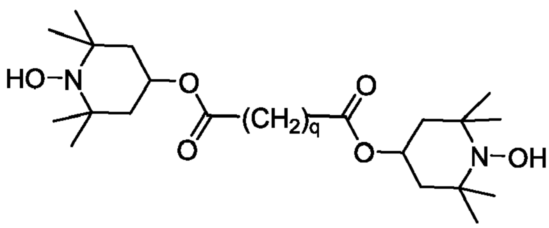

ST-10

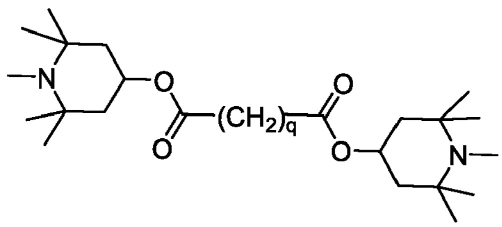

ST-11

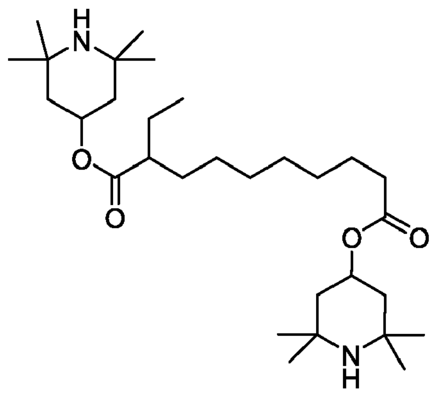

ST-12

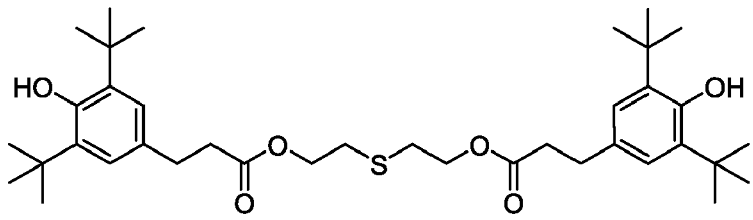

ST-13

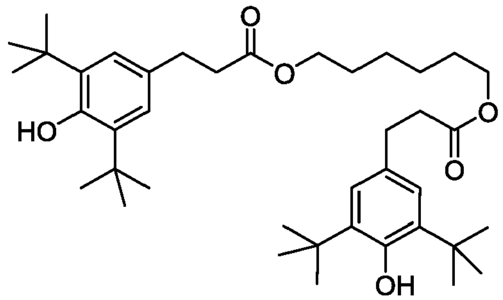

ST-14

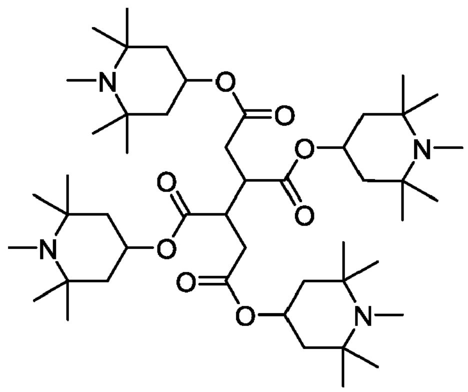

ST-15

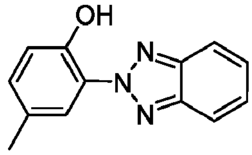

ST-16

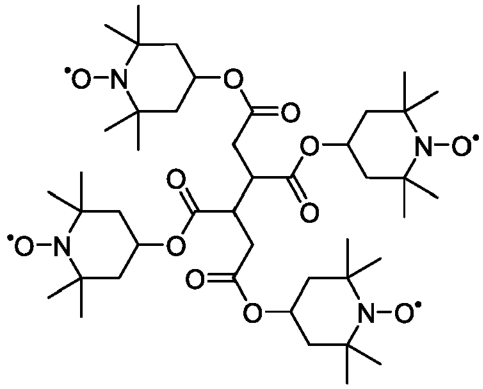

ST-17

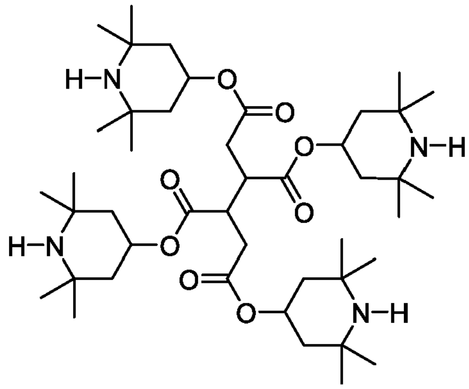

ST-18

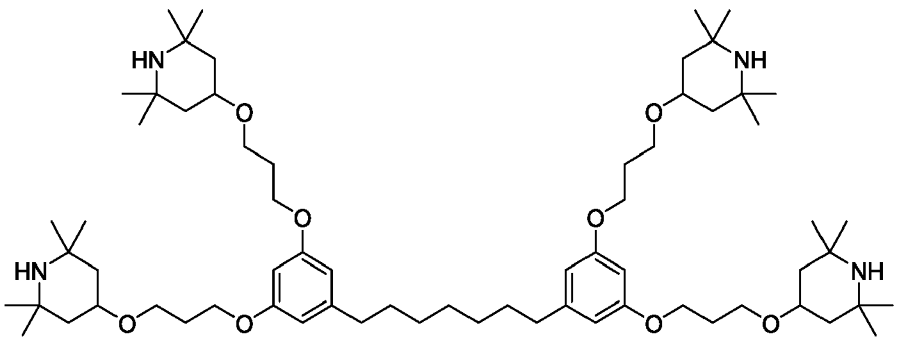

ST-19

in which

$R^{ST}$ denotes H, an alkyl or alkoxy radical having 1 to 15 C atoms, where, in addition, one or more $CH_2$ groups in these radicals may each be replaced, independently of one another, by -C≡C-, -CFzO-, -$OCF_2$-, -CH=CH-,

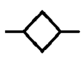 , 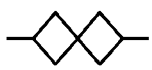 ,

-O-, -CO-O-, -O-CO- in such a way that O atoms are not linked directly to one another, and in which, in addition, one or more H atoms may be replaced by halogen,

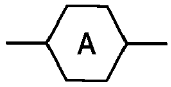

denotes

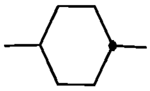, 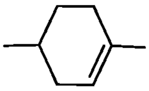, 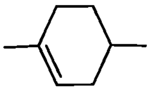, 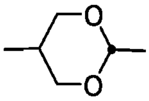,

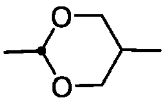, 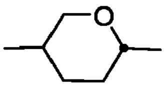, 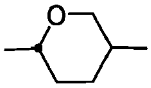, 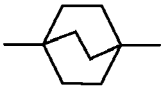,

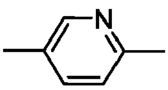, 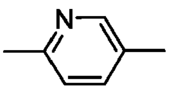, 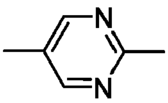, 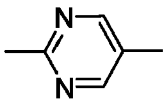,

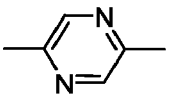, 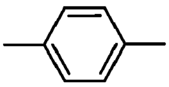, 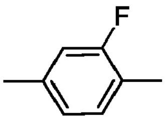, 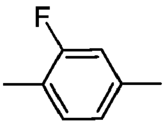,

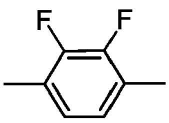, 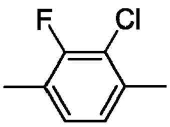, 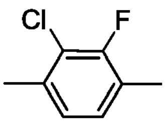, 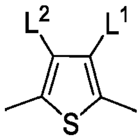,

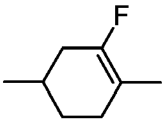, 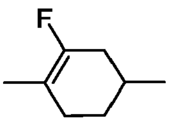, 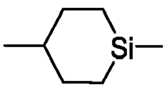, 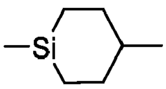,

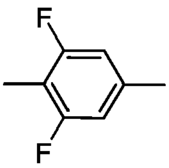, 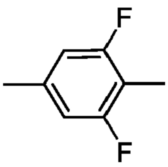, 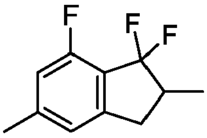, 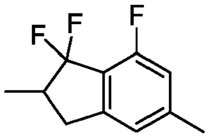,

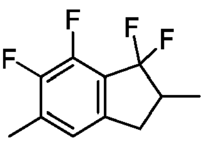, 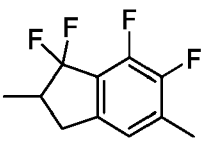, 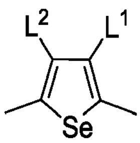, 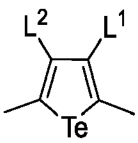,

, 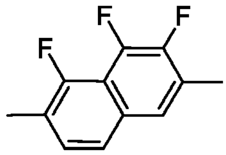, 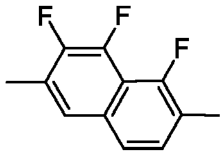,

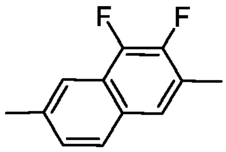, 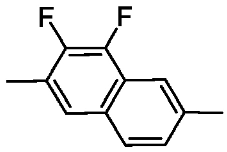, 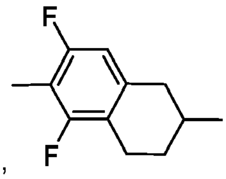

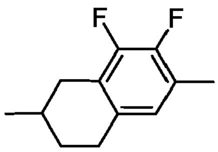, 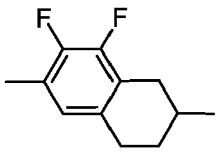, 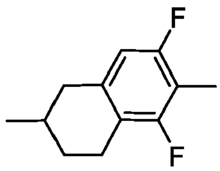

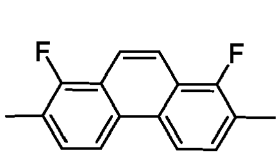, 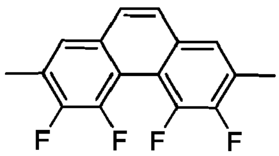, 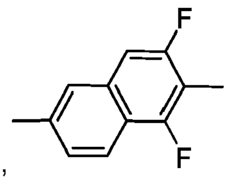

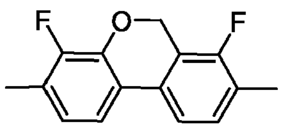, 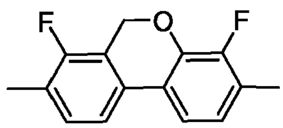,

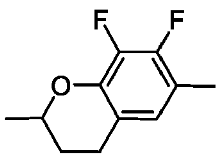, 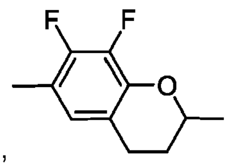, 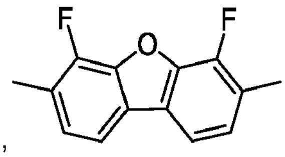

$Z^{ST}$ each, independently of one another, denote -CO-O-, -O-CO-, $-CF_2O-$, $-OCF_2-$, -CHzO-, $-OCH_2-$, $-CH_2-$, $-CH_2CH_2-$, $-(CH_2)_4-$, $-CH=CH-CH_2O-$, $-C_2F_4-$, $-CH_2CF_2-$, $-CF_2CH_2-$, -CF=CF-, -CH=CF-, -CF=CH-, -CH=CH-, -C≡C- or a single bond,

$L^1$ and $L^2$ each, independently of one another, denote F, Cl, $CF_3$ or $CHF_2$,

p denotes 1 or 2, and

q denotes 1, 2, 3, 4, 5, 6, 7, 8, 9 or 10.

Of the compounds of the formula ST, special preference is given to the compounds of the formulae

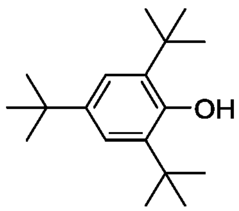

ST-1

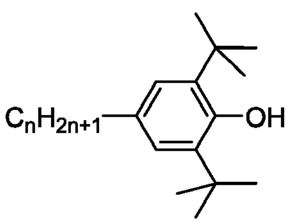

ST-2a

in which n = 1, 2, 3, 4, 5, 6 or 7, preferably n = 1 or 7

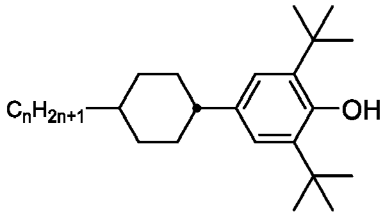

ST-3a

in which n = 1, 2, 3, 4, 5, 6 or 7, preferably n = 3

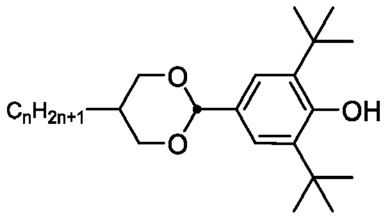

ST-3b

in which n = 1, 2, 3, 4, 5, 6 or 7, preferably n = 3

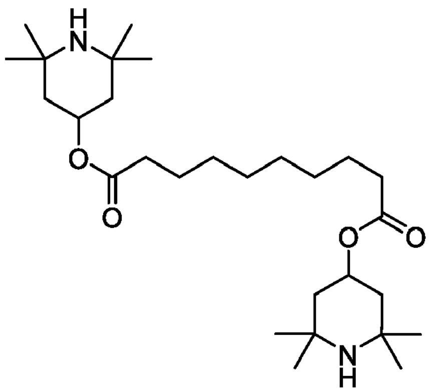

ST-8-1

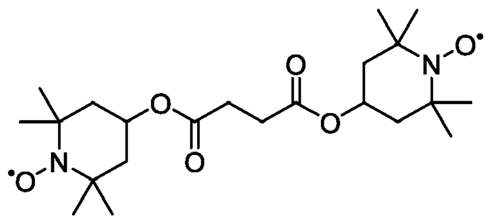

ST-9-1

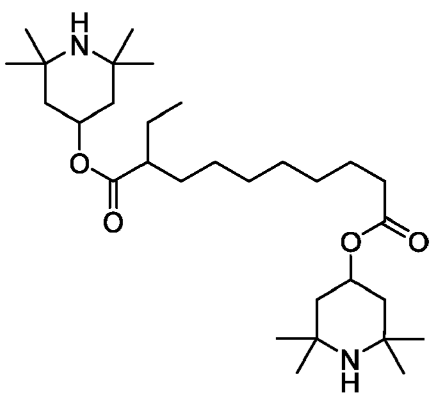

ST-12

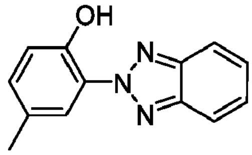

ST-16

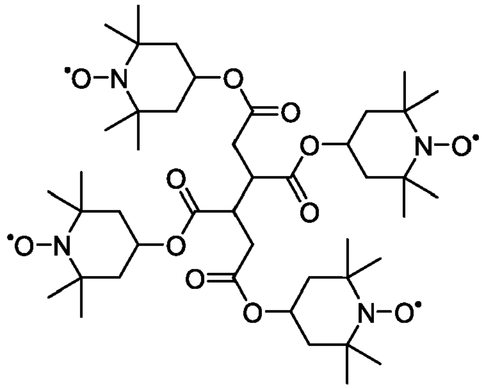

ST-17

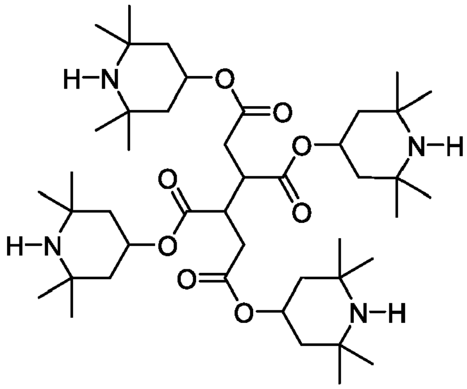

ST-18

In the compounds of the formulae ST-3a and ST-3b, n preferably denotes 3. In the compounds of the formula ST-2a, n preferably denotes 7.

Very particularly preferred mixtures according to the invention comprise one or more stabilizers from the group of the compounds of the formulae ST-2a-1, ST-3a-1, ST-3b-1, ST-8-1, ST-9-1 and ST-12:

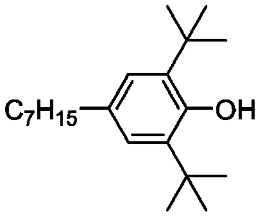

ST-2a-1

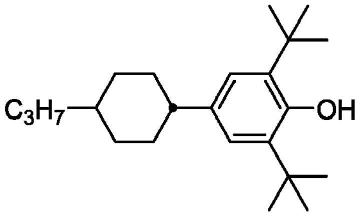

ST-3a-1

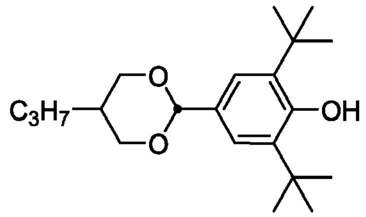

ST-3b-1

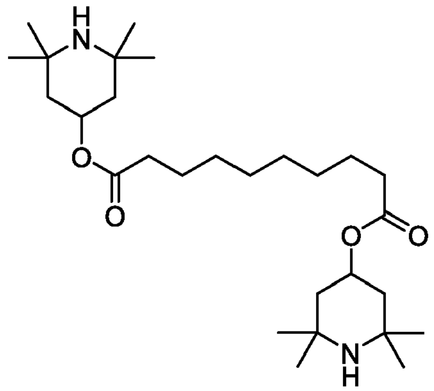

ST-8-1

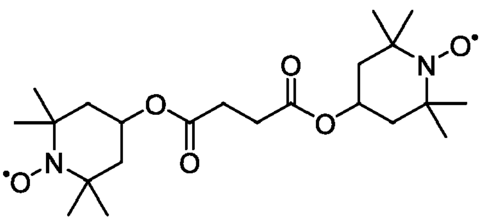

ST-9-1

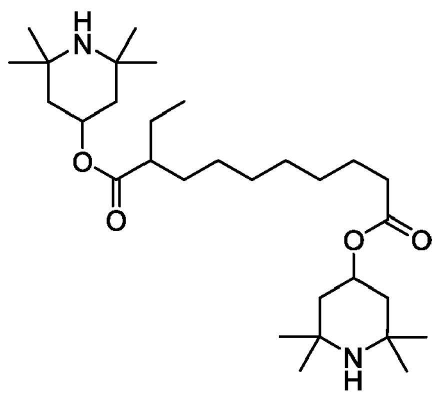

ST-12

The compounds of the formulae ST-1 to ST-19 are preferably each present in the liquid-crystal mixtures according to the invention in amounts of 0.005 - 0.5%, based on the mixture.

If the mixtures according to the invention comprise two or more compounds from the group of the compounds of the formulae ST-1 to ST-19, the concentration correspondingly increases to 0.01 - 1% in the case of two compounds, based on the mixtures.

However, the total proportion of the compounds of the formulae ST-1 to ST-18, based on the mixture according to the invention, should not exceed 2%.

Other mesogenic compounds which are not explicitly mentioned above can optionally and advantageously also be used in the media in accordance with the present invention. Such compounds are known to the person skilled in the art.

The liquid-crystal media according to the invention consist of a plurality of compounds, preferably 3 to 30, more preferably 4 to 20 and very preferably 4 to 16 compounds. These compounds are mixed in a conventional manner. In general, the desired amount of the compound used in the smaller amount is dissolved in the compound used in the larger amount. If the temperature is above the clearing point of the compound used in the higher concentration, it is particularly easy to observe completion of the dissolution process. It is, however, also possible to prepare the media in

other conventional ways, for example using so-called pre-mixes, which can be, for example, homologous or eutectic mixtures of compounds, or using so-called "multi-bottle" systems, the constituents of which are themselves ready-to-use mixtures.

All temperatures, such as, for example, the melting point T(C,N) or T(C,S), the transition from the smectic (S) to the nematic (N) phase T(S,N) and the clearing point T(N,I) of the liquid crystals, are quoted in degrees Celsius. All temperature differences are quoted in differential degrees.

In the present invention and especially in the following examples, the structures of the mesogenic compounds are indicated by means of abbreviations, also referred to as acronyms. In these acronyms, the chemical formulae are abbreviated as follows using Tables A to D below. All groups $C_nH_{2n+1}$, $C_mH_{2m+1}$ and $C_lH_{2l+1}$, and $C_nH_{2n}$, $C_mH_{2m}$ and $C_lH_{2l}$ denote straight-chain alkyl or alkylene, respectively, in each case having n, m or l C atoms, wherein n and m, independently are 1, 2, 3, 4, 5, 6 or 7 and l is 1, 2 or 3. Table A lists the codes used for the ring elements of the core structures of the compounds, while Table B shows the linking groups. Table C gives the meanings of the codes for the left-hand or right-hand end groups. Table D shows illustrative structures of compounds with their respective abbreviations.

**Table A: Ring elements**

| | | | |
|---|---|---|---|
| C | 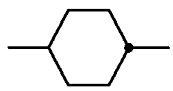 | | |
| D | 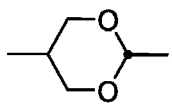 | DI | 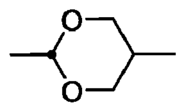 |
| A | 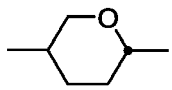 | AI | 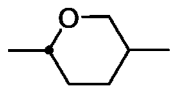 |
| G | 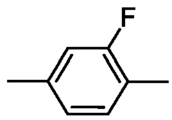 | GI | 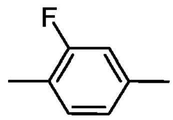 |
| G(Cl) | 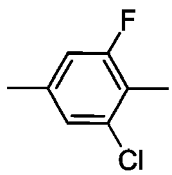 | P(Cl.Cl) | 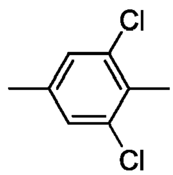 |
| U | 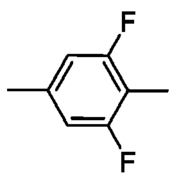 | UI | 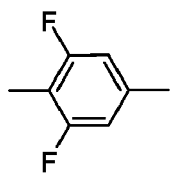 |
| U(F.F) | 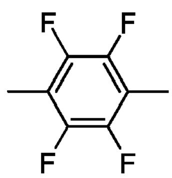 | | |
| Y | 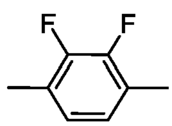 | | |
| M | 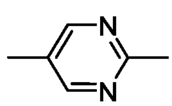 | MI | 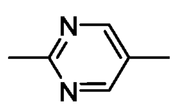 |

(continued)

| | | | |
|---|---|---|---|
| MI(F) | 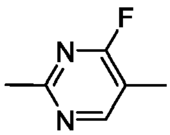 | MI(F.F) | 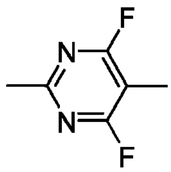 |
| MI(Cl) | 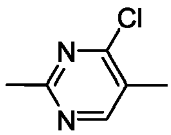 | MI(Cl.Cl) | 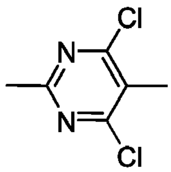 |
| MI(Cl.F) | 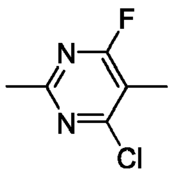 | | |
| Pz | 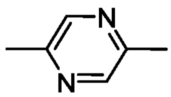 | | |
| Pz(Cl) | 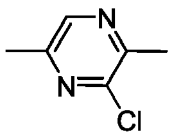 | Pz(F) | 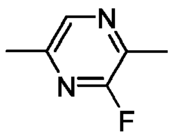 |
| Pz(Cl)I | 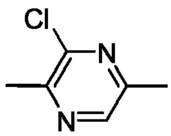 | Pz(F)I | 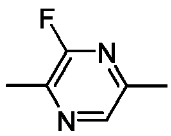 |
| N | 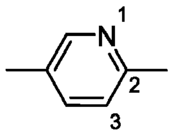 | NI | 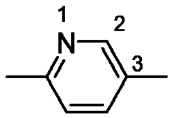 |
| N(4Cl) | 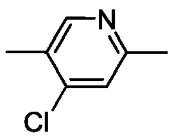 | N(4F) | 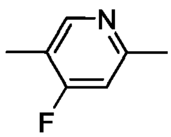 |
| NI(2Cl) | 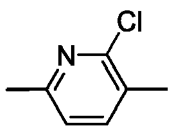 | NI(2F) | 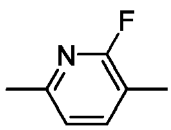 |

| | | | |
|---|---|---|---|
| NI(5Cl) | 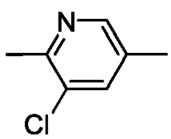 | NI(5F) | 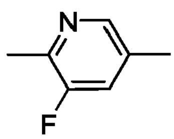 |

(continued)

| | | | |
|---|---|---|---|
| Np | 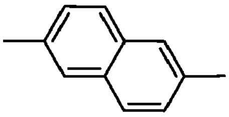 | | |
| N3f | 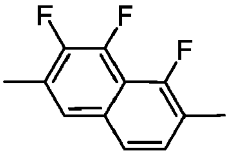 | N3fl | 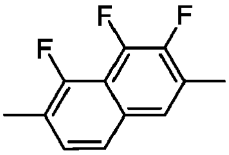 |
| tH | 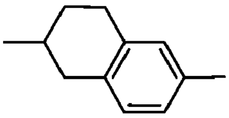 | tHl | 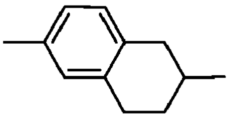 |
| tH2f | 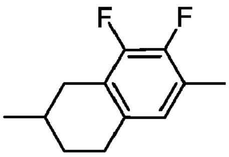 | tH2fl | 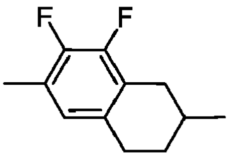 |
| dH | 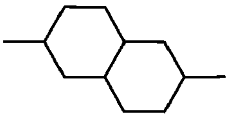 | | |
| K | 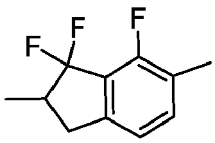 | Kl | 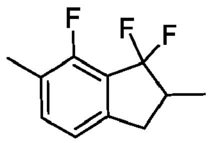 |
| L | 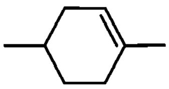 | Ll | 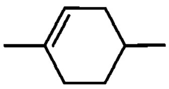 |
| F | 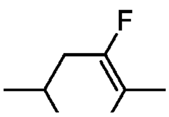 | Fl | 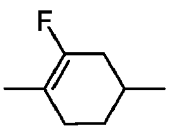 |

| | | | |
|---|---|---|---|
| P | 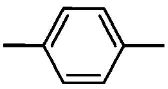 | P(n,m) | 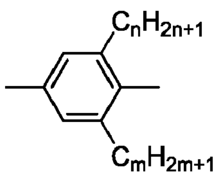 |
| P(o) | 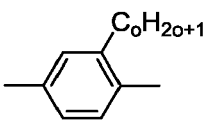 | Pl(o) | 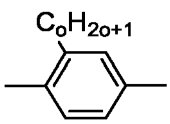 |
| P(i3) | 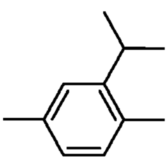 | Pl(ic3) | 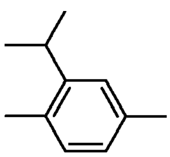 |

(continued)

P(t4) 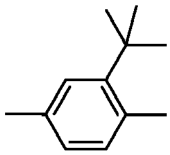

Pl(t4) 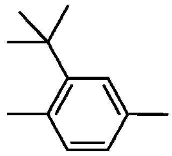

P(c3) 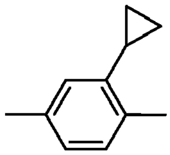

Pl(c3) 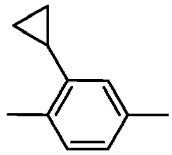

P(c4) 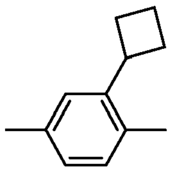

Pl(c4) 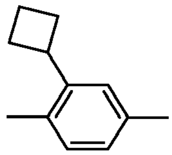

P(c5) 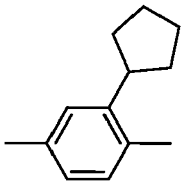

Pl(c5) 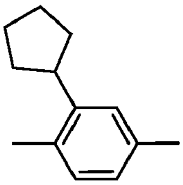

P(e5) 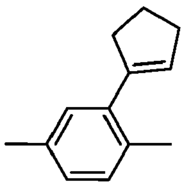

Pl(e5) 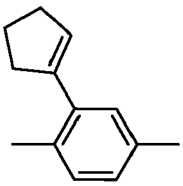

**P(c6)** 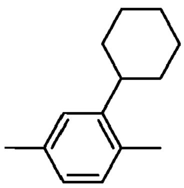

**Pl(c6)** 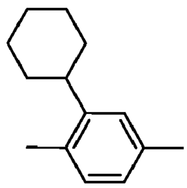

P(e6) 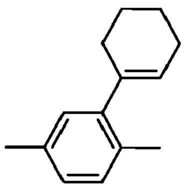

**Pl(e6)** 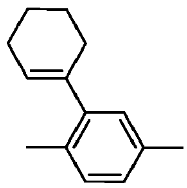

Gl(o) 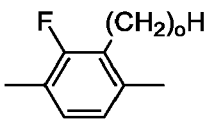

in which o = 1,2,3,4,5 or 6

G(o) 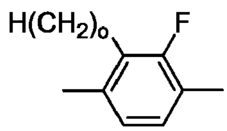

in which o = 1,2,3,4,5 or 6

Gl(i3) 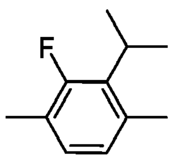

G(i3) 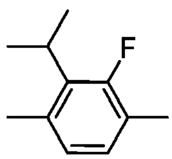

(continued)

| | | | |
|---|---|---|---|
| GI(t4) | 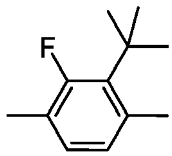 | G(t4) | 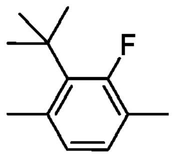 |
| GI(c3) | 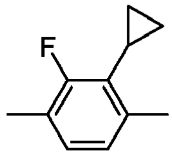 | G(c3) | 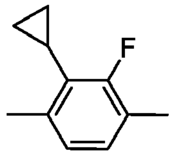 |
| GI(c4) | 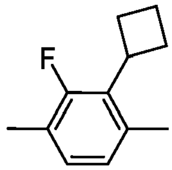 | G(c4) | 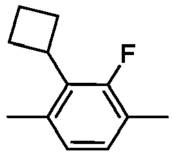 |
| GI(c5) | 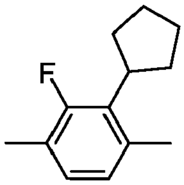 | G(c5) | 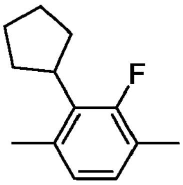 |

| | | | |
|---|---|---|---|
| GI(e5) | 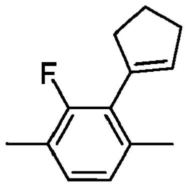 | G(e5) | 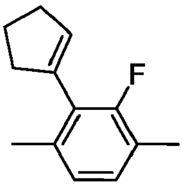 |
| GI(c6) | 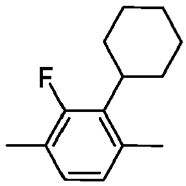 | G(c6) | 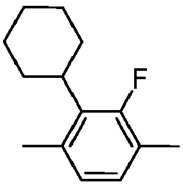 |
| GI(e6) | 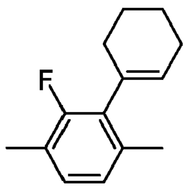 | G(e6) | 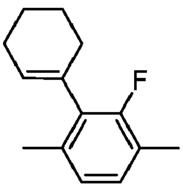 |
| Np(1,4) | 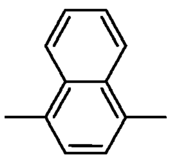 | Th | 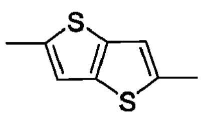 |

**Table B: Linking groups**

| | | | |
|---|---|---|---|
| **E** | $-CH_2CH_2-$ | **Z** | -CO-O- |
| **V** | -CH=CH- | **ZI** | -O-CO- |

(continued)

| | | | |
|---|---|---|---|
| **X** | -CF=CH- | **O** | $-CH_2-O-$ |
| **XI** | -CH=CF- | **OI** | $-O-CH_2-$ |
| **B** | -CF=CF- | **Q** | $-CF_2-O-$ |
| **T** | -C≡C- | **QI** | $-O-C F_2-$ |
| **W** | $-CF_2CF_2-$ | | |

**Table B: End groups**

| Left-hand side | | Right-hand side Used alone | |
|---|---|---|---|
| **-n-** | $C_nH_{2n+1}-$ | **-n** | $-C_nH_{2n+1}$ |
| **-nO-** | $C_nH_{2n+1}-O-$ | **-On** | $-O-C_nH_{2n+1}$ |
| -V- | $CH_2=CH-$ | -V | $-CH=CH_2$ |
| -nV- | $C_nH_{2n+1}-CH=CH-$ | -nV | $-C_nH_{2n}-CH=CH_2$ |
| -Vn- | $CH_2=CH- C_nH_{2n+1}-$ | -Vn | $-CH=CH-C_nH_{2n+1}$ |
| -nVm- | $C_nH_{2n+1}-CH=CH-C_mH_{2m}-$ | -nVm | $-C_nH_{2n}-CH=CH-C_mH_{2m+1}$ |
| -N- | N≡C- | -N | -C≡N |
| -S- | S=C=N- | -S | -N=C=S |
| -F- | F- | -F | -F |
| -CL- | Cl- | -CL | -Cl |
| -M- | $CFH_2-$ | -M | $-CFH_2$ |
| -D- | $CF_2H-$ | -D | $-CF_2H$ |
| -T- | $CF_3-$ | -T | $-CF_3$ |
| -MO- | $CFH_2O-$ | -OM | $-OCFH_2$ |
| -DO- | $CF_2HO-$ | -OD | $-OCF_2H$ |
| -TO- | $CF_3O-$ | -OT | $-OCF_3$ |
| -FXO- | $CF_2=CH-O-$ | -OXF | $-O-CH=CF_2$ |
| -A- | H-C≡C- | -A | -C≡C-H |
| -nA- | $C_nH_{2n+1}-C≡C-$ | -An | $-C≡C-C_nH_{2n+1}$ |
| -NA- | N≡C-C≡C- | -AN | -C≡C-C≡N |
| -(cn)- | 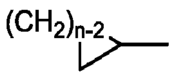 | -(cn) | 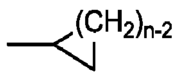 |
| -(cn)m- | 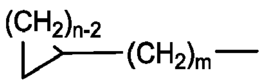 | -m(cn) | 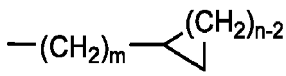 |
| | Used in combination with others | | |
| -...A...- | -C≡C- | -...A... | -C≡C- |
| -...V...- | -CH=CH- | -...V... | -CH=CH- |
| -...Z...- | -CO-O- | -...Z... | -CO-O- |
| -...ZI...- | -O-CO- | -...ZI... | -O-CO- |
| -...K...- | -CO- | ... K... | -CO- |
| -...W...- | -CF=CF- | -...W... | -CF=CF- |

in which n and m each denote integers, and the three dots "..." are placeholders for other abbreviations from this table.

Branched lateral groups are numbered starting from the position next to the ring (1) where the longest chain is seleted, the smaller number indicating the length of the branch and the superscript number in brackets indicates the position of the branch, for example:

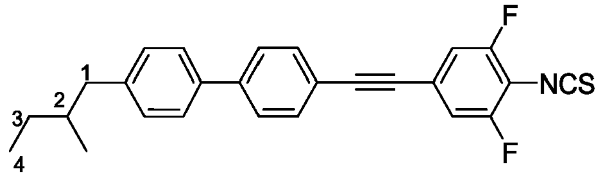

PPTU-4(1[2])-S

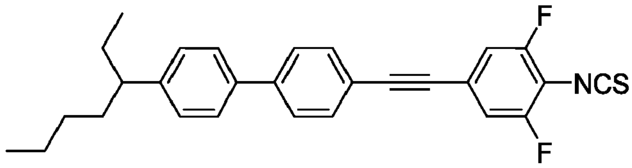

PPTU-5(2[1])-S

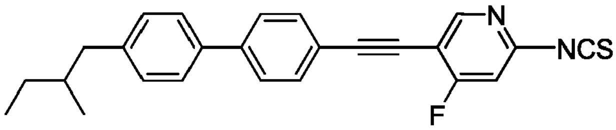

PPTN(4F)-4(1[2])-S

The following table shows illustrative structures together with their respective abbreviations. These are shown in order to illustrate the meaning of the rules for the abbreviations. They furthermore represent compounds which are preferably used.

**Table C: Illustrative structures**

The following illustrative structures are compounds, which are preferably additionally used in the media:

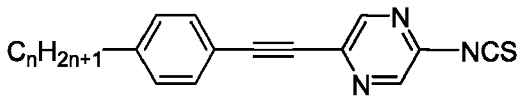

PTPz-n-S

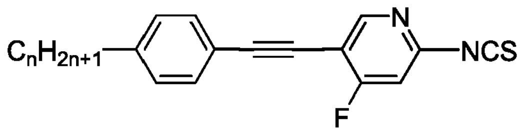

PTN(4F)-n-S

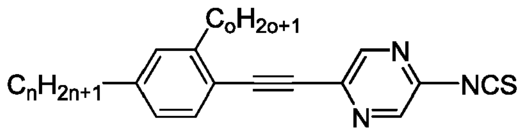

P(o)TPz-n-S

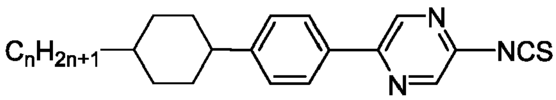

CPPz-n-S

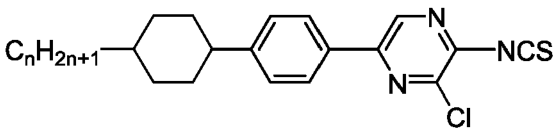

CPPz(Cl)-n-S

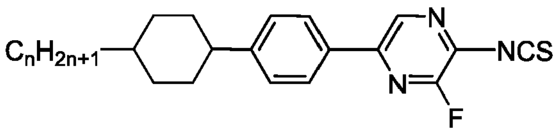

CPPz(F)-n-S

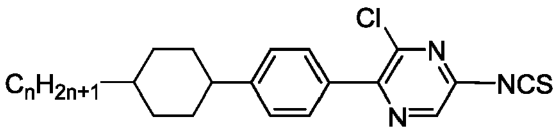

CPPz(Cl)I-n-S

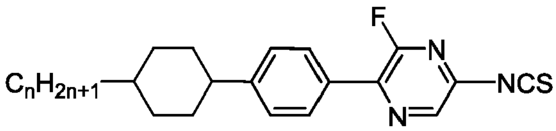

CPPz(F)I-n-S

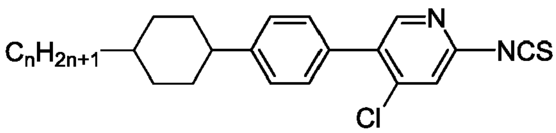

CPN(4Cl)-n-S

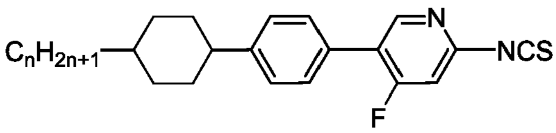

CPN(F)-n-S

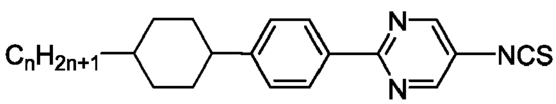

CPMI-n-S

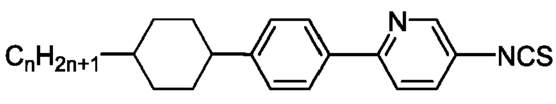

CPNI-n-S

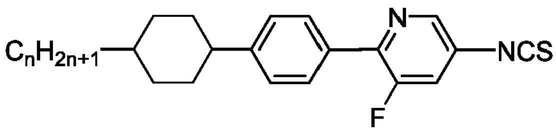

CPNI(5F)-n-S

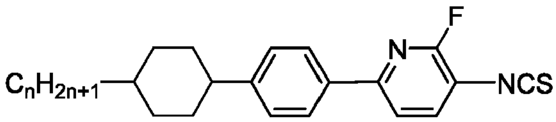

CPNI(2F)-n-S

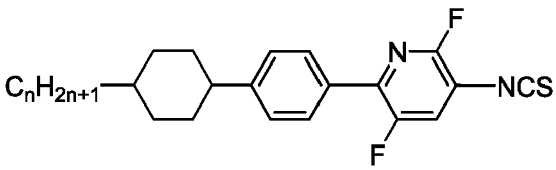

CPNI(2F,5F)-n-S

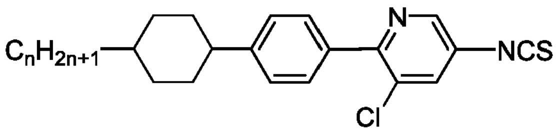

CPNI(5Cl)-n-S

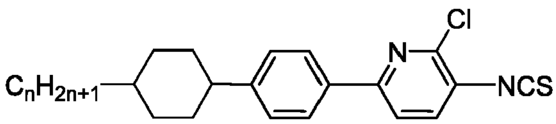

CPNI(2Cl)-n-S

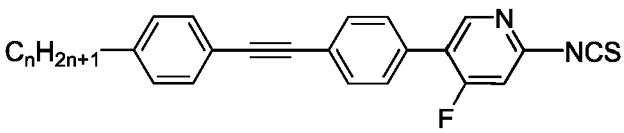

PTPN(4F)-n-S

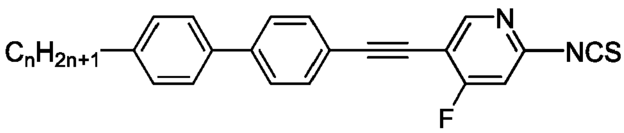

PPTN(4F)-n-S

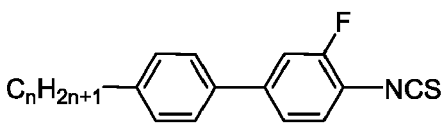

PG-n-S

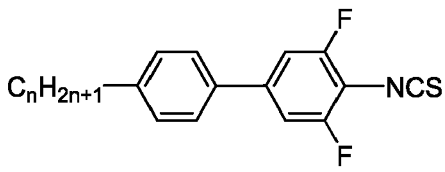

PU-n-S

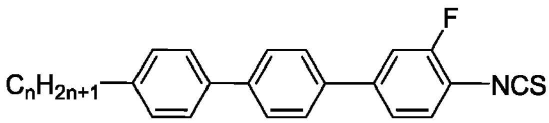

PPG-n-S

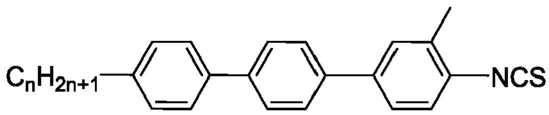

PPP(1)-n-S

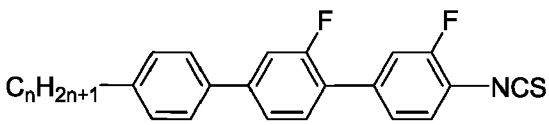

PGG-n-S

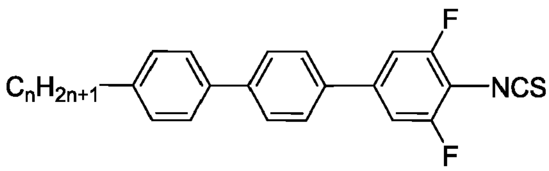

PPU-n-S

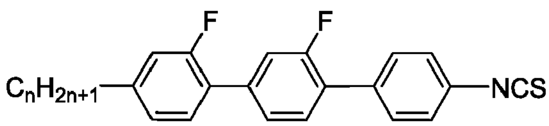

GGP-n-S

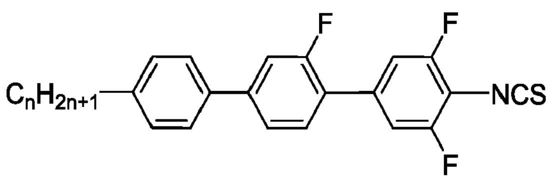

PGU-n-S

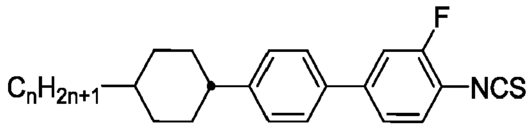

CPG-n-S

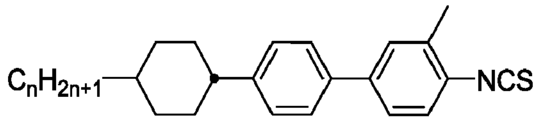

CPP(1)-n-S

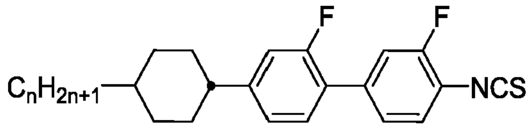

CGG-n-S

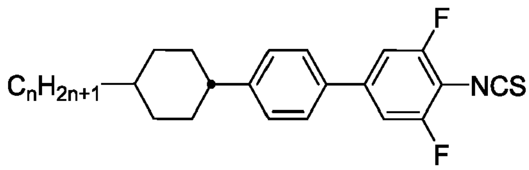

CPU-n-S

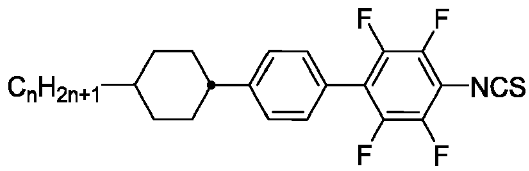

CPU(F,F)-n-S

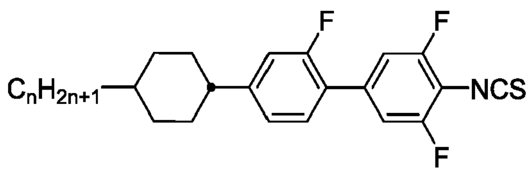

CGU-n-S

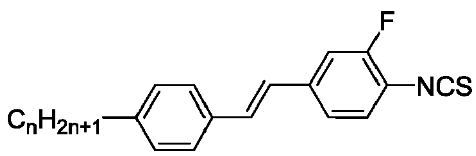

PVG-n-S

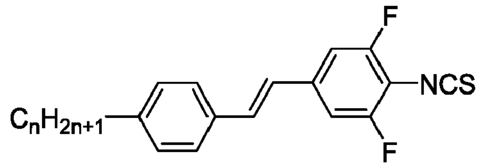

PVU-n-S

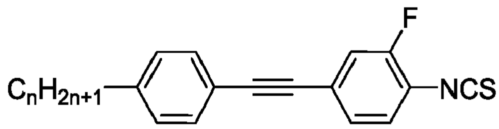

PTG-n-S

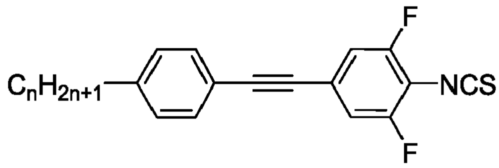

PTU-n-S

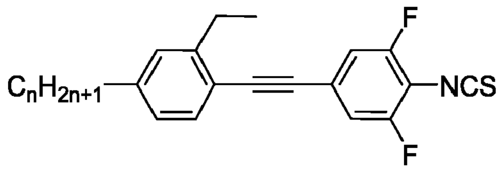

P(2)TU-n-S

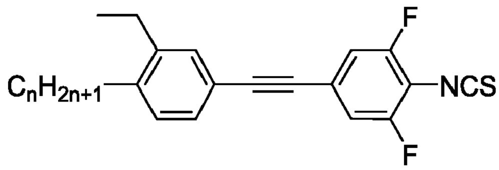

PI(2)TU-n-S

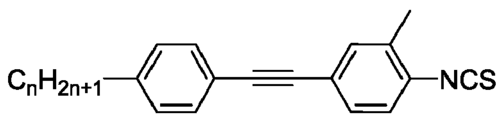

PTP(1)-n-S

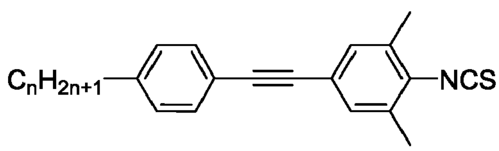

PTP(1,1)-n-S

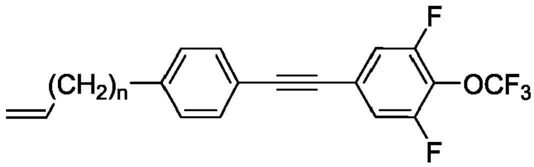

PTU-Vn-OT

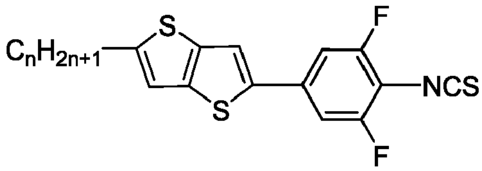

ThU-n-S

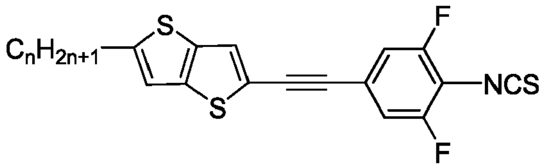

ThTU-n-S

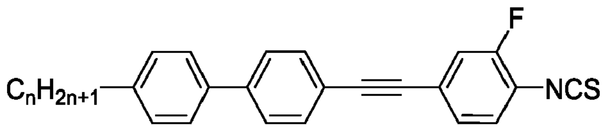

PPTG-n-S

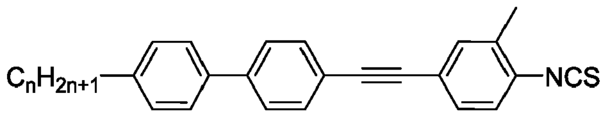

PPTP(1)-n-S

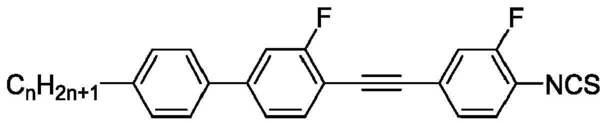

PGTG-n-S

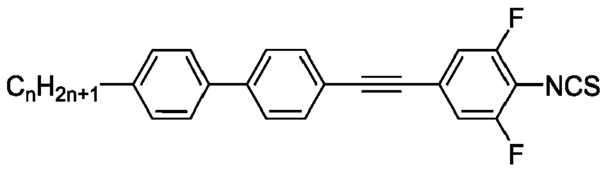

PPTU-n-S

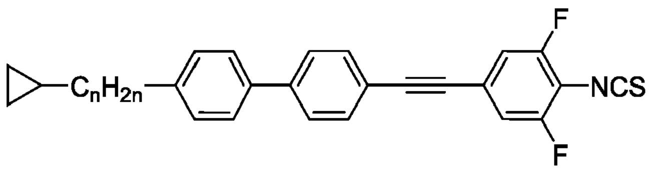

PPTU-(c3)n-S

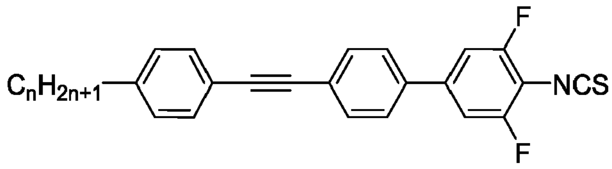

PTPU-n-S

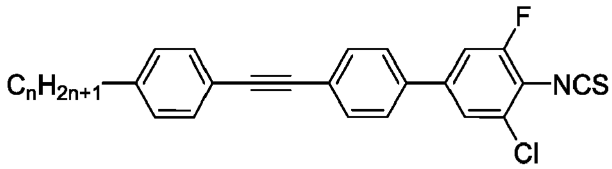

PTPG(Cl)-n-S

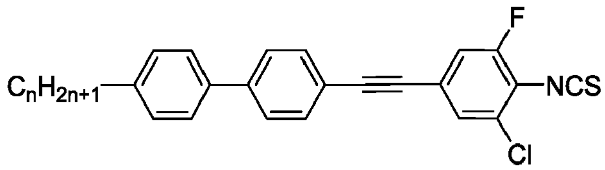

PPTG(Cl)-n-S

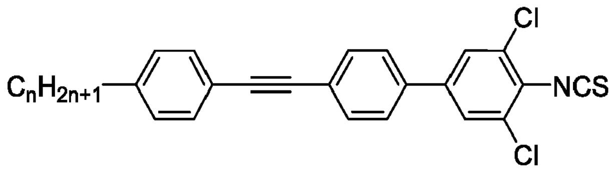

PTPP(Cl,Cl)-n-S

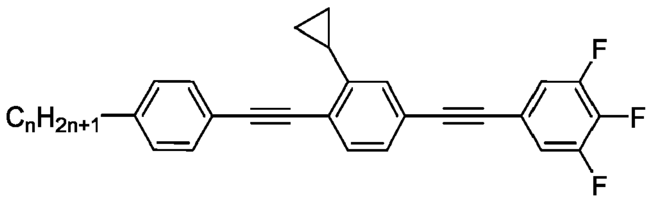

PTPI(c3)TU-n-F

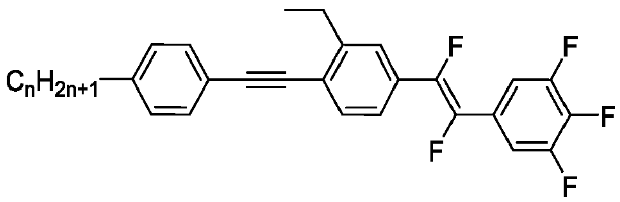

PTPI(2)WU-n-F

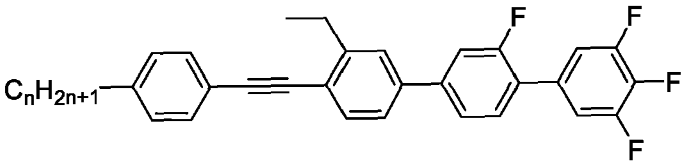

PTPI(2)GU-n-F

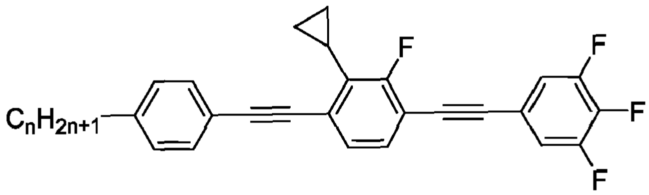

PTG(c3)TU-n-F

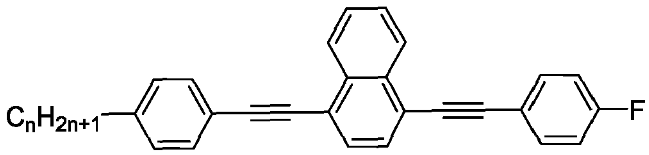

PTN(1,4)TP-n-F

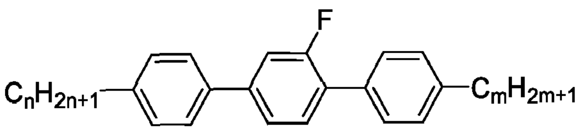

PGP-n-m

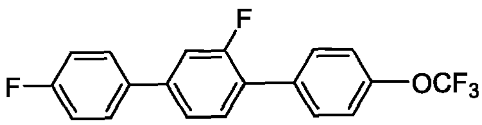

PGP-F-OT

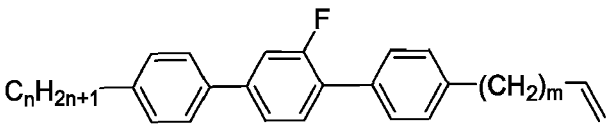

PGP-n-mV

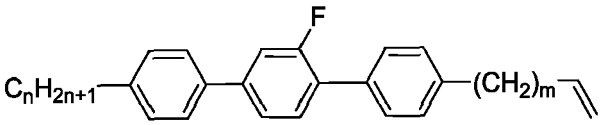

PGP-n-mVI

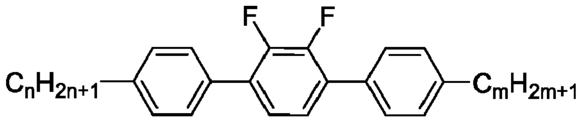

PYP-n-m

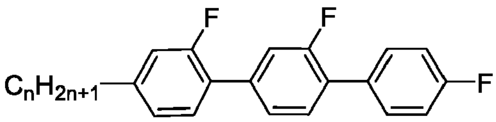

GGP-n-F

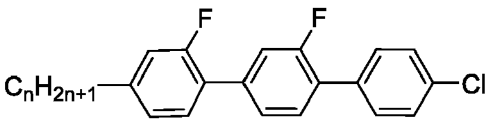

GGP-n-CL

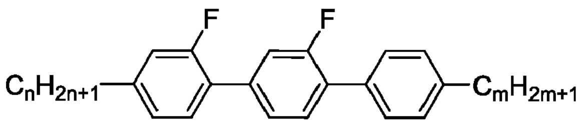

GGP-n-m

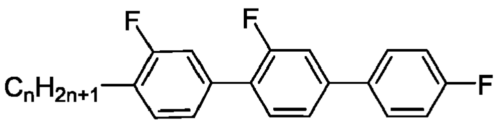

PGIGI-n-F

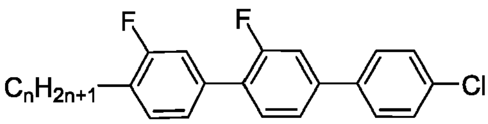

PGIGI-n-CL

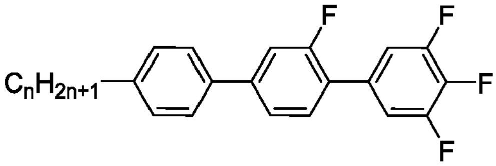

PGU-n-F

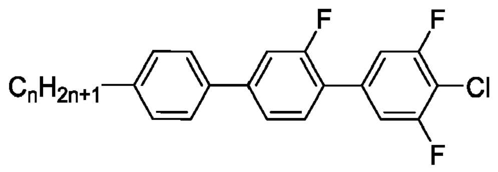

PGU-n-CL

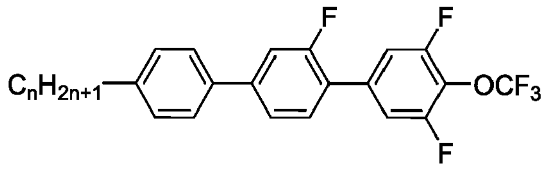

PGU-n-OT

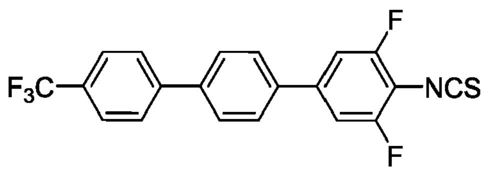

PPU-T-S

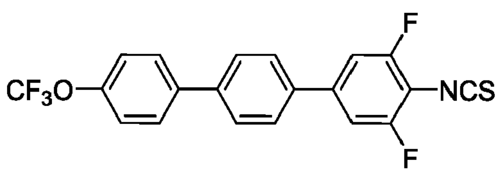

PPU-TO-S

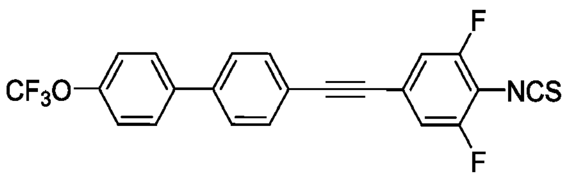

PPTU-TO-S

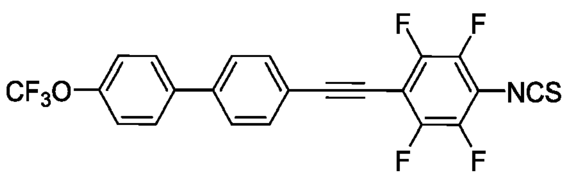

PPTU(F,F)-TO-S

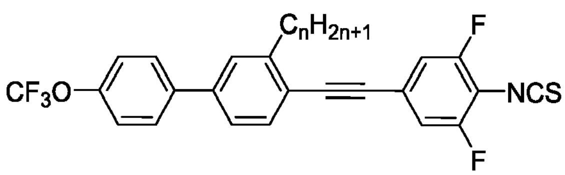

PP(n)TU-TO-S

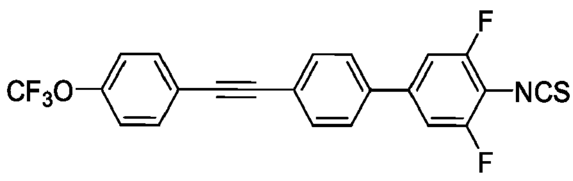

PTPU-TO-S

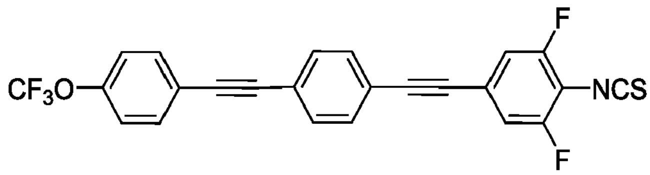

PTPTU-TO-S

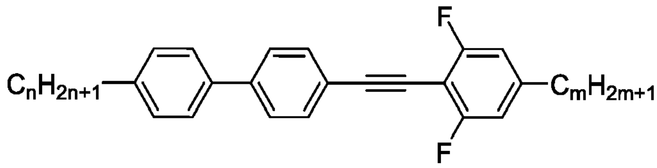

PPTUI-n-m

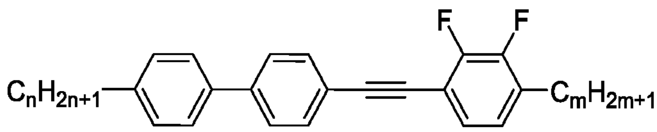

PPTY-n-m

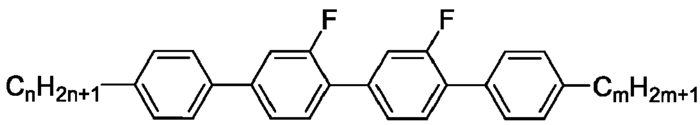

PGGP-n-m

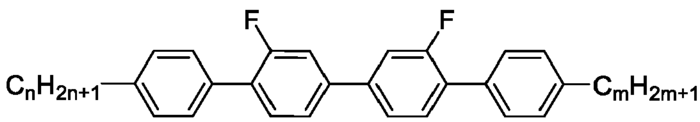

PGIGP-n-m

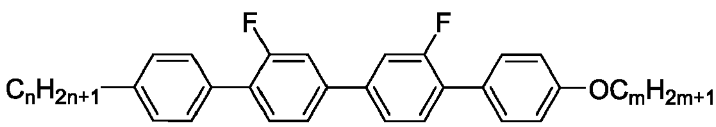

PGIGP-n-Om

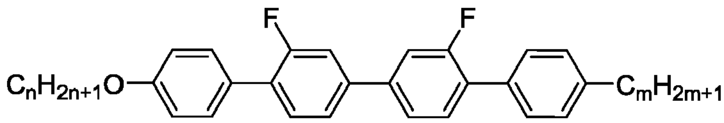

PGIGP-nO-m

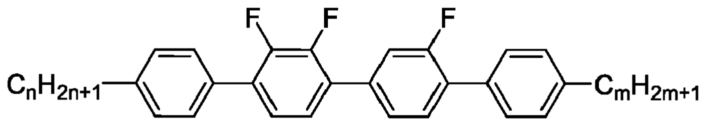

PYGP-n-m

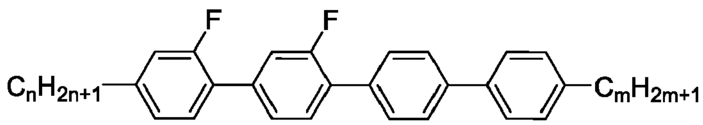

GGPP-n-m

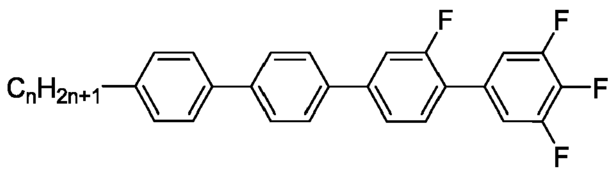

PPGU-n-F

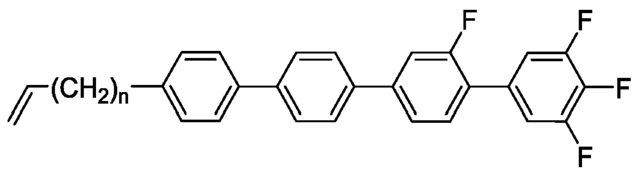

PPGU-Vn-F

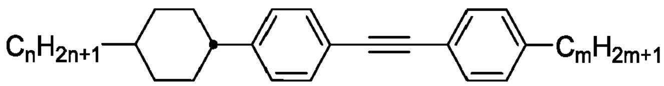

CPTP-n-m

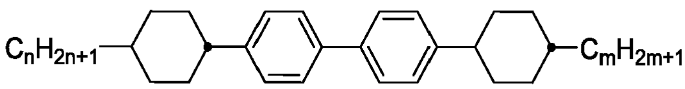

CPPC-n-m

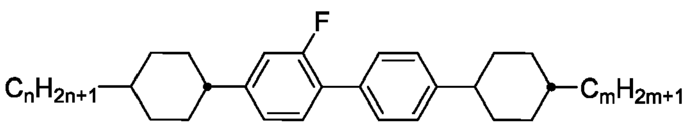

CGPC-n-m

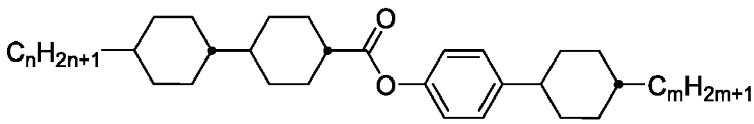

CCZPC-n-m

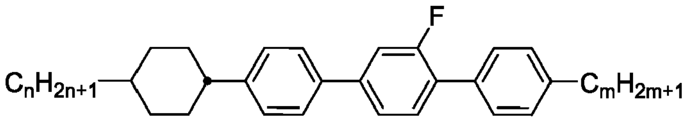

CPGP-n-m

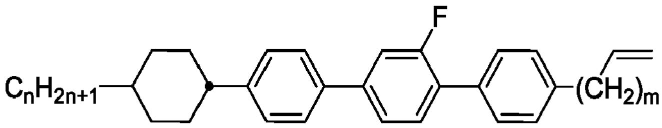

CPGP-n-mV

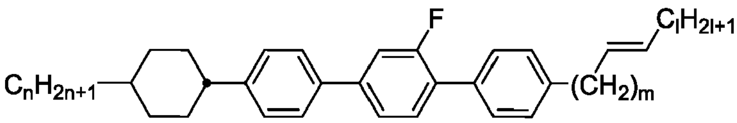

CPGP-n-mVl

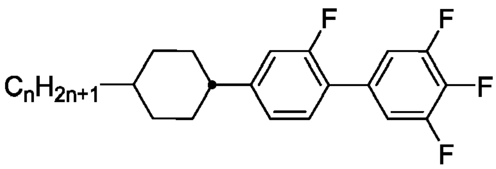

CGU-n-F

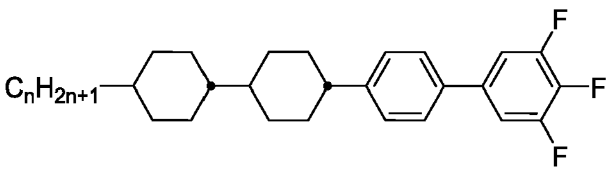

CCPU-n-F

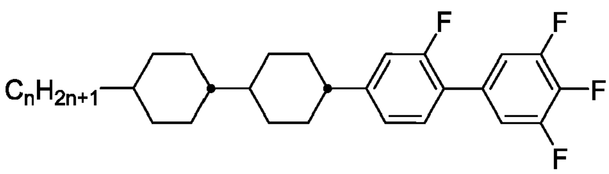

CCGU-n-F

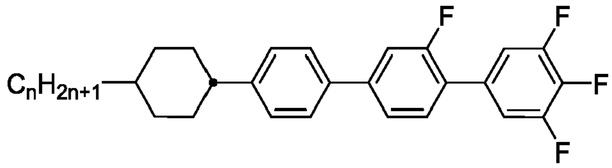

CPGU-n-F

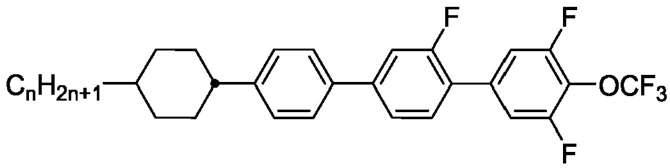

CPGU-n-OT

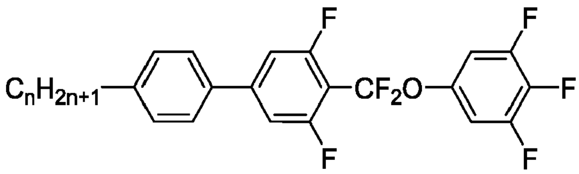

PUQU-n-F

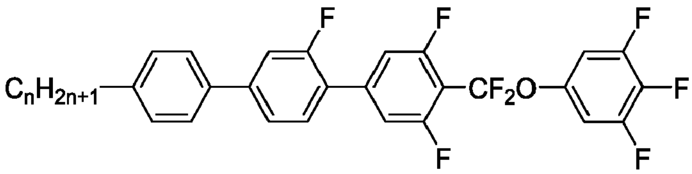

PGUQU-n-F

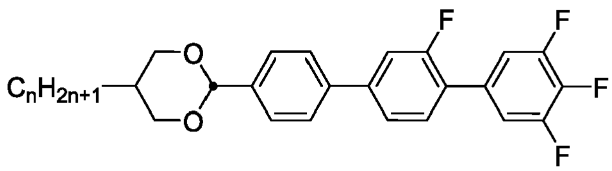

DPGU-n-F

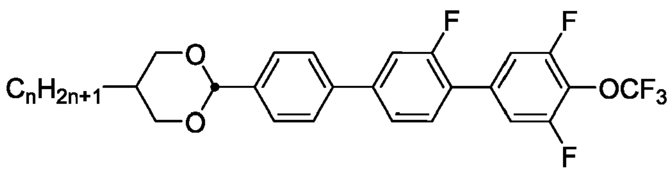

DPGU-n-OT

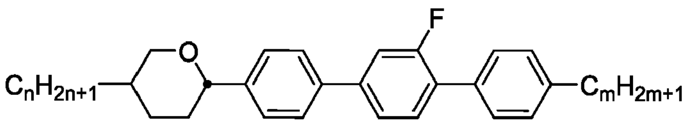

APGP-n-m

in which m and n, identically or differnetly, are 1,2,3,4,5,6 or 7.

Preferably, the medium according to the invention comrises one or more compounds selected from the compounds of Table C.

The following table, Table D, shows illustrative compounds which can be used as alternative stabilizers in the mesogenic media in accordance with the present invention. The total concentration of these and similar compounds in the media is preferably 5 % or less.

**Table D**

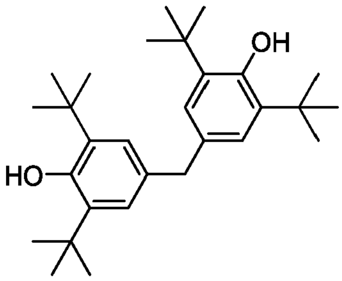

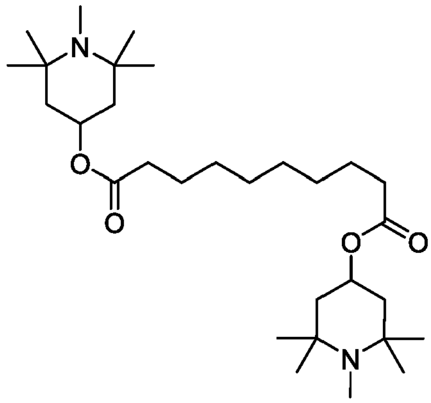

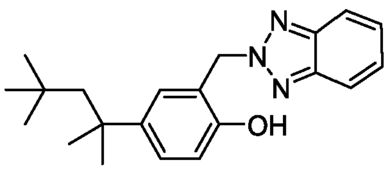

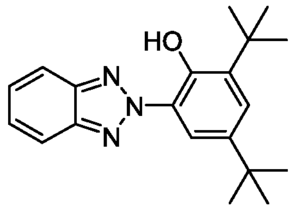

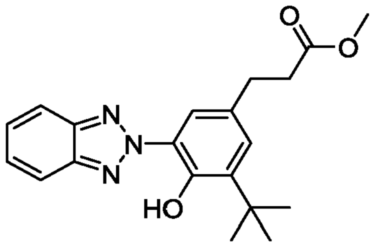

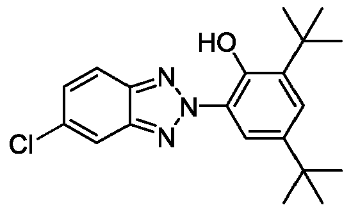

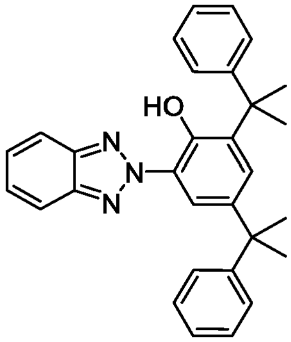

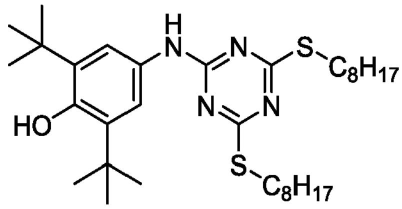

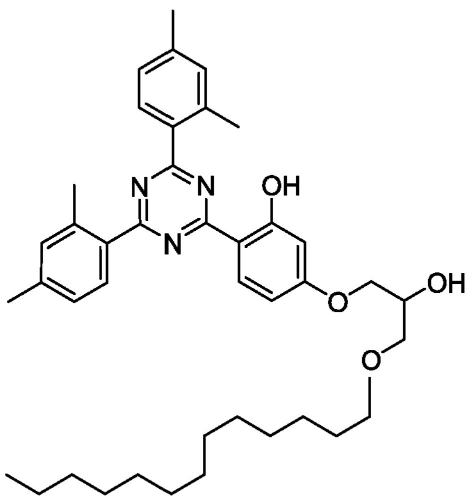

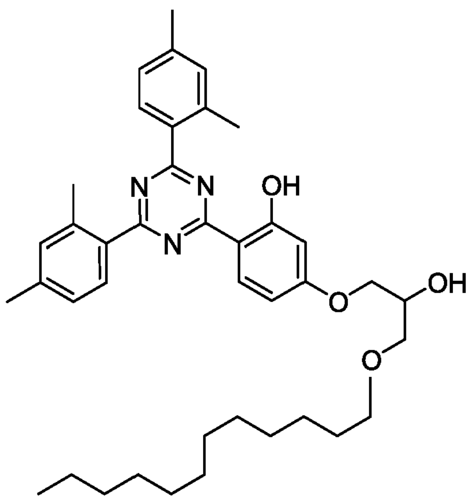

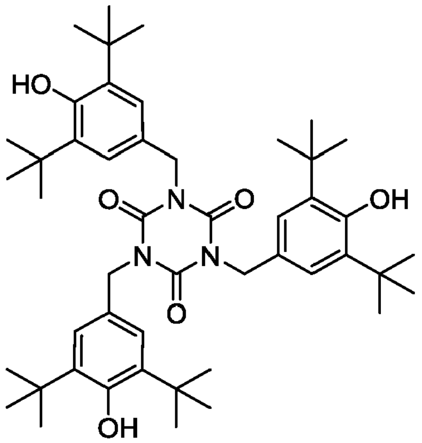

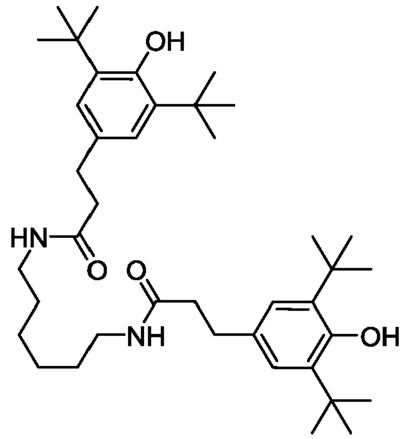

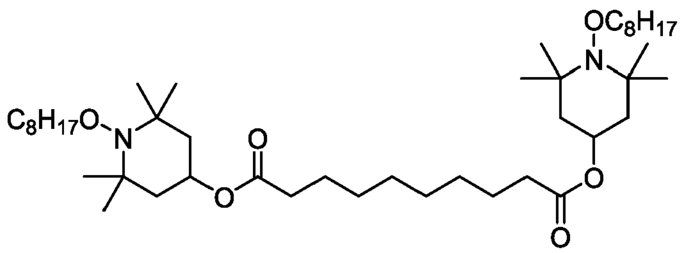

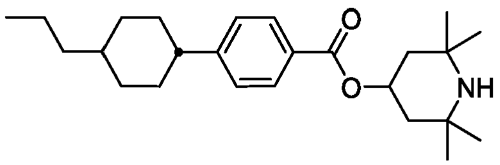

In a preferred embodiment of the present invention, the mesogenic media comprise one or more compounds selected from the group of the compounds from Table D.

Another aspect of the invention relates to a use of a polymerizable liquid crystal medium for producing a high-frequency device. The polymerizable LC medium comprises at least one mesogenic component. In particular, the polymerizable LC medium comprising at least one mesogenic component described herein is used for producing the high-frequency device. Features and embodiments of the medium are therefore also disclosed for the use and vice versa.

Another aspect of the invention relates to a high-frequency device. The high-frequency device described herein is preferably produced with the method described herein. Features and embodiments of the high-frequency device are therefore also disclosed for the method and vice versa.

According to at least one embodiment, the high-frequency device comprises a three-dimensional body comprising a polymer and being formed as a single piece. In particular, the three-dimensional body consists of the polymer. In this context, "being formed as a single piece" means that the three-dimensional body is formed in a continuous fashion. In other words, the three-dimensional body is not composed of two or more parts. For example, the three-dimensional body is formed by a continuous polymer extending throughout the entire three-dimensional body. It should be noted that "the three-dimensional body being formed as a single piece" does not necessarily mean that the three-dimensional body is a solid block of polymer material. While this is a possibility, the three-dimensional body can alternatively comprise recesses, gaps, holes, voids, cavities and/or inclusions. Further, the three-dimensional body can have any shape or form that is required for suitable applications such as, but not limited to the shape or form of a cuboid, a rod, a cone, a wedge, combinations thereof, or complex structures like branched distribution networks.

According to at least one embodiment, the high-frequency device comprises at least one mesogenic component. In particular, the high-frequency device can comprise at least two mesogenic components, for example, a plurality of mesogenic components. The at least one mesogenic component can be part of the three-dimensional body and/or be

confined in the three-dimensional body.

According to at least one embodiment, the high-frequency device comprises a three-dimensional body comprising a polymer and being formed as a single piece, wherein the high-frequency device comprises at least one mesogenic component.

Such a high-frequency device is suitable for high-frequency applications. Depending on the specific configuration, the high-frequency device can be a non-tunable high-frequency device such as a waveguide structure or a tunable high-frequency device such as a phase shifter or antenna array.

According to at least one embodiment, the at least one mesogenic component is incorporated in the polymer. In this context, "incorporated in the polymer" means that the at least one mesogenic component is part of the polymer that forms the three-dimensional body. In other words, the at least one mesogenic component has covalent bonds within the polymer. In particular, the polymer comprises or consists of the at least one mesogenic component. In the case that the high-frequency device comprises more than one mesogenic component, all of the mesogenic components can be incorporated in the polymer or, alternatively, only one or some of the mesogenic components can be incorporated in the polymer. A three-dimensional body comprising a polymer of a mesogenic component can advantageously have a low dielectric loss. Further, a high-frequency device comprising such a three-dimensional body can advantageously be suited as a dielectric waveguide without metallic layers.

According to at least one embodiment, the three-dimensional body comprises at least one cavity. A cavity in the three-dimensional body is surrounded at least partially by the polymer of the three-dimensional body and is free from the polymer. In particular, the at least one cavity is a recess in the three-dimensional body and/or an inclusion in the three-dimensional body. A three-dimensional body with at least one cavity formed as a recess is, for example, a waveguide comprising a branched distribution network. A three-dimensional body with at least one cavity formed as an inclusion is, for instance, a phase shifter, a power divider, a combiner, a filter, or an antenna that can contain a further material in the cavity.

According to at least one embodiment, the at least one cavity is completely surrounded by the three-dimensional body, and the at least one cavity contains the mesogenic component. In other words, the at least one cavity is formed as an inclusion in the three-dimensional body. A high-frequency device comprising a mesogenic component in a cavity completely surrounded by a three-dimensional body formed as a single piece is advantageously a tunable high-frequency device free of openings, fractures, breaks, ruptures, discontinuities and/or interruptions in the vicinity of the cavity, and, in particular, free of adhesive materials bridging or holding together openings, fractures, breaks, ruptures, discontinuities and/or interruptions in the vicinity of the cavity.

According to at least one embodiment, the high-frequency device comprises a conductive layer. The conductive layer can be a coating on a surface of the three-dimensional body. For example, all accessible surfaces of the three-dimensional body are coated with the conductive layer such that the entire surface of the three-dimensional body is metallized. By coating all accessible surfaces of the three-dimensional body, a waveguide such as a horn antenna can be provided.

According to at least one embodiment, the high-frequency device comprises a pair of electrodes comprising at least one conductive layer. In other words, the high-frequency device comprises at least two electrodes configured to apply an electrical potential. In particular, the pair of electrodes is arranged on two opposite sides of a cavity filled with a mesogenic component in the three-dimensional body. In this case, the pair of electrodes is configured for driving the mesogenic component in the cavity. The molecules of the mesogenic component can be aligned in a distinct orientation by applying a distinct electrical potential across the cavity. In other words, the high-frequency device is tunable.

According to at least one embodiment, the high-frequency device is tunable. The tunable high-frequency device comprises at least one cavity completely surrounded by the three-dimensional body and filled with a tunable mesogenic component and a pair of electrodes on two sides of each cavity.

According to at least one embodiment, the high-frequency device is a phase shifter, an antenna, an antenna array, a power divider, a combiner, a single pole multiple throw switch, a filter, a tunable lens, or a tunable metasurface.

Advantageous embodiments and developments of the method for producing a high-frequency device, the use of a polymerizable LC medium for producing a high-frequency device, and the high-frequency device will become apparent from the exemplary embodiments described below in conjunction with the figures.

In the figures:

FIGs. 1 to 4 each show a schematic illustration of a high-frequency device according to an exemplary embodiment.

In the exemplary embodiments and figures, similar or similarly acting constituent parts are provided with the same reference signs. The elements illustrated in the figures and their size relationships among one another should not be regarded as true to scale. Rather, individual elements may be represented with an exaggerated size for the sake of better representability and/or for the sake of better understanding.

FIG. 1 shows a schematic illustration of a high-frequency device 1 according to an exemplary embodiment. The high-frequency device 1 comprises a three-dimensional body 2. The three-dimensional body 2 comprises a polymer and is formed as a single piece meaning that the polymer is continuous throughout the three-dimensional body 2. The

three-dimensional body 2 is not composed from two or more parts, but only consists of one part. The polymer of the three-dimensional body 2 in the exemplary embodiment of FIG. 1 is formed from a polymerizable mesogenic component having a low dielectric loss. For example, the polymerizable mesogenic component is

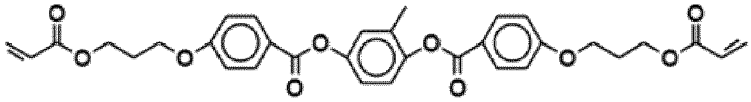

.

The high-frequency device 1 of FIG. 1 can be produced as follows:
A polymerizable LC medium is provided. The polymerizable LC medium comprises at least a polymerizable mesogenic component and a photoinitiator. In a layer-by-layer fashion, regions of the polymerizable LC medium are exposed to electromagnetic radiation, for example, to UV radiation generated by a UV laser. The polymerizable mesogenic component is polymerized in the regions exposed to electromagnetic radiation forming polymerized regions and remains unpolymerized in the unexposed regions. After exposing the regions of one layer, the surface of the layer is coated by a further layer of the polymerizable LC medium. These steps are repeated until the three-dimensional body 2 is formed by the entirety of the polymerized regions. The excess components of the polymerizable LC medium are removed subsequently such that only the three-dimensional body 2 remains.

As used herein, to provide a polymerizable LC medium is taken to mean to allocate a quantity of polymerizable LC medium for example in form of a droplet on a surface or in a suitable container that is open or transparent to the irradiation that is used for polymerization of the polymerisable component having a volume. A region of the polymerizable LC medium is a sub-volume of said volume or identical to the volume of polymerizable LC medium.

The three-dimensional body 2 of the high-frequency device 1 of the exemplary embodiment of FIG. 1 can be formed as a solid block of polymer material, for example, having the form of a rod or wedge. In particular, the three-dimensional body 2 is not coated with a conductive layer. For example, such a high-frequency device 1 is a waveguide such as a rod antenna.

Alternatively, the three-dimensional body 2 of the high-frequency device 1 of the exemplary embodiment of FIG. 1 can comprise cavities in the form of recesses (not shown here). Such cavities or recesses can be formed by not exposing several adjacent regions of subsequent layers such that no polymer is formed within a certain part of the three-dimensional body 2. Further, the accessible surface of the three-dimensional body 2 can be coated with a conductive layer made of a metal. For example, such a high-frequency device 1 is a waveguide such as a horn antenna.

FIG. 2 shows a schematic illustration of high-frequency device 1 according to a further exemplary embodiment. The high-frequency device 1 of FIG. 2 comprises a three-dimensional body 2 comprising a cavity 3 in the form of an inclusion. The three-dimensional body 2 comprises a polymer and is formed as a single piece meaning that the polymer is continuous throughout the three-dimensional body 2. The three-dimensional body 2 is not composed from two or more parts, but only consists of one part that is formed around the cavity 3. In other words, the cavity is completely surrounded by the continuous polymer of the three-dimensional body 2 without any openings, fractures, breaks, ruptures, discontinuities and/or interruptions. Further, the three-dimensional body 2 around the cavity 3 is free of adhesive materials bridging or holding together openings, fractures, breaks, ruptures, discontinuities and/or interruptions.

The polymer of the three-dimensional body 2 is formed from a polymerizable component. The polymerizable component can be a polymerizable non-mesogenic component and/or a polymerizable mesogenic component. The cavity 3 contains a non-polymerizable mesogenic component having a liquid crystal phase. The cavity is, in particular, filled completely with the non-polymerizable mesogenic component. The non-polymerizable mesogenic component having a liquid crystal phase can expand more under heat than the solid polymer of the three-dimensional body 2. Thus, depending on the application, a compensation volume (not shown here) may be incorporated in the three-dimensional body 2, for example, extending sideways from the cavity 3. The compensation volume can be surrounded by the polymer of the three-dimensional body 2 and formed as a single piece with the rest of the three-dimensional body 2. Alternatively or additionally, temperature expansion can be ensured by membranes.

The high-frequency device 1 of FIG. 2 can be produced with the method described in conjunction with FIG. 1 with the following differences:
The polymerizable LC medium comprises at least a polymerizable component, a non-polymerizable mesogenic component and a photoinitiator. The polymerizable component can be a polymerizable non-mesogenic component and/or polymerizable mesogenic component.

The step of exposing regions of the polymerizable LC medium to electromagnetic radiation in a layer-by-layer fashion is performed in such a way that a cavity 3 is formed in the three-dimensional body 2 that is formed, filled with the non-polymerizable mesogenic component and enclosed in situ without interrupting the production process. During polymerization, the polymerizable component is pulled out of the polymerizable LC medium and polymerizes in the

regions exposed to electromagnetic radiation, whereas the non-polymerizable mesogenic component remains in the liquid phase. The remaining liquid phase containing the non-polymerizable mesogenic component is not removed, but remains in the cavity 3 that is subsequently enclosed by further steps of exposing regions of the polymerizable LC medium to electromagnetic radiation forming a continuous polymer around the entirety of the cavity 3. The cavity 3 is thus formed in such a way that it is completely surrounded by the polymeric regions that form the three-dimensional body 2. In other words, the polymer of the three-dimensional body 2 surrounding the at least one cavity 3 is formed as a single piece. In particular, the at least one cavity 3 is hermetically enclosed or sealed by the polymer of the three-dimensional body 2. Thus, the liquid crystal molecules of the non-polymerizable mesogenic component can be immediately sealed in the surrounding polymer and are ready for use without any separate filling processes and/or subsequent sealing processes.

The high-frequency device 1 of FIG. 3 differs from the high-frequency device 1 of FIG. 2 in that the high-frequency device 1 of FIG. 3 comprises a conductive layer 4 on two surfaces 5 of opposite sides of the three-dimensional body 2. The conductive layer 4 can be printed on the three-dimensional body 2 or applied manually after producing the three-dimensional body 2. The conductive layer 4 can be a metal such as copper or silver or a transparent conductive oxides such as indium tin oxide. In the exemplary embodiment of FIG. 3, the conductive layers 4 are arranged on the surfaces 5 of the three-dimensional body 2 in such a way that they are on opposite sides of the cavity 3 containing a non-polymerizable mesogenic component. Alternatively, the conductive layers can be arranged in a side-by-side arrangement on one surface 5 of the three-dimensional body 2 in such a way that they are on the same side of the cavity 3 (not shown). In other words, the two conductive layers 4 are formed as a pair of electrodes. In this case, the pair of electrodes is configured for driving the non-polymerizable mesogenic component in the cavity 3. The molecules of the non-polymerizable mesogenic component can be aligned in a distinct orientation by applying a distinct electrical potential across the cavity 3. Thus, the high-frequency device 1 of FIG. 3 is a tunable high-frequency device 1 such as a phase shifter or a filter.

The high-frequency device 1 of FIG. 4 differs from the high-frequency device 1 of FIG. 3 in that the high-frequency device 1 of FIG. 4 comprises a plurality of cavities 3 in the three-dimensional body 2. The cavities 3 are arranged parallel to one another and are surrounded completely by the material of the three-dimensional body 2. Between the cavities 3 completely surrounded by the material of the three-dimensional body 2, the three-dimensional body 2 comprises a plurality of recesses. Conductive layers 4 formed as electrodes are arranged parallel to the three-dimensional body 2 such that a main extension plane of the conductive layer 4 is parallel to, but spaced apart from the part of the three-dimensional body 2 comprising the cavities 3. The conductive layers 4 can be anchored with a side surface on a surface 5 of the three-dimensional body 2 that is located in the recesses of the three-dimensional body 2. Additionally, the conductive layers 4 can be kept at a constant distance from the three-dimensional body 2 with narrow polymerized bars (not shown). The high-frequency device 1 of FIG. 4 is a tunable high-frequency device 1 such as an antenna array.

The features and exemplary embodiments described in connection with the figures can be combined with each other according to further exemplary embodiments, even if not all combinations are explicitly described. Furthermore, the exemplary embodiments described in connection with the figures may have alternative or additional features as described in the general part.

The invention is not restricted to the exemplary embodiments by the description on the basis of said exemplary embodiments. Rather, the invention encompasses any new feature and also any combination of features, which in particular comprises any combination of features in the patent claims and any combination of features in the exemplary embodiments, even if this feature or this combination itself is not explicitly specified in the patent claims or exemplary embodiments.

Reference signs

1 high-frequency device
2 three-dimensional body
3 cavity
4 conductive layer
5 surface

## Claims

**1.** A method for producing a high-frequency device (1), the method comprising at least the steps of

a) providing a polymerizable liquid crystal medium,
b) exposing a region of the polymerizable liquid crystal medium to electromagnetic radiation to form a polymerized region,
c) repeating step b) to produce a three-dimensional body (2),

wherein the polymerizable liquid crystal medium comprises at least one mesogenic component.

**2.** The method according to claim 1,
wherein the at least one mesogenic component comprises a polymerizable mesogenic component.

**3.** The method according to claim 2,
wherein the polymerizable mesogenic component comprises at least one compound having the general formula $P^1$-$Sp^1$-MG-$Sp^2$-$P^2$ and/or at least one compound having the general formula $P^1$-$Sp^1$-MG-R, wherein $P^1$ and $P^2$ are polymerizable groups, $Sp^1$ and $Sp^2$ are spacer groups or a single bond, R is an organic radical, and MG is a mesogenic group.

**4.** The method according to any of claims 1 to 3,
wherein the polymerizable liquid crystal medium comprises a polymerizable non-mesogenic component.

**5.** The method according to any of claims 1 to 4,
wherein the at least one mesogenic component comprises a non-polymerizable mesogenic component.

**6.** The method according to any of claims 1 to 5,
wherein producing the three-dimensional body (2) by repeatedly exposing a region of the polymerizable liquid crystal medium to electromagnetic radiation comprises forming at least one cavity (3).

**7.** The method according to claim 6,

wherein the cavity (3) is completely surrounded by the polymerized regions, and
wherein the cavity (3) contains the non-polymerizable mesogenic component.

**8.** The method according to any of claims 1 to 7,
wherein the electromagnetic radiation comprises UV radiation for photopolymerizing the polymerizable liquid crystal medium.

**9.** The method according to any of claims 1 to 8,
wherein the three-dimensional body is formed via additive manufacturing.

**10.** The method according to any of claims 1 to 9, wherein the polymerizable liquid crystal medium comprises a photoinitiator.

**11.** The method according to any of claims 1 to 10,
further comprising the step of forming a conductive layer (4) on at least one surface (5) of the three-dimensional body (2).

**12.** Use of a polymerizable liquid crystal medium comprising at least one mesogenic component for producing a high-frequency device (1) by additive manufacturing.

**13.** A high-frequency device (1) comprising
a three-dimensional body (2) comprising a polymer and being formed as a single piece, wherein the high-frequency device (1) comprises at least one mesogenic component.

**14.** The high-frequency device (1) according to claim 13,
wherein the at least one mesogenic component is incorporated in the polymer.

**15.** The high-frequency device (1) according to any of claims 13 und 14,
wherein the three-dimensional body (2) comprises at least one cavity (3).

**16.** The high-frequency device (1) according to claim 15, wherein the at least one cavity (3) is completely surrounded by the three-dimensional body (2), and wherein the at least one cavity (1) contains the mesogenic component.

**17.** The high-frequency device (1) according to claim 16, further comprising a pair of electrodes comprising at least one conductive layer (4).

**18.** The high-frequency device (1) according to claim 17, wherein the high-frequency device (1) is tunable.

**19.** The high-frequency device (1) according to any of claims 17 or 18, wherein the high-frequency device (1) is a phase shifter, an antenna, an antenna array, a power divider, a combiner, a single pole multiple throw switch, a filter, a tunable lens, or a tunable metasurface.

FIG 1

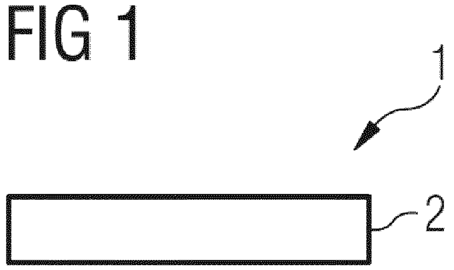


FIG 2

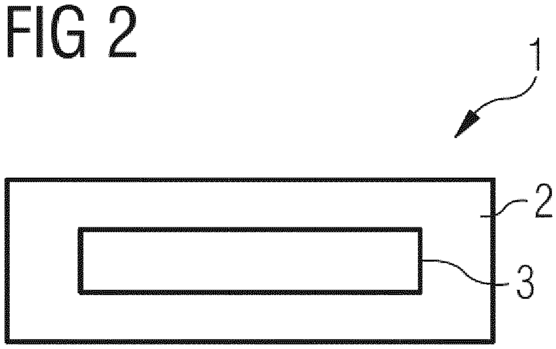


FIG 3

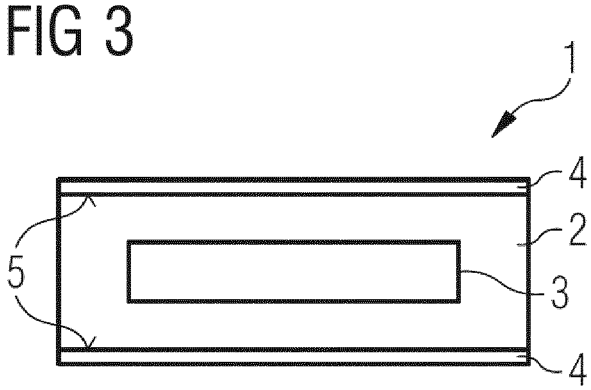

FIG 4

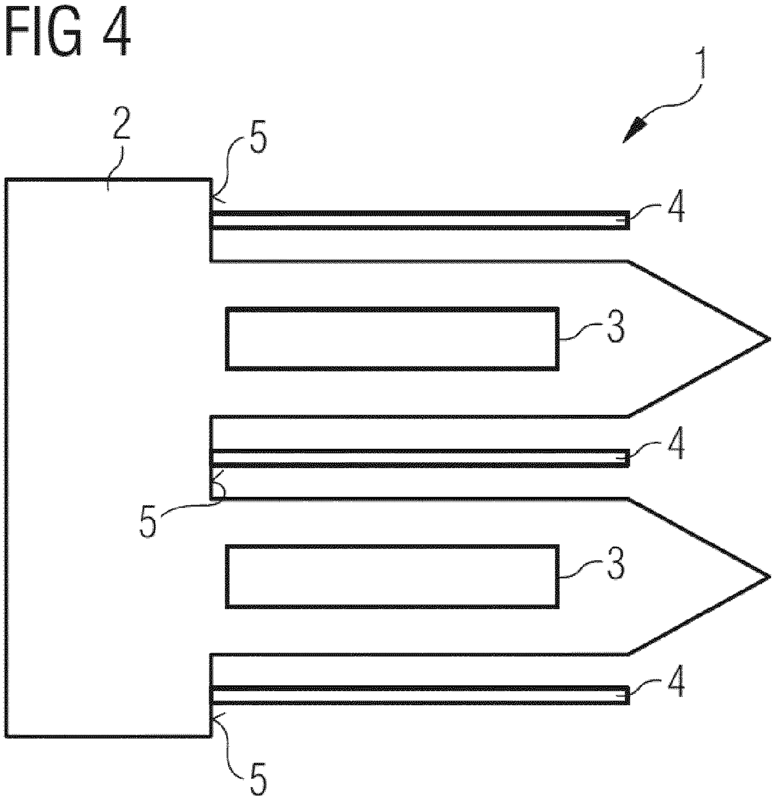

Europäisches Patentamt
European Patent Office
Office européen des brevets

# EUROPEAN SEARCH REPORT

Application Number
EP 24 17 0917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/255161 A1 (ARKEMA FRANCE [FR]) 23 December 2021 (2021-12-23) * page 1, lines 1-3; claims * | 1-11,15, 16 | INV. C09K19/18 B29C64/124 C09K19/34 C09K19/04 C09K19/12 C09K19/16 C09K19/30 |
| X | WO 2022/092063 A1 (JNC CORP [JP]) 5 May 2022 (2022-05-05) | 12-14, 17-19 | |
| Y | * paragraphs [0001], [0035], [0045], [0076], [0098], [0154], [0172]; example 3; table 1; compound S05 * | 1-11,15, 16 | |
| A | EP 3 739 020 A1 (MERCK PATENT GMBH [DE]) 18 November 2020 (2020-11-18) * claims; examples * | 1-19 | |

TECHNICAL FIELDS SEARCHED (IPC)

C09K
B29C

The present search report has been drawn up for all claims

| Place of search | Date of completion of the search | Examiner |
|---|---|---|
| The Hague | 16 September 2024 | Schoenhentz, Jérôme |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 17 0917

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2024

| Patent document cited in search report | Publication date | Patent family member(s) | Publication date |
|---|---|---|---|
| WO 2021255161 A1 | 23-12-2021 | CN 116034121 A | 28-04-2023 |
| | | EP 4168461 A1 | 26-04-2023 |
| | | FR 3111637 A1 | 24-12-2021 |
| | | IL 299079 A | 01-02-2023 |
| | | JP 2023532213 A | 27-07-2023 |
| | | KR 20230027193 A | 27-02-2023 |
| | | TW 202212389 A | 01-04-2022 |
| | | US 2023220216 A1 | 13-07-2023 |
| | | WO 2021255161 A1 | 23-12-2021 |
| WO 2022092063 A1 | 05-05-2022 | CN 115989248 A | 18-04-2023 |
| | | EP 4239000 A1 | 06-09-2023 |
| | | JP WO2022092063 A1 | 05-05-2022 |
| | | WO 2022092063 A1 | 05-05-2022 |
| EP 3739020 A1 | 18-11-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0569015 A2
- DE 102019122612 A1
- WO 2019221885 A
- US 6117385 A
- WO 2019243575 A1
- US 20170062895 A
- EP 2575211 A1
- EP 3513457 A1
- EP 2768072 A1
- WO 2021255161 A1
- WO 9320993 A
- US 7060200 B1
- US 20060172090 A1

### Non-patent literature cited in the description

- **GANTENBEIN, SILVAN ; MASANIA, KUNAL ; WOIGK, WILHELM ; SESSEG, JENS P. W. ; TERVOORT, THEO A. ; STUDART, ANDRE R.** Three-dimensional printing of hierarchical liquid crystal-polymer structures. *Nature (London, United Kingdom),* 2018, vol. 561 (7722), 226-230
- **C. TSCHIERSKE ; G. PELZL ; S. DIELE.** *Angew. Chem.,* 2004, vol. 116, 6340-6368
- *Jap. J. Appl. Phys.,* 2003, vol. 42, 3463
- Merck Liquid Crystals, Physical Properties of Liquid Crystals. Merck KGaA, November 1997